(19) Europäisches Patentamt
European Patent Office
Office européen des brevets

(11) **EP 3 705 663 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**16.04.2025 Patentblatt 2025/16**

(45) Hinweis auf die Patenterteilung:
**24.08.2022 Patentblatt 2022/34**

(21) Anmeldenummer: **20160939.3**

(22) Anmeldetag: **04.03.2020**

(51) Internationale Patentklassifikation (IPC):
**E04G 21/04** (2006.01)   **B25J 9/16** (2006.01)
**G05D 3/12** (2006.01)

(52) Gemeinsame Patentklassifikation (CPC):
**E04G 21/0436; B25J 9/1664; E04G 21/0463;**
G05B 2219/45102

(54) **GELENKARM-STEUERUNG EINER BETONPUMPE**

ARTICULATED ARM CONTROL FOR A CONCRETE PUMP

COMMANDE À BRAS ARTICULAIRE D'UNE POMPE À BÉTON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2019 DE 102019105817**

(43) Veröffentlichungstag der Anmeldung:
**09.09.2020 Patentblatt 2020/37**

(73) Patentinhaber: **Liebherr-Mischtechnik GmbH 88427 Bad Schussenried (DE)**

(72) Erfinder:
• **Wanner, Julian**
**70195 Stuttgart (DE)**
• **Sawodny, Prof. Dr.-Ing. Dr. h. c. Oliver**
**70186 Stuttgart (DE)**

(74) Vertreter: **Behr, Wolfgang**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
EP-B1- 1 537 282          WO-A1-2015/197708
WO-A1-2018/115248     DE-A1- 10 060 077
DE-A1- 10 101 570          DE-A1- 102006 007 623
DE-A1- 102009 054 160   DE-A1- 102016 106 406
DE-A1- 102016 122 392   DE-A1- 102016 125 145
DE-A1- 102016 125 145

• **MATHIAS NÄTHER ET AL: "Beton-3D-Druck - Machbarkeitsuntersuchungen zu kontinuierlichen und schalungsfreien Bauverfahren durch 3D-Formung von Frischbeton", 31 December 2017 (2017-12-31), pages 1 - 106, XP055708204, Retrieved from the Internet <URL:https://www.irbnet.de/daten/rswb/17079004398.pdf> [retrieved on 20200623]**
• **CHEN L A ET AL: "A new real-time iteration method based on geometry for inverse kinematics of truck mounted concrete pump", 2013 INTERNATIONAL CONFERENCE ON MECHATRONICS, ROBOTICS AND AUTOMATION, ICMRA 2013; 20130613 TO 20130614; GUANGZHOU, CHINA IN: APPLIED MECHANICS AND MATERIALS; ISSN 1660-9336; VOL. 273-275, TRANS TECH PUBLICATIONS LTD, DEU, vol. 373-375, no. Pt. 3, 1 January 2013 (2013-01-01), pages 2109 - 2113, XP008184918, ISBN: 978-3-03785-806-6, [retrieved on 20130801], DOI: 10.4028/WWW.SCIENTIFIC.NET/AMM.373-375.2109**
• **WILDAN LALO: "Ein Beitrag zur Entwicklung von Assistenzsystemen für serielle und parallele Roboter am Beispiel von Autobetonpumpen und seilbasierten Regalbediengeräten", 1 January 2014 (2014-01-01), XP055383260, Retrieved from the Internet <URL:https://duepublico.uni-duisburg-essen.de/servlets/DerivateServlet/Derivate-35035/Lalo_Diss.pdf> [retrieved on 20170620]**

EP 3 705 663 B2

- DYLLONG E., KOMAINDA A.: "Local path modifications of heavy load manipulators", ADVANCED INTELLIGENT MECHATRONICS, 2001. PROCEEDINGS. 2001 IEEE/ASME I NTERNATIONAL CONFERENCE ON   8-12 JULY 2001, PISCATAWAY, NJ, USA,IEEE, vol. 1, 8 July 2001 (2001-07-08) - 12 July 2001 (2001-07-12), pages 464 - 469, XP010553295, ISBN: 978-0-7803-6736-4
- "Modellbildung, Simulation und nichtlineare Regelung elastischer, hydraulisch angetriebener Großmanipulatoren Nr. 756", 1 January 1999, FORTSCHRITT-BERICHTE VDI, article SCHNEIDER  MARTIN: "Meß-, Steuerungs- und Regelungstechnik, Reihe 8", pages: 1 - 96, XP093186891
- "Meß-Steuerungs- und Rgelungstechnik, Reihe 8, Nr. 768, genehmigte Dissertation.", 1 January 1999, FORTSCHRITT-BERICHTE VDI, article KLEUTGES MARKUS: "Modellierung elastischer Handhabungssysteme in der globalen Bahnplanung", pages: 1 - 69, XP093187101
- KOMAINDA ARTUR, HILLER MANFRED: "Control of Heavy Load Manipulators in Varying Environments", 35TH INTERNATIONAL SYMPOSIUM ON AUTOMATION AND ROBOTICS IN CONSTRUCTION (ISARC 2018), 24 September 1999 (1999-09-24) - 24 September 1999 (1999-09-24), pages 1 - 6, XP093080879, ISSN: 2413-5844, DOI: 10.22260/ISARC1999/0046
- "Von der Fakultät Konstruktions- und Fertigungstechnik der Universität Stuttgart zur Erlangung der Würde eines Doktor-Ingenieurs (Dr.-Ing.) genehmigte Abhandlung, Forschung und Praxis", 1 January 1996, SPRINGER-VERLAG BERLIN HEIDELBERG NEW YORK, article RUPP KLAUS DIETER: "Zur Fehlerkompensation und Bahnkorrektur für eine mobile Großmanipulator- Anwendung ", pages: 1 - 65, XP093187115
- KUNTZE, H.-B. ET AL: "On the dynamic control of a hydraulic large range robot for construction applications", AUTOMATION IN CONSTRUCTION, ELSEVIER, AMSTERDAM, NL, vol. 4, no. 1, 1 March 1995 (1995-03-01), AMSTERDAM, NL
, pages 61 - 73, XP004047515, ISSN: 0926-5805, DOI: 10.1016/0926-5805(94)00036-M
- "Meß-, Steuerungs-und Regelungstechnik, Reihe 8, Nr. 825", 1 January 2000, VDI VERLAG GMBH - DÜSSELDORF 2000, article SCHLEMMER MAXIMILIAN: "Eine SQP-Rückwärts-kinematik zur interaktiven, semi-autonomen Bahnführung kinematisch redundanter Manipulatoren", pages: 1 - 81, XP093187133
- SICILIANO BRUNO, VILLANI LUIGI: "An inverse kinematics algorithm for interaction control of a #exible arm with a compliant surface", CONTROL ENGINEERING PRACTICE, PERGAMON, vol. 9, 1 January 2001 (2001-01-01), pages 191 - 198, XP093186895
- "Robotics, Modelling, Planning and Control", 1 January 2009, SPRINGER VERLAG, article SICILIANO BRUNO, SCIAVICCO LORENZO, VILLANI LUIGI, ORIOLO GIUSEPPE: "Advanced Textbooks in Control and Signal Processing", pages: 1 - 22, XP093187162
- "Numerical Optimization", 1 January 2006, SPRINGER, article NOCEDAL JORGE, WRIGHT STEPHEN J.: "CATEGORIZING OPTIMIZATION ALGORITHMS. Penalty and Augmented Lagrangian Methods", pages: 422 - 424, 497, XP093187173
- "Optimierung, Statische, dynamische, stochastische Verfahren für die Anwendung", 1 January 1991, R. OLDENBOURG, MÜNCHEN WIEN VERLAG, article PAPAGEORGIOU MARKOS: "Einsatz der Optimierung in der Steuerungs- und Regelungstechnik. Straffunktionsverfahren", pages: 6 - 7, 142, XP093187208
- CHACHUAT BENOIT C. : "NONLINEAR AND DYNAMIC OPTIMIZATION From Theory to Practice", IC-32: WINTER SEMESTER 2006/2007, LABORATOIRE D'AUTOMATIQUE, ECOLE POLYTECHNIQUE FÉDÉRALE DE LAUSANNE, 1 January 2006 (2006-01-01), pages 43 - 45, XP093187213

## EP 3 705 663 B2

**Beschreibung**

Die vorliegende Erfindung betrifft Gelenkarm-Steuerung für den Gelenkarm einer Betonpumpe, wobei der Gelenkarm einen um eine vertikale Achse drehbaren Drehbock und mindestens zwei mittels Gelenken um horizontale Achsen verschwenkbare Segmente aufweist, wobei der Drehbock über einen Aktuator um die vertikale Achse verfahrbar ist und die Segmente über Aktuatoren um die horizontalen Achsen verschwenkbar sind, wobei bevorzugt Sensoren zu Bestimmung des Drehwinkels des Drehbocks und zur Bestimmung der Gelenkwinkel der Gelenke vorgesehen sind. Insbesondere handelt es sich bei der Betonpumpe um eine Autobetonpumpe.

Betonpumpen mit Verteilermast stellen den weltweiten Standard für das effektive Einbringen und Verteilen von Beton im Baubereich dar. Von dem Fahrmischer aus, über die Doppelkolben- pumpe durchläuft der Beton das Förderrohr am Verteilermast und wird durch den Endschlauch an der Mastspitze in das Bauwerk eingebracht. Der Bediener steuert die Betonpumpe mit einer Funkfernbedienung und stellt die Grobpositionierung der Mastspitze sicher. Der mehrgelenkige Mast ermöglicht dabei eine schnelle und effektive Positionierung in schwer zugänglichen Bereichen. Der Endschlauchführer leitet den Beton zur Feinpositionierung über den flexiblen Schlauch zur finalen Betonierstelle.

Die Steuerung des Verteilermasts durch den Bediener ist eine komplexe Aufgabe, die die Koordination von mehreren rotatorischen Freiheitsgraden im dreidimensionalen Arbeitsraum erfordert. Dabei sind zusätzlich Einschränkungen durch das System und die Baustellenumgebung zu beachten. Durch die Einzelachsensteuerung besteht ein hohes Risiko für eine unkontrollierte Bewegung des Endschlauchs und damit die Gefährdung des Baustellenpersonals.

Im Rahmen der vorliegenden Erfindung wird daher eine Gelenkarm-Steuerung zur Ansteuerung der Aktuatoren eingesetzt, welche eine Geometriesteuerung umfasst, die aus Eingabewerten zu einer Soll-TCP-Bewegung eine Trajektorie mit Soll-Werten für die Bewegung des Drehbocks und/oder der Gelenke erzeugt. Die Geometriesteuerung unterstützt somit den Bediener bei der Positionierung des Endschlauchs und reduziert die Komplexität der Einzelachssteuerung.

EP0686224B2 beschreibt eine TCP-Steuerung für eine Autobetonpumpe. Die Steuerung umfasst das Vor- und Zurückschwenken bei gleicher Höhe und das Heben und Senken bei gleichen radialem Abstand mit jeweils einem Steuerhebel. Außerdem wird die statische Durchbiegung des Masts berücksichtigt und eine Kollisionsvermeidung für Böden und Decken bereit gestellt. Die Messsignale von Abstandsensoren auf den Segmenten können optional in der Steuerung verarbeitet werden. Verschiedene Betriebsmodi ermöglichen die Nutzung variabler TCP-Koordinatensystemen sowie die ursprüngliche Einachssteuerung.

EP1337727B1 erweitert den Funktionsumfang der TCP-Steuerung. Ein ausgewähltes Gelenk kann dabei unter Beibehaltung der Lage und Bewegung der Mastspitze verfahren werden. Die Pose des Manipulators verändert sich somit, ohne den TCP zu beeinflussen. Der Winkel eines Gelenks bzw. die Neigung eines Segments kann außerdem in Relativ- oder Absolutkoordinaten für die weitere Bewegung der TCP konstant gehalten werden. Eine zusätzliche Funktion ist die Begrenzung der Geschwindigkeit und Beschleunigung der Aktoren.

DE19503895A1 und EP0715673B2 beschreiben TCP-Steuerungskonzepte speziell für den Schlauchführer. Der Verteilermast wird dabei über Steuereinrichtungen am Endschlauch bzw. -segment bewegt und gegenüber einer Bezugsebene im Aufgabenraum konstant gehalten. Die Patente sind erloschen.

WO2015/109975A1 beschreibt eine TCP- Steuerung mit einem zusätzlichen Regelkreis im Aufgabenraum. Falls der TCP von der geplanten Trajektorie abweicht, wird dieser Regler zur Korrektur des Fehlers aktiviert.

WO2015/109976A1 umfasst eine optimierungsbasierte TCP-Steuerung, die die erforderliche Gelenkbewegung minimiert. Gelenkbeschränkungen werden nachträglich über Prüfabfragen implementiert.

WO2017/174714A1 schlägt eine Schätzung der statischen Durchbiegung auf Basis von Messsignalen vor. Dazu werden die Gelenkwinkel des Manipulators mit Drehgebern und die Neigung des letzten Segments mit einem geodätischen Winkelsensor gemessen. Unter der Annahme eines starren Manipulators werden aus den Messsignalen Korrekturwinkel für die Gelenkwinkel bestimmt.

WO 2013/007121 A1 stellt ein Verfahren zur Berechnung der Position der Mastspitze eines flexiblen Manipulators vor. Dabei wird eine Längenverkürzung der Segmente aufgrund der statischen Deformation für jedes Segment bestimmt und basierend darauf die Positionsberechnung des Manipulators verbessert.

WO2017/174714A1 ist auf eine optimierte Auslegung zur Verbesserung der Performance der Hydraulik gerichtet. WO 2013/007039 A1 umfasst ebenfalls eine Methode zur Performacesteigerung von hydraulischen Manipulatoren. WO 2015/101088 A1 beschreibt eine optimierungsbasierte TCP-Steuerung mit Gelenkbeschränkungen. Basierend auf der optimalen Lösung wird der benötigte Öldurchfluss der Aktoren bestimmt und die Gelenkgeschwindigkeit über einen proportionalen Faktor auf den verfügbaren Durchfluss abgestimmt.

EP 2 813 643 B1 schlägt ein System zur Standsicherheitsüberwachung für Autobetonpumpen vor. Der Gesamtschwerpunkt des Manipulators wird dabei aus Messsignalen berechnet.

In K. L. Knierim und O. Sawodny, Tool-Center-Point control of the KAI manipulator using constrained QP optimization", Mechatronics 30 (2015), S. 85-93 sowie in K. L. Knierim, Der KAI-Manipulator Modellierung, Identifikation und Regelung eines hydraulisch aktuierten Großraummanipulators zur Räumung von Sprengfallen, Diss. Institut für Systemdynamik der Universität Stuttgart, 2015 wird ein quadratisches Optimierungsproblem zur Steuerung eines hydraulischen Manipulators gelöst.

Angelika Höfer, Steuerung der Konfiguration eines redundanten Manipulators, Braunschweig, Vieweg, 1992, isbn: 978-3-528-06516-4 beschreibt die Ansteuerung eines redundanten Manipulators. Richard Colbaugh, Homayoun Seraji und KL Glass. "Obstacle avoidance for redun- dant robots using configuration control". In: Journal of Field Robotics 6.6 (1989), S. 721-744 beschreibt eine Kollisionsvermeidung bei redundanten Robotern.

Mathias Näther et al. Beton 3D-Druck - Machbarkeitsuntersuchungen zur kontinuierlichen und schalungsfreien Bauverfahren durch 3D-Formung von Frischbeton, 31.12.2017, Technische Universität Dresden beschreibt einen Steuerungsalgorithmus für den Mastarm einer Betonpumpe, bei welchem die Lösung der inversen Kinematik für einen starren Manipulator analytisch erfolgt.

Chen et al, A new real-time iteration method based on geomerty for inverse kinematics of truck mounted concrete pump, 2013 International Conference on Mechatronics, Robotics and Automation, Guanngzhou, China, Applied mechancis and materials, ISSN 1660-9336, Vol. 273 -275; trans tech publications ltd, DEU, Bd. 373 - 375; nr. Pt. 3, 01.01.2013, Seiten 2109 - 2113 zeigt eine weitere Steuerung für den Gelenkarm einer Betonpumpe.

Wildan Lalo, Ein Beitrag zur Entwicklung von Assistenzsystemen für serielle und parallele Roboter am Beispiel von Autobetonpumpen und seilbasierten Regalbediengeräten", 01.01.2014, Dissertation an der Unisversität Duisburg-Essen, beschreibt eine Gelenkarmsteuerung gemäß dem Oberbegriff von Anspruch 1.

DE102016125145 A1 beschreibt eine Steuereinrichtung für eine Betonpumpe, welche den Mast autonom von einer Ausgangsposition in eine vorgegebenen Zielposition überführt.

DE 10 2006 007623 A1 zeigt eine Robotersteuerung.

Aufgabe der vorliegenden Erfindung ist es, eine Betonpumpe mit einer verbesserten Gelenkarm-Steuerung zur Verfügung zu stellen.

Diese Aufgabe wird durch die Betonpumpe gemäß dem unabhängigen Anspruch gelöst.

Die vorliegende Erfindung umfasst eine Betonpumpe, insbesondere Autobetonpumpe, mit einem Gelenkarm, an welchem eine Förderleitung für den Beton entlang geführt ist, gemäß Anspruch 1 mit einer Gelenkarm-Steuerung für den Gelenkarm der Betonpumpe, wobei der Gelenkarm einen um eine vertikale Achse drehbaren Drehbock und mindestens zwei mittels Gelenken um horizontale Achsen verschwenkbare Segmente aufweist, wobei der Drehbock über einen Aktuator um die vertikale Achse verfahrbar ist und die Segmente über Aktuatoren um die horizontalen Achsen verschwenkbar sind, und wobei die Gelenkarm-Steuerung zur Ansteuerung der Aktuatoren dient und eine Geometriesteuerung umfasst, welche aus Eingabewerten zu einer Soll-TCP-Bewegung eine Trajektorie mit Soll-Werten für die Bewegung des Drehbocks und/oder der Gelenke erzeugt. Erfindungsgemäß ist vorgesehen, die Geometriesteuerung die Trajektorie durch Lösung eines Optimierungsproblems bestimmt, wobei das Optimierungsproblem als Zielfunktion eine Abweichung zwischen der Soll-TCP-Bewegung und einer sich durch die Trajektorie in einem physikalischen Modell des Gelenkarms ergebenden TCP-Bewegung minimiert, wobei Beschränkungen der Hydraulik und/oder des Arbeitsraumes als Nebenbedingung in die Optimierung eingehen.

Die Bestimmung der Trakjektorie durch die Lösung eines Optimierungsproblems erlaubt es, eine echtzeitfähige Geometriesteuerung zur Verfügung zu stellen, welche auf dem Steuergerät der Betonpumpe ausgeführt werden kann und den damit verbundenen strikten Anforderungen an die benötige Rechenleistung des Algorithmus genügt. Dadurch, dass Beschränkungen der Hydraulik und/oder des Arbeitsraumes als Nebenbedingung in die Optimierung eingehen, wird sichergestellt, dass die sich ergebende Trajektorie bereits die Beschränkungen berücksichtigt und im Rahmen der Beschränkungen optimal gewählt wurde. Eine nachträgliche Berücksichtigung von Beschränkungen würde dagegen zu sub-optimalen Trajektorien führen.

In einer möglichen Ausgestaltung der vorliegenden Erfindung geht der maximal zur Verfügung stehende Volumenstrom und/oder die maximal zur Verfügung stehende Leistung der Hydraulikversorgung als Nebenbedingung in die Optimierung ein. Dies hat für das Verfahren des Gelenkarms einer Betonpumpe besondere Bedeutung, da der maximal zur Verfügung stehende Volumenstrom und/oder die maximal zur Verfügung stehende Leistung der Hydraulikversorgung üblicherweise nicht ausreichen, um alle Aktoren des Gelenkarms gleichzeitig mit deren maximaler Verfahrgeschwindigkeit zu verfahren. Wird diese Beschränkung jedoch erst nachträglich berücksichtigt, führt dies zu einer unnötigen Reduktion der TCP-Geschwindigkeit. Durch die Berücksichtigung im Rahmen der Optimierung wird dagegen eine Trajektorie bestimmt, welche im Rahmen des maximal zur Verfügung stehenden Volumenstrom und/oder der maximal zur Verfügung stehenden Leistung der Hydraulikversorgung optimal der Soll-TCP-Geschwindigkeit entspricht.

In einer möglichen Ausgestaltung der vorliegenden Erfindung umfasst die Geometriesteuerung eine Funktion zur Vermeidung von Kollisionen des Gelenkarms mit Störkonturen, wobei die durch die Störkonturen gebildeten Beschränkungen des Arbeitsraumes als Nebenbedingung in die Optimierung eingehen. Auch hier hat die Berücksichtigung der Störkonturen bereits im Rahmen des Optimierungsproblems erhebliche Vorteile gegenüber einer erst nachträglichen Berücksichtigung.

In einer möglichen Ausgestaltung der vorliegenden Erfindung begrenzt die Funktion zur Vermeidung von Kollisionen des Gelenkarms mit Störkonturen eine Anlaufgeschwindigkeit des Gelenkarms auf eine Störkontur zu auf einen Wert, welcher ein Abbremsen vor Erreichen der Störkontur ermöglicht. Hierdurch wird sichergestellt, dass eine Kollision sicher vermieden wird.

In einer möglichen Ausgestaltung der vorliegenden Erfindung sind die Störkonturen als virtuelle Wände und/oder Decken in die Gelenkarm-Steuerung eingebbar.

In einer möglichen Ausgestaltung der vorliegenden Erfindung erfolgt eine virtuelle Nachbildung der Hindernisse über eine Benutzeroberfläche, insbesondere eine grafische Benutzeroberfläche.

Beispielsweise kann die virtuelle Nachbildung der Hindernisse durch Eingabe einer Deckenhöhe und eines Abstands zum Gebäude erfolgen.

In einer möglichen Ausgestaltung der vorliegenden Erfindung sind Störkonturen durch ein Teach-In Verfahren eingebbar, insbesondere indem ein Benutzer eine maximale Position durch Anfahren der Position definiert.

In einer möglichen Ausgestaltung der vorliegenden Erfindung umfasst die Gelenkarm-Steuerung eine Schnittstelle zu einer Bauwerksdatenmodellierung, über welche die Position von Störkonturen aus einem virtuellen Modell des Gebäudes und/oder der Baustelle in die Steuerung einlesbar sind.

In einer möglichen Ausgestaltung der vorliegenden Erfindung erfolgt eine Lokalisierung der Betonpumpe innerhalb eines virtuellen Modells des Gebäudes und/oder der Baustelle über eine satellitengestützte Positionserfassung.

In einer möglichen Ausgestaltung der vorliegenden Erfindung erfolgt eine Erfassung von Störkonturen über eine Abstandssensorik am Verteilermast. Hierbei kann beispielsweise eine optische, mechanische, elektromagnetische und/oder akustische Abstandssensorik zum Einsatz kommen.

In einer möglichen Ausgestaltung der vorliegenden Erfindung erlaubt die Funktion zur Vermeidung von Kollisionen ein Fahren parallel zu einer Störkontur mit voller Geschwindigkeit. Es wird daher in der Nähe einer Störkontur nicht allgemein die Verfahrgeschwindigkeit verringert, sondern nur jene Verfahrgeschwindigkeitsanteile, durch welche der Abstand des Gelenkarms zur Störkontur verringert würde. Dies ermöglicht beispielsweise ein Verfahren des Gelenkarms entlang einer Gebäudekante mit hoher Geschwindigkeit.

In einer möglichen Ausgestaltung der vorliegenden Erfindung umfasst die Geometriesteuerung eine Standsicherheits-Funktion, welche die Lage des Schwerpunkts der Betonpumpe ermittelt, wobei die Anforderung, dass der Schwerpunkt der Betonpumpe sich in einem sicheren Bereich befindet, als Nebenbedingung in die Optimierung eingeht. Hierdurch wird bereits im Rahmen der Generierung der Trajektorie die Standsicherheit der Betonpumpe berücksichtigt.

Bevorzugt ist zusätzlich eine von der Geometriesteuerung unabhängige zweite Standsicherheits-Funktion vorgesehen.

In einer möglichen Ausgestaltung der vorliegenden Erfindung gehen Eigenkollisionsbeschränkungen zur Vermeidung von Kollisionen der Segmente untereinander und/oder mit anderen Elementen der Betonpumpe als Nebenbedingung in die Optimierung eingehen.

In einer möglichen Ausgestaltung der vorliegenden Erfindung umfasst die Gelenkarm-Steuerung ein Bahnplanungsmodul zur automatischen Durchführung einer Bewegung des Gelenkarms und/oder des TCP, wobei ein durch das Bahnplanungsmodul generierter Soll-Wert als Input in die Geometriesteuerung eingeht.

In einer möglichen Ausgestaltung der vorliegenden Erfindung ist vorgesehen, dass das Bahnplanungsmodul Beschränkungen des Arbeitsraumes gegenüber dem Optierungsproblem vereinfacht beschreibt oder unberücksichtigt lässt. Dies ist erfindungsgemäß deshalb möglich, weil solche Beschränkungen des Arbeitsraumes durch die Geometriesteuerung berücksichtigt werden. Die Bahnplanung wird hierdurch erheblich vereinfacht.

In einer möglichen Ausgestaltung der vorliegenden Erfindung geht ein durch das Bahnplanungsmodul generierter Soll-Wert der TCP-Bewegung in gleicher Weise als Input in die Geometriesteuerung eingeht wie ein Handhebelsignal.

In einer möglichen Ausgestaltung der vorliegenden Erfindung sind Sensoren zur Bestimmung des Drehwinkels des Drehbocks und zur Bestimmung der Gelenkwinkel der Gelenke vorgesehen. Diese können den Drehwinkel bzw. Gelenkwinkel unmittelbar oder mittelbar messen. Die durch die Sensoren bestimmten Dreh- bzw. Gelenkwinkel gehen in die Geometriesteuerung ein.

Eine weitere Sensorik ist im Allgemeinen nicht erforderlich. Die Geometriesteuerung erfolgt daher in einer möglichen Ausgestaltung allein auf Grundlage des Drehwinkels des Drehbocks und der Gelenkwinkel der Gelenke. Ist im Hinblick auf andere mögliche Ausgestaltungen der vorliegenden Erfindung eine zusätzliche Sensorik beschrieben, können deren Ausgangssignale zusätzlich zu denen der Sensoren zur Bestimmung des Drehwinkels des Drehbocks und zur Bestimmung der Gelenkwinkel der Gelenke in die Geometriesteuerung eingehen.

In einer möglichen Ausgestaltung der vorliegenden Erfindung berücksichtigt das im Optimierungsproblem eingesetzte physikalische Modell des Gelenkarms eine Deformation des Gelenkarms aufgrund seines Eigengewichtes und/oder des Gewichtes des geförderten Betons. Hierdurch wird die Genauigkeit der TCP-Steuerung verbessert.

In einer möglichen Ausgestaltung der vorliegenden Erfindung gibt das physikalische Modell des Gelenkarms die Flexibilität mindestens eines Segmentes durch Modellierung einer verteilten Deformation des Segments wieder. Anders als im Stand der Technik wird daher nicht einfach der Gelenkwinkel des Gelenkes mit einem Korrekturterm versehen, und das Segment selbst weiterhin als Starrkörper betrachtet, sondern ein Modell eingesetzt, welches eine über das Segment verteilte Deformation beschreibt.

In einer möglichen Ausgestaltung der vorliegenden Erfindung wird die verteilte Deformation durch Diskretisierung angenähert. In einer möglichen Ausgestaltung der vorliegenden Erfindung wird ein Modell eingesetzt, welches die Flexibilität mindestens eines Segmentes durch mindestens ein innerhalb dieses Segmentes angeordnetes virtuelles Gelenk beschreibt.

In einer möglichen Ausgestaltung der vorliegenden Erfindung ist vorgesehen, dass das physikalische Modell die statische Verformung des Gelenkarms beschreibt. Schwingungen bleiben daher im Rahmen der Geometriesteuerung unberücksichtigt. Die Gelenkarm-Steuerung kann jedoch eine Schwingungsdämpfung aufweisen, welche der Geometriesteuerung nachgeschaltet ist.

In einer möglichen Ausgestaltung der vorliegenden Erfindung handelt es sich bei dem physikalischen Modell um ein Starrkörpermodell mit aktuierten Gelenken. Insbesondere umfasst das Starrkörpermodell dabei innerhalb der Segmente virtuelle Gelenke, welche die verteilte Deformation der Segmente beschreiben. Die Teilabschnitte der Segmente, welche durch ein virtuelles Gelenk verbunden sind, werden jedoch wieder als Starrkörper betrachtet. Bevorzugt beschreibt das Modell mehrere und weiter bevorzugt alle Segmente des Gelenkarms, und gibt damit gleichzeitig die Stellung des Gelenkarms wieder.

In einer möglichen Ausgestaltung der vorliegenden Erfindung ist jedem virtuellen Gelenk ein Federelement zugeordnet. Bevorzugt wird die Federkonstante so gewählt, dass das virtuelle Gelenk die Größe der Durchbiegung des realen Segmentes beschreibt.

In einer möglichen Ausgestaltung der vorliegenden Erfindung sind innerhalb des Segmentes weniger als 10, weiter bevorzugt weniger als 5, weiter bevorzugt weniger als 3 und in einer möglichen Ausgestaltung genau ein virtuelles Gelenk vorgesehen. Dies verringert die Komplexität des Modells.

In einer möglichen Ausgestaltung der vorliegenden Erfindung weist die Gelenkarm-Steuerung eine Funktion zur Bestimmung des Zustands der Betonförderung aus Mess- und/oder Ansteuerwerten auf, deren Ausgangswerte in das physikalische Modell des Gelenkarms eingehen.

In einer möglichen Ausgestaltung der vorliegenden Erfindung wird die Funktion zur Bestimmung des Zustands der Betonförderung gleichzeitig durch eine Schwingungsdämpfung genutzt, welche durch die Betonförderung induzierte Schwingungen des Gelenkarms dämpft.

In einer möglichen Ausgestaltung der vorliegenden Erfindung beruht die Funktion zur Bestimmung des Zustands der Betonförderung auf einem physikalischen Modell der Betonförderung. In einer möglichen Ausgestaltung der vorliegenden Erfindung schätzt die Funktion den Zustand der Betonförderung aus Messwerten der Stellung und/oder des Schwingungszustands des Verteilermastes.

In einer möglichen Ausgestaltung der vorliegenden Erfindung bestimmt die Funktion den Zustand der Betonförderung aus Ansteuersignalen und/oder Betriebsparametern der Förderpumpe und/oder der Betonförderung.

Bevorzugt bestimmt die Funktion zur Bestimmung des Zustands der Betonförderung den Füllgrad der Förderleitung auf Grundlage des Betondrucks am Eingang der Förderleitung.

In einer möglichen Ausgestaltung der vorliegenden Erfindung minimiert das Optimierungsproblem die Abweichung zwischen der Soll-TCP-Bewegung und der sich durch die Trajektorie in einem physikalischen Modell des Gelenkarms ergebenden TCP-Bewegung als erste Zielfunktion und eine Abweichung einer Konfiguration des Gelenkarms von einer Soll-Konfiguration als zweite Zielfunktion. Hierdurch wird bereits im Rahmen des Optimierungsproblems eine Konfigurationssteuerung implementiert.

In einer möglichen Ausgestaltung der vorliegenden Erfindung umfasst die Geometriesteuerung einen numerischen Solver, welcher das Optimierungsproblem in jedem Zeitschritt neu löst. Dies ermöglicht die Implementierung auf der Gerätesteuerung.

In einer möglichen Ausgestaltung der vorliegenden Erfindung ist das Optimierungsproblem als quadratisches Optimierungsproblem formuliert.

Bevorzugt werden in dem Optimierungsproblem Geschwindigkeiten senkrecht zu einer Richtung der Soll-TCP-Geschwindigkeit stärker gewichtet werden als Geschwindigkeiten in Richtung der Soll-TCP-Geschwindigkeit. Hierdurch wird erreicht, dass die Trajektorie der Richtung der Soll-TCP-Geschwindigkeit folgt und wenn nötig eher den Betrag der Geschwindigkeit reduziert.

In einer möglichen Ausgestaltung der vorliegenden Erfindung wird die Soll-TCP-Bewegung durch Vorgaben eines Benutzers, welche bevorzugt über Handhebel erfolgen, und/oder anhand einer vorgegebenen Trajektorie der Mastspitze, welche bevorzugt automatisch erzeugt wird, in die Geometriesteuerung eingegeben.

Der TCP (Tool Central Point) kann je nach Anwendung an unterschiedlichen Stellen entlang des Gelenkarms angeordnet sein. Beispielsweise kann die Mastspitze als TCP gewählt werden.

Die Gelenkarm-Steuerung umfasst bevorzugt einen Mikroprozessor und einen Speicher, in welchem eine Steuersoftware abgespeichert ist, welche bei einer Ausführung durch den Mikroprozessor den oben beschriebenen Aufbau und/oder die oben beschriebene Funktionsweise der erfindungsgemäßen Gelenkarm-Steuerung implementiert. Die Gelenkarm-Steuerung weist weiterhin einen oder mehrere Eingänge auf, über welche sie mit Sensoren, insbesondere den oben beschriebenen Sensoren in Verbindung steht, und/oder einen oder mehrere Ausgänge, über welche sie die oben beschriebenen Aktoren ansteuert.

Weiterhin umfasst die vorliegende Erfindung eine Steuersoftware eine Gelenkarm-Steuerung, wie er oben beschrieben wurde. Die Steuersoftware implementiert die erfindungsgemäße Gelenkarm-Steuerung. Die Steuersoftware kann auf einem Speicher abgespeichert sein und/oder ein Computerprogrammprodukt darstellen.

Die vorliegende Erfindung umfasst weiterhin ein Verfahren zur Ansteuerung einer Betonpumpe, wobei eine Gelenkarm-Steuerung, wie sie oben beschrieben wurde, zum Einsatz kommt. Insbesondere erfolgt das Verfahren so, wie dies oben beschrieben wurde.

Die vorliegende Erfindung wird nun anhand von Ausführungsbeispielen und Zeichnungen näher beschrieben.

Dabei zeigen:

Fig. 1:      ein Ausführungsbeispiel einer erfindungsgemäßen Betonpumpe,
Fig. 2:      eine schematische Darstellung eines Betriebsmodus für eine halbautomatische Steuerung,
Fig. 3:      eine schematische Darstellung eines Betriebsmodus für eine vollautomatische Steuerung
Fig. 4:      den schematischen Aufbau eines Ausführungsbeispiels einer erfindungsgemäßen Gelenkarm-Steuerung mit Schwingungsdämpfung.
Fig. 5:      den Gelenkarm eines fünfgliedrigen Manipulators in einer Seitenansicht,
Fig. 6:      den Gelenkarm eines fünfgliedrigen Manipulators in einer Draufsicht,
Fig. 7:      den schematischen Aufbau eines Ausführungsbeispiels einer erfindungsgemäß zum Einsatz kommenden Geometriesteuerung,
Fig. 8:      eine Darstellung eines Endeffektorkoordinatensystems zur Gewichtung von schrägen Sollgeschwindigkeiten,
Fig. 9:      Diagramme, welche eine Geometriesteuerung mit und ohne TCPGewichtung zeigen,
Fig. 10:     Diagramme, welche eine Geometriesteuerung ohne Deformationskompensation zeigen,
Fig. 11:     Diagramme, welche eine Geometriesteuerung mit Deformationskompensation zeigen,
Fig. 12:     mögliche Sollkonfigurationen des Manipulators,
Fig. 13:     eine schematische Darstellung eines Ausführungsbeispiels einer Hindernisvermeidung,
Fig. 14:     eine allgemeine Darstellung von Segment und Hindernis,
Fig. 15:     eine Darstellung des Gelenkarms mit Wandbeschränkungen,
Fig. 16:     eine schematische Darstellung der Massenschwerpunkte eines Gelenkarms,
Fig. 17:     eine schematische Darstellung der in einem Ausführungsbeispiel eingesetzten Relativkoordinaten zur Eigenkollisionsvermeidung,
Fig. 18:     eine schematische Darstellung von Hindernisbeschränkungen,
Fig. 19:     ein Diagramm, welches eine Geometriesteuerung mit und ohne Gewichtung zeigt,
Fig. 20:     ein Diagramm, welches die TCP-Geschwindigkeit in Richtung der y-Achse zeigt,
Fig. 21:     eine schematische Darstellung eines Achsreglers mit Geschwindigkeitsrückführung,
Fig. 22:     eine schematische Darstellung eines Achsreglers mit Positions- und Geschwindigkeitsrückführung,

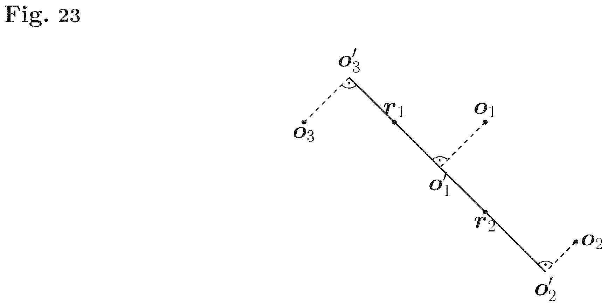

Fig. 23:     eine schematische Darstellung des kürzesten Abstands von Punkt zu Gerade,

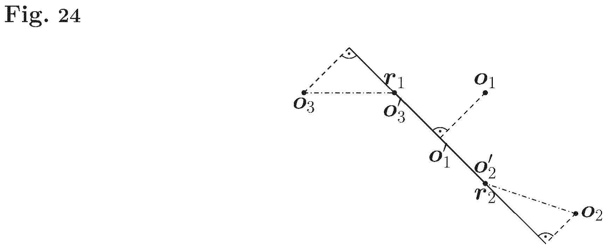

Fig. 24:     eine schematische Darstellung des kürzesten Abstands von Punkt zu Strecke, wobei der kürzeste Abstand ein Eckpunkt ist, falls sich der Projektionspunkt nicht innerhalb der Strecke befindet.

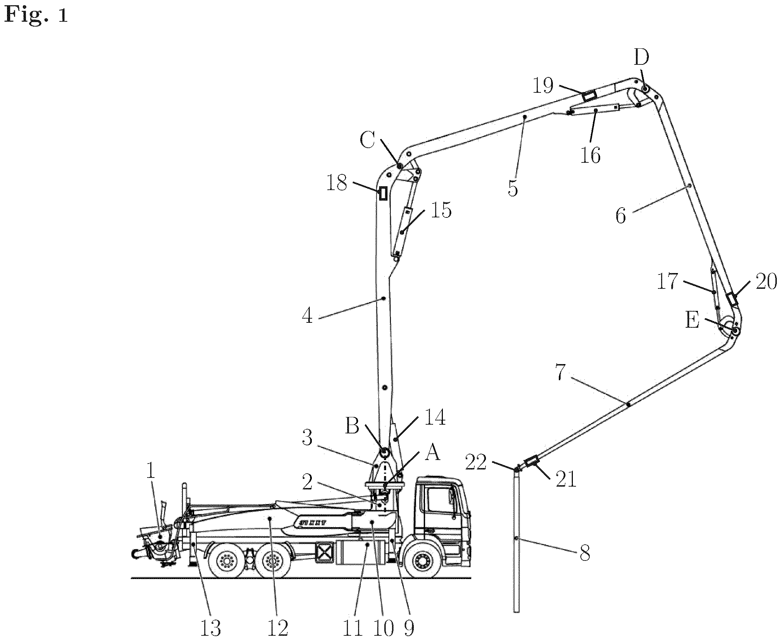

In Fig. 1 sind die relevanten Elemente eines Ausführungsbeispiels einer erfindungsgemäßen Autobetonpumpe gezeigt. Diese weist einen Unterwagen mit einem Fahrgestell mit mehreren bereiften Achsen auf, durch welches die Autobetonpumpe auf der Straße verfahrbar ist.

An dem Unterwagen sind vordere und hintere Abstützzylinder 9 und 10 vorgesehen, welche an ausklappbaren und/oder austeleskopierbaren Streben 10 und 12 angeordnet sind. Weiterhin ist ein Verteilergetriebe 11 dargestellt.

Der Unterwagen trägt hinten eine Pumpengruppe 1 und über einen Mastblock 2 einen Gelenkarm, an welchem eine nicht dargestellte Förderleitung entlang geführt ist.

Der Gelenkarm, welcher auch als Mast oder Verteilermast bezeichnet wird, besteht aus einem Drehbock 3 und vier Segmenten 4 bis 7 (beliebige Anzahl an Segmenten möglich), die über Gelenke A bis E verkoppelt sind. Gelenk A auf dem Fahrzeug ermöglicht die Drehung des Drehbocks 3 um die Hochachse, Gelenke B bis E die Verschwenkung der Segemente 4 bis 7 um horizontale Kippachsen. Die Aktorik der Betonpumpe besteht aus Hydraulikzylindern 14 bis 17 an den jeweiligen Gelenken B bis E und einem Hydraulikmotor für das Drehgelenk A des Drehbocks. Die Hydraulikzylinder 14 bis 17 ermöglichen die Bewegung des Verteilermasts in der vertikalen Ebene. Der Hydraulikmotor dreht den gesamten Mast um die Hochachse. Die Mastspitze 22 ist die Spitze des Verteilermasts. Diese kann als TCP der Geometriesteuerung gewählt werden.

Am Verteilermast ist eine Förderleitung angebracht, die Beton zur Mastspitze 22 befördert. Von dort wird der Beton über einen Schlauchabschnitt 8 zu einem Bediener geleitet. Der erforderliche Förderdruck wird dabei von einer Doppelkolbenpumpe der Pumpeneinheit 1 erzeugt.

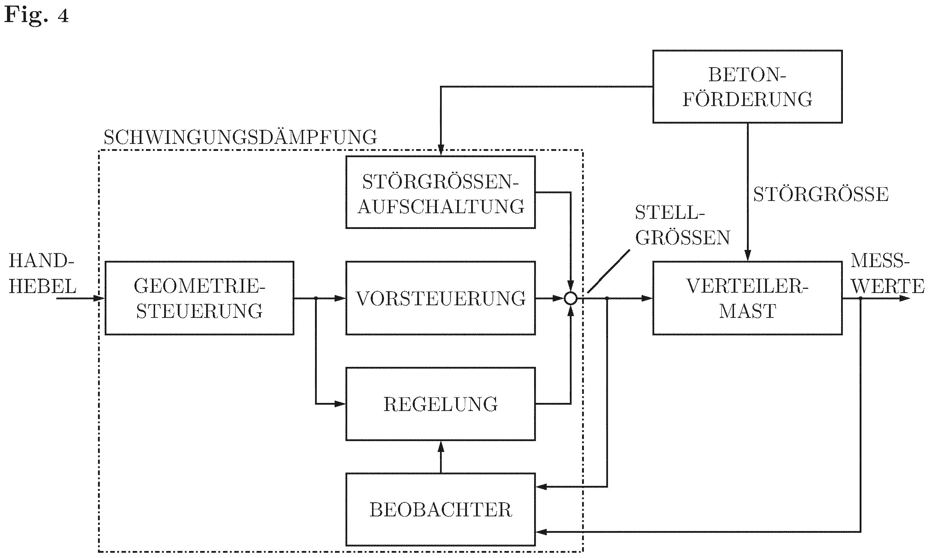

Die Gelenkarm-Steuerung gliedert sich im Ausführungsbeispiel in die in Fig. 4 dargestellten Untersysteme: Geometriesteuerung, Vorsteuerung, Regelung und Störgrößenaufschaltung.

Die Geometriesteuerung dient der Erzeugung der Bewegungsbahn für den Verteilermast, welche vorliegend auch als Trajektorie bezeichnet wird. Die Bewegungsbahn ist eine Zeitfunktion für Position, Geschwindigkeit, Beschleunigung und/oder Ruck der Gelenkachsen des Verteilermasts. Sie wird in der Vorsteuerung an die Dynamik des Systems angepasst und der Regelung als Sollwert vorgegeben. Die Vorsteuerung dient dazu, ein schnelles Verfahren des Verteilermasts zu ermöglichen, ohne die Eigenfrequenzen anzuregen. Die Regelung umfasst eine Regelung zur Dämpfung der Eigen-Schwingungen des Gelenkarms und eine Positionsregelung. Dem ist ein nicht dargestellter Achsregler nachgeschaltet, der zur Überführung der Sollwinkelgeschwindigkeit des Gelenkes in die reale Aktorgeschwindigkeit dient. Die Störgrößenaufschaltung dient der Reduktion von durch die Betonförderung induzierten Schwingungen im Verteilermast.

Die vorliegende Erfindung betrifft hauptsächlich den Aufbau und die Funktionsweise der Geometriesteuerung. Die Untersysteme Vorsteuerung, Regelung und Störgrößenaufschaltung können so ausgestaltet sein, wie dies aus den Anmeldungen DE 10 2018 109 088 A1, DE 10 2018 109 057 A1 und DE 10 2018 109 098 A1 bekannt ist. In möglichen alternativen Varianten kann jedoch auch auf andere Ausgestaltungen eines oder mehrerer dieser Untersysteme zurückgegriffen werden und/oder auf eines oder mehrerer dieser Untersysteme verzichtet werden.

## 1 Einleitung

Betonpumpen mit Verteilermast stellen den weltweiten Standard für das effektive Einbringen und Verteilen von Beton im Baubereich dar. Von dem Fahrmischer aus, über die Doppelkolbenpumpe durchläuft der Beton das Förderrohr am Verteilermast und wird durch den Endschlauch an der Mastspitze in das Bauwerk eingebracht. Der Bediener steuert die Betonpumpe mit einer Funkfernbedienung und stellt die Grobpositionierung der Mastspitze sicher. Der mehrgelenkige Mast ermöglicht dabei eine schnelle und effektive Positionierung in schwer zugänglichen Bereichen. Der Endschlauchführer leitet den Beton zur Feinpositionierung über den flexiblen Schlauch zur finalen Betonierstelle.

Die Steuerung des Verteilermasts durch den Bediener ist eine komplexe Aufgabe, die die Koordination von mehreren rotatorischen Freiheitsgraden im dreidimensionalen Arbeitsraum erfordert. Dabei sind zusätzlich Einschränkungen durch das System und die Baustellenumgebung zu beachten. Durch die Einzelachsensteuerung besteht ein hohes Risiko für eine unkontrollierte Bewegung des Endschlauchs und damit die Gefährdung des Baustellenpersonals.

Die Aufgabe der Geometriesteuerung ist es, den Bediener bei der Positionierung des Endschlauchs zu unterstützen und die Komplexität der Einzelachssteuerung zu reduzieren. Durch einen ggf. vorhandenen Bahnplanungsalgorithmus sind außerdem autonome Bewegungen wie z.B. das automatische Aus- und Einfalten des Verteilermasts möglich. Die Geometriesteuerung kann zu diesem Zweck die Betriebsmodi halb- und vollautomatische Steuerung des Manipulators umfassen.

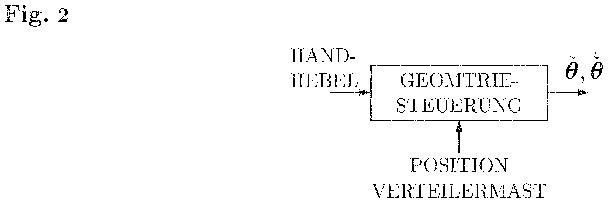

Im halbautomatischen Betrieb gibt der Bediener die Geschwindigkeit und Richtung der Mastspitze oder die Geschwindigkeit der Gelenke an. Die Geometriesteuerung synchronisiert die Bewegung der Gelenke so, dass die Mastspitze die gewünschte Bahn einnimmt und Beschränkungen des Systems und der Umwelt eingehalten werden (siehe Fig. 2). Die Geschwindigkeitsvorgaben werden durch den Bediener mit einem Handhebel vorgegeben. Der Algorithmus berechnet die Bewegungsbahnen durch das Lösen eines Optimierungsproblems unter Ausnutzung der differentiellen Vorwärtskinematik. Damit können die Probleme wie die Redundanz von Maststellungen, sowie Singularitäten in der Lösung vermieden und zusätzlich System und Umwelt bedingte Beschränkungen berücksichtigt werden. Der Bediener kann somit z. B. eine konstante horizontale Bewegung des Endschlauchs mit einer Handhebelauslenkung vorgeben. Kommt bei dieser Bewegung ein Segment zu nahe an ein Hindernis, beispielsweise eine Decke, so wird unter Beibehaltung der Geschwindigkeit der Mastspitze die Konfiguration des Manipulators geändert und das Hindernis vermieden.

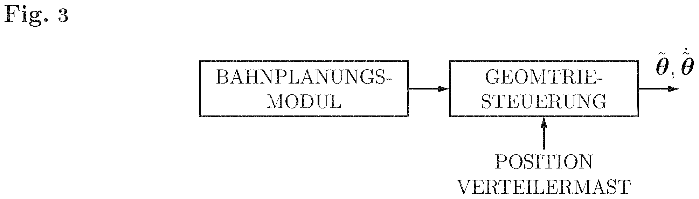

Der vollautomatische Betrieb unterscheidet sich vom Halbautomatischen dahingehend, dass die Planung der Bewegung ohne Bedienervorgabe erfolgt. Ein übergeordnetes Bahnplanungsmodul koordiniert das selbständige Ausführen von Aufgaben (siehe Fig. 3). Der gewünschte Positionsverlauf wird auf Basis der Arbeitsaufgabe oder durch eine abgespeicherte Bahn vorgegeben und die benötigte Gelenkbewegung berechnet. Dabei werden ebenfalls Beschränkungen des Systems und der Umwelt eingehalten. Der Betriebsmodus wird zum Beispiel für das automatische Ein- und Ausfalten des Verteilermasts eingesetzt.

Die Geometriesteuerung kann wie Fig. 4 gezeigt in die Schwingungsdämpfung der Autobetonpumpe eingebunden werden. Die Bewegungsbahnen der Geometriesteuerung sind Zeitfunktionen für die Position und die Geschwindigkeit der Gelenkachsen des Verteilermasts. Sie werden in der Vorsteuerung an die Dynamik des Systems angepasst und der Regelung als Sollwert vorgegeben. Die daraus berechneten Stellgrößen werden von der Hydraulik der Betonpumpe in eine Bewegung umgesetzt. Die Regelung stellt dabei sicher, dass Abweichungen von den Sollwerten korrigiert werden.

**1.1 Zielstellung**

Aufgabe der vorliegenden Erfindung ist die Bereitstellung einer Handhebelsteuerung in TCP-Koordinaten für den Verteilermast einer Autobetonpumpe. Die genaue Definition des TCP soll dabei von der gewählten Aufgabe abhängen. Die Steuerung soll außerdem systemspezifische Eigenschaften und/oder Umgebungsbedingungen berücksichtigen. Dazu gehören bevorzugt kinematische Beschränkungen auf Positions-, Geschwindigkeits- und Beschleunigungsebene, sowie die Eigenschaften der hydraulischen Aktorik. Die statische Deformation des Manipulators ist bevorzugt eine weitere Einflussgröße. Die Umgebungsbedingungen sind Hindernisse wie z. B. Decken, Wände und Gebäude im Einflussbereich des Manipulators. Der Verteilermast soll außerdem eine Eigenkollision vermeiden und Anforderungen an die Standsicherheit erfüllen. Die Haltung des Manipulators wird durch eine Konfigurationssteuerung festgelegt. Damit sind die Vorgabe definierter Konfigurationen und Konfigurationswechsel während des Betriebs möglich. Die Steuerung soll außerdem einen Betriebsmodus für autonome Bewegungen aufweisen. Dies umfasst im Speziellen das automatischen Aus- und Einfalten des Manipulators.

Die Geometriesteuerung muss außerdem echtzeitfähig sein und auf dem Steuergerät des Fahrzeugs ausgeführt werden können. Damit liegen strikte Anforderungen an die benötige Rechenleistung des Algorithmus vor.

Aufgrund der Rechenbeschränkungen wird ein lokales QP Verfahren auf Geschwindigkeitsebene gewählt.

**2 Kinematische Modellierung**

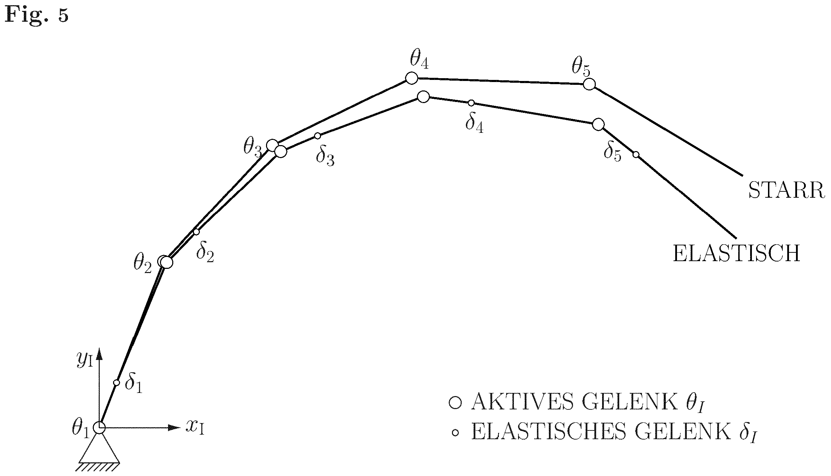

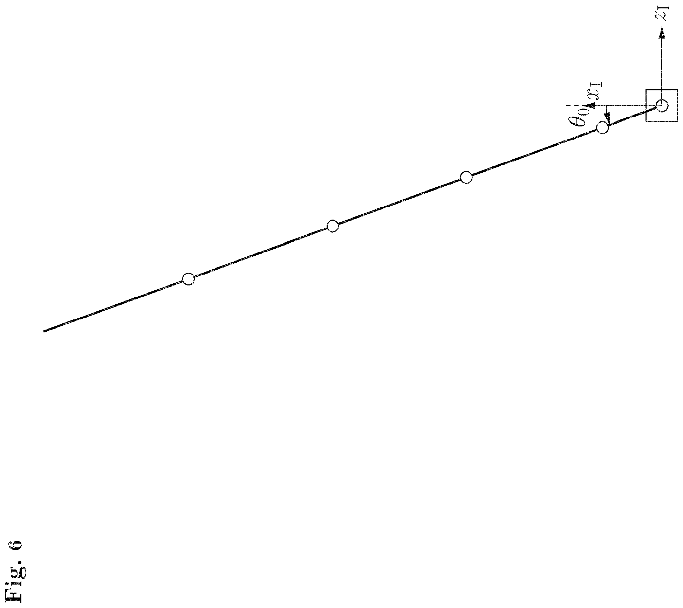

Der Zusammenhang zwischen der Pose des Manipulators $x \in \mathbb{R}^m$ im Aufgabenraum in Abhängigkeit von den generalisierten Koordinaten $q \in \mathbb{R}^n$ im Konfigurationsraum des Manipulators lautet

$$x = k(q), \qquad (1)$$

wobei $k(.)$ die Vorwärtskinematik, d.h. den kinematischen Zusammenhang zwischen Aufgaben- und Konfigurationsraum darstellt (siehe Fig. 5-6). Das Inertialkoordinatensystem (I) definiert den Aufgabenraum des Manipulators. Die Pose x ist bezüglich (I) beschrieben und setzt sich allgemein aus der Position eines Punkts und der Orientierung des dazugehörigen Segments zusammen. Je nach Aufgabenbeschreibung kann sich jedoch das Koordinatensystem (I) und damit die Definition von x und die Dimension m ändern. Die Dimension n ist gleich der Anzahl der unabhängigen Gelenke und entspricht den Freiheitsgraden des Systems. Für redundante Manipulatoren gilt *m < n.*

Der Manipulator wird als ein Starrkörpersystem mit den aktuierten Gelenkwinkeln $\theta \in \mathbb{R}^6$ oder als ein elastisches System mit den zusätzlichen, virtuellen Gelenkwinkeln $\delta \in \mathbb{R}^5$ modelliert. Die virtuellen Gelenke bilden dabei die Elastizität des Manipulators ab. Die Winkel werden zusammengefasst zu

$$q = \begin{bmatrix} \theta \\ \delta \end{bmatrix}, \qquad (2)$$

wobei $q \in \mathbb{R}^{11}$.

Durch Ableiten von x nach der Zeit ergibt sich die differentielle Vorwärtskinematik

$$v = \dot{x} = \frac{\partial k}{\partial q} \dot{q} = J^x(q)\dot{q}, \qquad (3)$$

wobei $J^x(q)$ die Jacobi-Matrix des Punkts x darstellt. Da x einen beliebigen Punkt auf dem Manipulator beschreibt, ist die Jacobi-Matrix eindeutig diesem Punkt zugeordnet. Der Punkt kann z.B. die Spitze des Manipulators $x_{\text{tcp}}$ mit der dazugehörigen Jacobi-Matrix $J^{\text{tcp}}(q)$ darstellen. Effiziente Algorithmen zur Berechnung der Jacobi-Matrix für Manipulatoren sind bekannt.

Die Änderungsrate der Pose lautet allgemein

$$v = \begin{bmatrix} \dot{p} \\ \omega \end{bmatrix}, \qquad (4)$$

wobei $\dot{p}$ die translatorische Geschwindigkeit des Punkts und $\omega$ die Winkelgeschwindigkeit des dazugehörigen Segments darstellt. Die Jacobi-Matrix aus Gl. (3) teilt sich somit in einen translatorischen und einen rotatorischen Teil

$$J^x = \begin{bmatrix} J^x_v \\ J^x_\omega \end{bmatrix}. \tag{5}$$

Die Kinematik in Gl. (3) kann außerdem in einen starren und einen elastischen Teil zerlegt werden

$$v = J^x_\theta(q)\dot{\theta} + J^x_\delta(q)\dot{\delta}. \tag{6}$$

Die Jacobi-Matrizen $J^x_\theta(q)$ und $J^x_\delta(q)$ beschreiben den Einfluss der aktuierten und elastischen Gelenk-geschwindigkeiten $\dot{\theta}$ und $\dot{\delta}$ auf die Geschwindigkeit $v$. Sie sind jeweils von $q$, d. h. von den aktuierten und den elastischen Koordinaten abhängig.

Die übliche Annahme zur Berechnung der Inversen Kinematik ist ein vollständig aktuiertes Starrkörpersystem, d. h. $\delta = 0$. Mit dieser Annahme ergibt sich Gl. (6) zu

$$v = J^x_\theta(\theta)\dot{\theta}, \tag{7}$$

wobei die Jacobi-Matrix nur noch von den aktuierten Gelenkwinkeln $\theta$ abhängig ist. Die Aufgabe der Geometriesteuerung besteht darin für eine gegebene Sollgeschwindigkeit $v$ die entsprechende Gelenkgeschwindigkeit $\dot{\theta}$ zu berechnen. Formal bedeutet dies die Invertierung der linearen Abbildung in Gl. (7).

Für eine quadratische Jacobi-Matrix mit vollem Rang kann (7) exakt gelöst werden

$$\dot{\theta} = (J^x_\theta(\theta))^{-1}\,\tilde{v}, \tag{8}$$

wobei $\tilde{v}$ die gewünschte Sollgeschwindigkeit im Aufgabenraum darstellt.

Für redundante Manipulatoren oder im Bereich von singulären Armstellungen ist eine direkte Invertierung nicht möglich. In diesen Fällen existieren unendlich viele Lösungen für $\dot{\theta}$ oder eine Invertierung ist nicht zulässig. In der Umgebung einer Singularität kann die inverse Jacobi-Matrix außerdem sehr sensitiv sein. Das heißt, eine Bewegung des TCP in bestimmte Richtungen benötigt sehr hohe Gelenkgeschwindigkeiten. Für die Implementierung auf einem realen System mit begrenzten Aktorgeschwindigkeiten führt dies zu Problemen.

Die Probleme der direkten Invertierung können durch die Aufgabe der exakten Lösung vermieden werden. Dabei wird ein Fehler e = $\tilde{v}$ - $J^x\theta$ zugelassen und hinsichtlich eines quadratischen Optimierungsproblems minimiert. Dieser Ansatz ist auch unter dem Begriff Damped Least Squares Verfahren bekannt.

Basierend auf dieser Methode wird nachfolgend ein quadratisches Optimierungsproblem zur Lösung der inversen Kinematik in Gl. (6) aufgestellt. Neben der Sollgeschwindigkeit $\tilde{v}$ werden außerdem Sollkonfigurationen und Beschränkungen im Konfigurations- und Aufgabenraum berücksichtigt.

### 3 Aufbau der Geometriesteuerung

Der Kern der Geometriesteuerung ist die Lösung eines quadratischen Optimierungsproblems zur Invertierung der Kinematik unter Beschränkungen. Das Optimierungsproblem wird in jedem Zeitschritt neu gelöst.

### 3.1 Optimierungsproblem

Ein allgemeines konvexes quadratisches Optimierungs-Problem (QP) ist durch

$$\min_x x^T W x + g^T x \tag{9}$$

$$\text{unter der Bd. } C x \leq b \tag{10}$$

gegeben, wobei $x \in \mathbb{R}^n$ die Optimierungsvariable, $W \in \mathbb{R}^{n \times n}$ eine positive definite Gewichtungsmatrix, $g \in \mathbb{R}^n$

den linearen Anteil der Zielfunktion, $C \in \mathbb{R}^{p \times n}$ die Matrix der linearen Ungleichungsnebenbeschränkungen und $b \in \mathbb{R}^{p}$ den konstanten Offset der Beschränkungen darstellt.

Ausgehend von Gl. (6) wird die differentielle Vorwärtskinematik der aktuierten Gelenke allgemein als

$$v = J(q)\dot{\theta}, \qquad (11)$$

definiert, wobei die Jacobi-Matrix J von q und damit von den aktuierten sowie den elastischen Koordinaten abhängt. Dies setzt voraus, dass die elastischen Deformationen $\delta$ der aktuellen Manipulatorposition bekannt sind. Je nach Aufgabe kann diese allgemeine Annahme durch das Vernachlässigen der Deformationen $\delta = 0$ auf die Kinematik in Gl. (7) vereinfacht werden. Im Aufbau des Optimierungsproblems treten dabei keine Änderungen auf.

Das quadratische Optimierungsproblem zur Berechnung der Sollgeschwindigkeiten $\dot{\theta}$ für den Manipulator lautet

$$\min_{\dot{\theta}} f_1(\dot{\theta}) + f_2(\dot{\theta}) + f_3(\dot{\theta}), \qquad (12)$$

$$f_1(\dot{\theta}) = \|{}^l\tilde{v} - J^l(q)\dot{\theta}\|_{W_{\tilde{v}}}, \qquad (13)$$

$$f_2(\dot{\theta}) = \|{}^k\dot{\tilde{\theta}} - J_\omega^k(q)\dot{\theta}\|_{W_{\tilde{\theta}}}, \qquad (14)$$

$$f_3(\dot{\theta}) = \|\dot{\theta}\|_{W_\theta} \qquad (15)$$

mit den Beschränkungen

$$\underline{\dot{\theta}} \le \dot{\theta} \le \overline{\dot{\theta}}, \qquad (16)$$

$$\underline{v} \le J_a(q)\dot{\theta} \le \overline{v}, \qquad (17)$$

$$C_h(\theta)\dot{\theta} \le \overline{Q}_h. \qquad (18)$$

Die Gl. (12) ist die Zielfunktion der Optimierung. Sie besteht aus den Einzelzielen $f_1$ bis $f_3$.

Der Funktion $f_1$ ist das primäre Ziel der Optimierung. Die Geschwindigkeit $\dot{\theta}$ wird dabei so gewählt, dass die Sollgeschwindigkeit ${}^l\tilde{v}$ mit minimalem Fehler erreicht wird. Der Manipulator folgt somit der gewünschten Sollgeschwindigkeit im Aufgabenraum l. Die Definition des Aufgabenraums l ist abhängig von den Betriebsmodi der Steuerung. Sie werden nachfolgend in Abschnitt 4.1 dargestellt. Die positiv definite Matrix $W_{\tilde{v}} \in \mathbb{R}^{m \times m}$ gewichtet die Einträge des primären Ziels. Damit kann die Art der Bewegung beeinflusst werden (siehe Abschnitt 4.2).

Die Funktion $f_2$ ist das sekundäre Ziel der Optimierung. Damit wird die Konfiguration bzw. die Pose des Manipulators durch Vorgabe der Sollgeschwindigkeiten ${}^k\tilde{\theta}$ beeinflusst. Die Matrix ${}^k\dot{\tilde{\theta}} - J_\omega^k$ ist als rotatorische Jacobi-Matrix nach Gl. (5) definiert. Die positiv definite Matrix $W_{\tilde{\theta}} \in \mathbb{R}^{n \times n}$ gewichtet die Differenzen der Zielfunktion. Die Sollgeschwindigkeiten ${}^k\tilde{\theta}$ sind bezüglich des Koordinatensystems (k) definiert. Je nach Aufgabe können somit relative oder absolute Geschwindigkeiten vorgegeben werden. Auf die Konfigurationssteuerung wird in Abschnitt 5.1 eingegangen.

Die Funktion $f_3$ gewichtet die Gelenkgeschwindigkeiten $\dot{\theta}$ und begrenzt deren Betrag. Dies ist besonders in der Umgebung von Singularitäten nötig, um hohe Geschwindigkeiten zu vermeiden. Die Funktion $f_3$ stellt somit einen Dämpfungsterm des Optimierungsproblems dar, dessen Einfluss über die Gewichtungsmatrix $W_\theta \in \mathbb{R}^{n \times n}$ festgelegt wird. Der Ansatz geht auf das Damped Least Squares Verfahren zurück. Aus numerischer Sicht verbessert sich dabei die Stabilität der Problemstellung.

Wie aus der Zielfunktion (12) ersichtlich, liegt eine Optimierung unter mehreren Zielen vor. Im Normalfall können über die Redundanz des Manipulators alle Ziele erfüllt werden. Ist die Anzahl der Ziele höher, als die redundanten Freiheitsgrade so kann trotzdem eine pareto-optimale Kompromisslösung gefunden werden. Diese Lösung minimiert den Fehler aller Anforderungen im Sinne der kleinsten Fehlerquadrate. Die verfügbaren, redundanten Freiheitsgrade sind von der Anzahl der aktiven Beschränkungen abhängig und ändern sich während des Betriebs.

Die Nebenbedingung (16) stellt Komponentenbeschränkungen des Optimierungsproblems dar. Das sind direkte Beschränkungen auf die Optimierungsvariable $\dot{\theta}$. Durch die Komponentenbeschränkungen wird die Position, die Geschwindigkeit und die Beschleunigung der Gelenke im Konfigurationsraum limitiert. Sie sind in Abschnitt 6 erläutert. Die Nebenbedingung (17) beschreibt die Beschränkungen im Aufgabenraum. So werden z.B. Hindernisse und Wände in die Problemstellung integriert. Die Jacobi-Matrix $\boldsymbol{J}_a \in \mathbb{R}^{p \times n}$ setzt sich dabei aus den Jacobi-Matrizen einzelner Punkte des Manipulators in unterschiedlichen Koordinatensystemen zusammen. Die Anzahl der Nebenbedingungen p ist dabei von den Beschränkungen im Aufgabenraum abhängig (siehe Abschnitt 7 beschrieben).

Die Nebenbedingung (18) berücksichtigt die Beschränkungen der Hydraulik. Dabei entsteht eine gewichtete L1-Norm Beschränkung, die mit unterschiedlichen Verfahren in das Optimierungsproblem integriert werden kann. Die Dimension der Matrix $C_h$ ist dabei abhängig von der Wahl des Verfahrens.

Die Zielfunktion (12) in der Form (9) lautet (siehe Anhang 9.1)

$$\boldsymbol{W} = \boldsymbol{J}^T \boldsymbol{W}_{\tilde{v}} \boldsymbol{J} + \boldsymbol{W}_{\tilde{\theta}} + \boldsymbol{W}_{\theta}, \quad \boldsymbol{g} = -(\tilde{\boldsymbol{v}}^T \boldsymbol{W}_{\tilde{v}} \boldsymbol{J} + \dot{\tilde{\boldsymbol{\theta}}}^T \boldsymbol{W}_{\tilde{v}})^T. \quad (19)$$

Zur Lösung des quadratischen Optimierungsproblems (12)-(18) stehen eine Vielzahl von effizienten numerischen Optimierungsalgorithmen zu Verfügung, die sich auch für Embedded-Systeme eignen und welche als numerische Solver bezeichnet werden.

### 3.2 Algorithmus

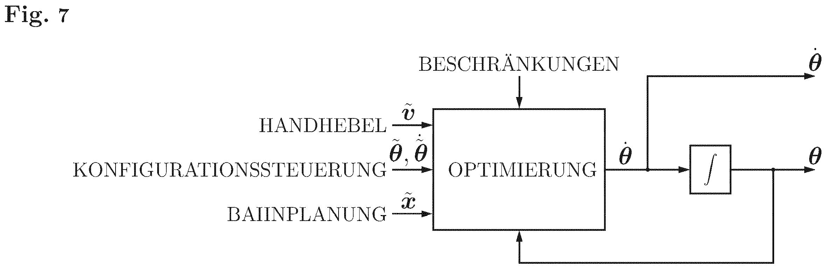

Das QP (12)-(18) wird zu jedem diskreten Zeitpunkt (siehe Fig. 7) neu gelöst. Dazu wird im aktuellen Zeitschritt $t_k$ das QP aus den Informationen der Handhebel, der Konfigurationssteuerung, den Beschränkungen, der aktuellen Position $\theta(t_k) = \theta_k$ und eventuell durch die Bahnplanung generiert. Ein numerischer Solver berechnet die optimale Sollgeschwindigkeit $\dot{\theta}_{k+1}$ unter Einhaltung aller Beschränkungen. Aus der Sollgeschwindigkeit wird eine Sollposition durch Integration berechnet. Die Größen $\theta_{k+1}, \dot{\theta}_{k+1}$ sind die Sollwerte für die nachfolgende Achsregelung, die die Vorgabewerte in eine Bewegung am realen System umsetzt.

Zum nächsten Zeitpunkt $t_{k+1} = t_k + \varDelta t$ mit dem Zeitschritt $\varDelta t$ wird das Optimierungs-problem erneut gelöst, wobei alle Parameter neu gesetzt werden können. Dabei wird die neue Istposition $\theta_{k+1}$ des Manipulators aus dem zurückliegenden Integrationsschritt und das aktuelle Handhebelsignal berücksichtigt.

Die grundlegende Struktur des Algorithmus ist unter dem Begriff "Resolved Motion Rate Control. Durch den lokalen Ansatz werden die Rechenanforderungen gegenüber einer globalen Berechnung gering gehalten. Der Algorithmus kann außerdem aufgrund des iterativen Aufbaus flexibel auf veränderte Umgebungsbedingungen oder Betriebsmodi reagieren.

Eine globale Optimierung ist dabei nicht möglich. In der Funktion als TCP-Steuerung spielt dies jedoch eine untergeordnete Rolle, da der Bediener die Bahn durch eine Sollgeschwindigkeit vorgibt. Durch die Konfigurationssteuerung werden außerdem zyklische Bahnen generiert, die einen Konfigurationsdrift ausschließen.

Die Integration wird numerisch durchgeführt. Dabei ist ein einfaches explizites Euler-Verfahren ausreichend

$$\boldsymbol{\theta}_{k+1} = \boldsymbol{\theta}_{k+1} + \dot{\boldsymbol{\theta}}_k \Delta t. \quad (20)$$

### 4 TCP-Bewegung

### 4.1 Aufgabenräume

Die Aufgabe bzw. die gewünschte Betriebsart des Manipulators definiert den Aufgabenraum und damit die Sollgeschwindigkeit $^l \tilde{v}$ und die Jacobi-Matrix $J^l$ im primären Einzelziel $f_1$ (12).

Die Betriebsarten der Geometriesteuerung sind die Gelenkwinkelsteuerung, die Zylinder Koordinaten Steuerung, die 3D-Geschwindigkeitssteuerung und die vollautomatische Steuerung. Je nach Steuerungsart wechselt die Bedeutung der Handhebelsignale. Die Steuerungsarten können während des Betriebs gewechselt werden.

Die Gelenkwinkelsteuerung stellt die ursprüngliche Einachssteuerung dar, bei der die Geschwindigkeiten der Gelenke einzeln vorgegeben werden. Die Sollgeschwindigkeit und Jacobi-Matrix ist

$$^{\text{joint}}\tilde{\boldsymbol{v}} = \begin{bmatrix} \dot{\theta}_0 & \cdots & \dot{\theta}_6 \end{bmatrix}^T, \quad \boldsymbol{J}^{\text{joint}} = \boldsymbol{I}, \qquad (21)$$

wobei $\boldsymbol{I}$ die Einheitsmatrix darstellt. Im Unterschied zur traditionellen Einachssteuerung können hierbei Beschränkungen im Gelenk- und Aufgabenraum, wie z. B. maximale Gelenkgeschwindigkeiten oder Hindernisse berücksichtigt werden.

Die Zylinder-Koordinaten-Steuerung ist eine TCP-Steuerung bei der die Geschwindigkeit über ein Zylinderkoordinatensystem im Aufgabenraum festgelegt wird

$$^{\text{cyl}}\tilde{\boldsymbol{v}} = \begin{bmatrix} \dot{\theta}_0 & ^{\text{cyl}}\tilde{v}_x & ^{\text{cyl}}\tilde{v}_y \end{bmatrix}^T, \quad \boldsymbol{J}^{\text{cyl}} = \begin{bmatrix} 1 & \cdots & 0 \\ 0 & & \boldsymbol{J}^{\text{tcp}} \end{bmatrix}. \qquad (22)$$

Die Sollgeschwindigkeit $v_{\text{cyl}}$ setzt sich dabei aus den Koordinaten der TCP-Geschwindigkeit im Aufgabenraum $^{\text{cyl}}\tilde{v}_x, ^{\text{cyl}}\tilde{v}_y$ und der Gelenkgeschwindigkeit um die Hochachse $\theta_0$ zusammen. Die Jacobi-Matrix $\boldsymbol{J}^{\text{tcp}}$ umfasst nur die Kinematik des planaren Manipulators, da $\theta_0$ direkt angesteuert wird. Mit der Zylinder-Koordinaten-Steuerung können TCP-Bewegungen mit konstanter Höhe oder konstantem radialem Abstand vom Mastbock durchgeführt werden.

Die 3D-Geschwindigkeitssteuerung ermöglicht die Vorgabe einer räumlichen TCP-Geschwindigkeit im Aufgabenraum

$$^{\text{3d}}\tilde{\boldsymbol{v}} = \begin{bmatrix} ^{\text{tcp}}\tilde{v}_x & ^{\text{tcp}}\tilde{v}_x & ^{\text{tcp}}\tilde{v}_x \end{bmatrix}^T, \quad \boldsymbol{J}^{\text{3d}} = \boldsymbol{J}^{\text{tcp}}, \qquad (23)$$

wobei $^{\text{3d}}\tilde{v}$ die räumlichen Koordinaten der TCP-Geschwindigkeit im Aufgabenraum enthält und $\boldsymbol{J}^{\text{tcp}}$ die räumliche Kinematik des Manipulators berücksichtigt. Mit dieser Steuerung können gerade Bewegungen des TCP in Richtung der $z_I$-Achse aufgeführt werden (siehe Fig. 5-6). Die Ausführung einer solchen Bewegung erfordert die zeitgleiche Ansteuerung aller Gelenke des Manipulators und stellt die Bewegung mit der höchsten Komplexität dar.

Die vollautomatische Steuerung erhält nicht mehr Geschwindigkeitsvorgaben des Bedieners, sondern Positionsvorgaben von einem übergeordneten Bahnplanungsmodul. Der Vorteil dieser Verschaltung von Bahnplanung und Geometriesteuerung ist, dass nur die grundlegende Bewegung vorgegeben werden muss. Die Geometriesteuerung übernimmt die eigentliche Trajektorienplanung, wobei die Beschränkungen des Systems und der Umgebung berücksichtigt werden. Dies erspart das aufwendige Planen einer zulässigen Trajektorie im Aufgabenraum. Der Nachteil dieses Ansatzes ist, dass lokale Minima in der Lösung auftreten können. Der Manipulator kann in diesem Fall seine Bewegung nicht beenden und kommt unter Berücksichtigung aller Beschränkungen zum Stillstand. Die Steuerungsarten sind mit einer Konfigurationsteuerung verknüpft, mit der gewünschte Posen des Manipulators während der Bewegung vorgegeben werden können. Dies betrifft auch die Änderung oder Arretierung der Neigung einzelner Segmente unter Beibehaltung der TCP-Bewegung.

### 4.2 Gewichtung TCP

Die TCP-Bewegung wird über die Vorgabe einer Sollgeschwindigkeit in der Zielfunktion (13) festgelegt. In Abschnitt 4.1 sind dazu mehrere Betriebsarten des Manipulators dargelegt. Neben der Steuerungsart existieren außerdem zusätzliche Anforderungen an den Verlauf der TCP-Bewegung. Der Endeffektor soll möglichst genau der Sollgeschwindigkeit folgen, wobei die Richtung der Sollgeschwindigkeit wichtiger ist als der Betrag.

Diese Anforderung ist wesentlich, da der Manipulator aufgrund von physikalischen Beschränkungen bestimmte Sollgeschwindigkeiten nicht erreichen kann. Die Beschränkungen sind dabei z. B. die endliche Geschwindigkeit der Aktoren oder die Hindernisse in der Umgebung. In diesem Fall wird im Optimierungsproblem ein Fehler für den Sollwert zugelassen, um die Beschränkungen zu erfüllen. Der Manipulator hält damit entweder den Betrag der Geschwindigkeit konstant und weicht von der vorgegebenen Richtung ab oder der Betrag der Geschwindigkeit wird reduziert und die Richtung beibehalten. Hinsichtlich der Bedienbarkeit ist letzteres Verhalten wünschenswert, da sich der Manipulator mit maximal möglicher Geschwindigkeit in die vorgegebene Richtung bewegt. Aufgrund des quadratischen Fehlerterms in der Zielfunktion tendiert der Optimierungsalgorithmus dazu den Betrag der Geschwindigkeit zu erhalten und in der Richtung nachzugeben. Dieses Verhalten kann durch eine geeignete Wahl der Gewichtungsmatrix $W_{\tilde{v}}$ in Gl. (13) geändert werden.

Durch die Gewichtung einzelner Geschwindigkeitsdifferenzen wird der Fehler zwischen Soll- und Istwerten in bestimmte Richtungen reduziert. Für die horizontale Bewegung des TCP kann somit z. B. die Geschwindigkeit in die vertikale Richtung stärker gewichtet werden, um eine Abweichung in diese Richtung zu verhindern. Dieser Ansatz funktioniert jedoch nur für Bewegungen in vertikaler und horizontaler Richtung. Für schräge Sollgeschwindigkeiten ist keine definierte Richtung in der Gewichtungsmatrix vorhanden.

Zur Gewichtung schräger Richtungen wird die TCP-Sollgeschwindigkeit $\tilde{v}$ in einem speziellen Endeffektorkoordinatensystem (e) definiert

$$^{\mathrm{e}}\tilde{\boldsymbol{v}} = \tilde{v}\boldsymbol{e}_1, \qquad (24)$$

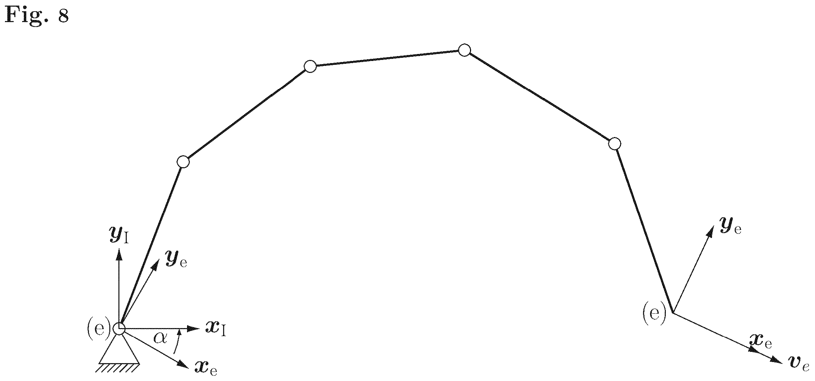

wobei $\tilde{v}$ den Betrag der Sollgeschwindigkeit und $e_1$ den ersten Einheitsvektor darstellt. Das Endeffektorkoordinatensystem (e) ist um einen Winkel $\alpha$ zum Inertialkoordinatensystem gedreht, sodass die $x_e$-Achse in Richtung der Sollgeschwindigkeit zeigt (siehe Fig. 8). Diese ist somit durch eine einzelne Koordinate festgelegt. Zur Berücksichtigung von $^{\mathrm{e}}\tilde{v}$ in der Zielfunktion (13) wird die Istgeschwindigkeit des Endeffektors bezüglich (e) ausgedrückt. Mit der Jacobi-Matrix im Inertialsystem J ergibt sich

$$^{\mathrm{e}}\tilde{\boldsymbol{v}}^{\mathrm{tcp}} = {}^{\mathrm{e}}\boldsymbol{R}_{\mathrm{I}}\tilde{\boldsymbol{v}}^{\mathrm{tcp}} = {}^{\mathrm{e}}\boldsymbol{R}_{\mathrm{I}}\boldsymbol{J}\dot{\boldsymbol{\theta}}, \qquad (25)$$

wobei $^{\mathrm{e}}R_{\mathrm{I}}$ die Transformationsmatrix zwischen Inertial- und Endeffektorkoordinatensystem (e) darstellt.

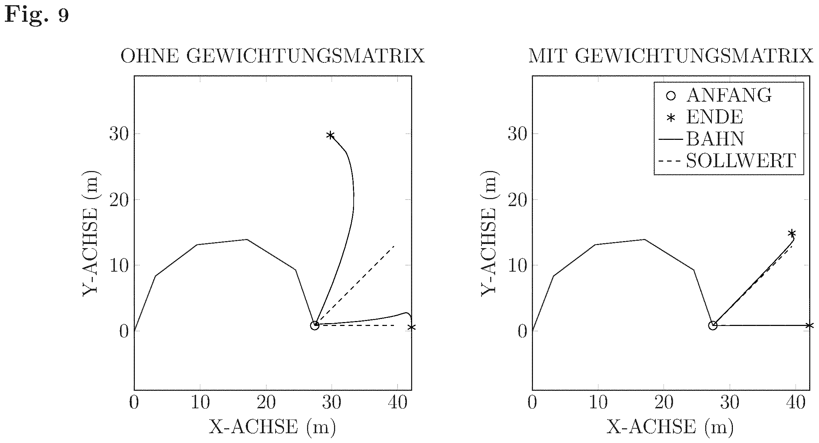

Mit diesem Ansatz gewichten die Einträge der Matrix $W_{\tilde{v}}$ die Geschwindigkeiten in Richtung (e). Da die Sollgeschwindigkeit in Gl. (24) immer in Richtung des ersten Basisvektors $x_e$ zeigt, können somit orthogonale Richtungen einfach gewichtet werden. Eine höhere Gewichtung dieser Einträge führt dazu, dass die Geschwindigkeitskomponente in Richtung des Sollwerts als erstes aufgegeben wird. Damit ergibt sich der gewünschte Effekt: die Reduktion des Betrags der Sollgeschwindigkeit unter Erhaltung der Richtung. Fig. 9 zeigt die Funktion der Geometriesteuerung mit und ohne Gewichtungsmatrix für den TCP.

### 4.3 Kompensation der statischen Deformation

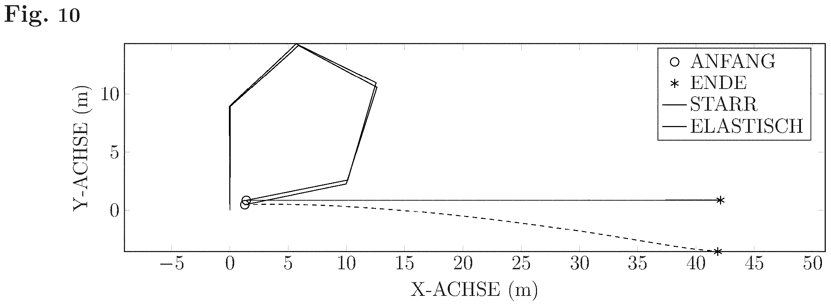

Die Annahme eines vollständig aktuierten Starrkörpersystems führt in der Realität zu Fehlern in der Geometriesteuerung. Aufgrund der Elastizität der Segmente kommt es unter Eigengewicht zu einer statischen Durchbiegung des Manipulators. Fig. 5 zeigt den starren und den elastischen Manipulator unter Eigengewicht mit gleichen Winkelwerten $\theta$. Obwohl die elastischen Gelenke nur kleine Werte $\delta_i$ aufweisen, ist zwischen dem starren und dem elastischen Modell eine deutliche Abweichung in der Position der Mastspitze sichtbar. Durch die serielle Kinematik des Manipulators summieren sich die elastischen Durchbiegungen bis hin zur Mastspitze auf. Es kommt erschwerend hinzu, dass die Durchbiegung von der Haltung des Manipulators abhängt. Somit ist keine Kompensation mithilfe eines konstanten Korrekturfaktors möglich. Fig. 10 zeigt dieselbe Geometriesteuerung an einem starren und elastischen Manipulator. Die Positionsabhängigkeit der statischen Durchbiegung ist dabei deutlich erkennbar.

Eis ist bekannt die Deformation durch eine zusätzliche Rückführung im Aufgabenraum zu korrigieren. Die rückführungsbasierte Deformationskompensation hat den Nachteil, dass die Sollgeschwindigkeiten erst nachträglich korrigiert werden. Das führt dazu, dass Beschränkungen nachträglich verletzt werden. Das Resultat sind unvorhersehbare Bewegungen des Manipulators mit erhöhter Kollisionsgefahr. Der nachfolgend vorgestellte Ansatz zur Deformationskompensation berücksichtigt die Verformungen auf Geschwindigkeitsebene und kann somit direkt im Optimierungsproblem verwendet werden. Damit entfällt die nachträgliche Korrektur der Sollgeschwindigkeiten.

Zur Berücksichtigung der statischen Durchbiegung in der Geometriesteuerung wird daher nachfolgend ein modellbasierter, statischer Ansatz vorgeschlagen. Das mechanische Modell des Verteilermasts besteht dabei aus starren Modellkörpern und diskreten Elastizitäten. Da die statische Durchbiegung nur in der vertikalen Ebene des Manipulators auftritt, ist eine planare Betrachtung ausreichend.

Das planare, mechanische System aus starren Modellkörpern und diskreten Elastizitätsfreiheitgraden $\delta$ ist gegeben durch

$$\boldsymbol{H}(\boldsymbol{\theta},\boldsymbol{\delta})\begin{bmatrix}\ddot{\boldsymbol{\theta}}\\\ddot{\boldsymbol{\delta}}\end{bmatrix} + \boldsymbol{c}(\boldsymbol{\theta},\dot{\boldsymbol{\theta}},\boldsymbol{\delta},\dot{\boldsymbol{\delta}}) + \boldsymbol{g}(\boldsymbol{\theta},\boldsymbol{\delta}) + \begin{bmatrix}\boldsymbol{0}\\\boldsymbol{D}\dot{\boldsymbol{\delta}}+\boldsymbol{K}\boldsymbol{\delta}\end{bmatrix} = \begin{bmatrix}\boldsymbol{\tau}(\boldsymbol{\theta})\\\boldsymbol{0}\end{bmatrix}, \qquad (26)$$

wobei H die Massenmatrix, C die Coriolis- und Zentrifugalkräfte, $\boldsymbol{g}$ die Gravitationskräfte, T die generalisierten Kräfte und K und D die Steifigkeits- und Dämpfungsmatrizen bezeichnet. Das Modell bildet durch die elastischen Koordinaten $\delta$ die Armelastizitäten der Segmente ab.

Das vorgeschlagene Verfahren gilt nicht nur für die diskrete Berücksichtigung der Elastizitäten, sondern auch für allgemeine flexible Mehrkörpermodellierungen. Durch entsprechende Diskretisierungsansätze wie z. B. der Ritz-Ansatz, die Methode der Finiten-Elemente u. a. kann eine endlich dimensionales Modell des Verteilermasts erzeugt und in die Form (26) gebracht werden.

Bei statischer Betrachtung $\dot{\theta} = \ddot{\theta} = \dot{\delta} = \ddot{\delta} = 0$ vereinfacht sich Gl. (26) zu

$$\begin{bmatrix} g_\theta(\theta,\delta) \\ g_\delta(\theta,\delta) \end{bmatrix} + \begin{bmatrix} 0 \\ K\delta \end{bmatrix} = \begin{bmatrix} 0 \\ 0 \end{bmatrix}, \qquad (27)$$

wobei der Gravitationsterm g in starre und elastische Anteile $g_\theta$, $g_\delta$ unterteilt wird.

Für die Annahme kleiner Verformungen in jedem Segment kann die Abhängigkeit von $\delta$ im Gravitationsterm vernachlässigt werden $g_\delta = g_\delta(\theta)$.

Für die elastischen Koordinaten $\delta$ ergibt sich somit der Zusammenhang

$$\delta = K^{-1} g_\delta(\theta). \qquad (28)$$

Dieser kann genutzt werden, um die statische Auslenkung in Abhängigkeit von der Manipulatorpose approximativ zu bestimmen. Die Ableitung von Gl. (28) nach der Zeit führt auf

$$\dot{\delta} = \frac{d}{dt} K^{-1} g_\delta = K^{-1} \frac{\partial g_\delta}{\partial \theta} \dot{\theta} = J_{\delta\theta}(\theta)\dot{\theta}. \qquad (29)$$

Die Gl. (29) stellt über die gewichtete Jacobi-Matrix $J_{\delta\theta} = K^{-1}\frac{\partial g_\delta}{\partial \theta}$ einen linearen Zusammenhang zwischen der Änderungsrate der elastischen Koordinaten $\dot{\delta}$ und der Änderungsrate der aktiven Koordinaten $\dot{\theta}$ bei statischer Betrachtung her.

Der Einfluss zusätzlicher Kräfte auf den Verteilermast wird analog zum obigen Vorgehen berücksichtigt. Die Kräfte werden als eingeprägte Kräfte und Momente zur Modellierung hinzugefügt. Es ergibt sich

$$Q_i(\theta,\delta) = (J_i^{\mathrm{e}}(\theta,\delta))^T \begin{bmatrix} f^{\mathrm{e}} \\ M^{\mathrm{e}} \end{bmatrix}_i, \qquad (30)$$

wobei $Q_i$ die generalisierten Kräfte, $f_i^{\mathrm{e}}$, $M_i^{\mathrm{e}}$ die eingeprägten Kräfte und Momente und $J_i^e$ die entsprechende Jacobi-Matrix des Körpers i darstellt. Die Kräfte $Q_i$ aller Körper werden zu einem Vektor $Q$ zusammengefasst und bilden den angepassten Gravitationsterm

$$\tilde{g}(\theta,\delta) = g(\theta,\delta) + Q(\theta,\delta), \qquad (31)$$

mit g aus Gl. (26). Mit den Gln. (27)-(29) und dem angepassten Gravitationsterm (31) ergibt sich erneut der Zusammenhang zwischen den elastischen Koordinaten -$\delta$ und -$\theta$. Das Einsetzen von Gl. (29) in (6) führt auf

$$\dot{x} = \left( J_\theta^x + J_\delta^x J_{\delta\theta} \right)\dot{\theta} := J_{\mathrm{d}}^x(\theta,\delta)\dot{\theta}, \qquad (32)$$

wobei die neue Jacobi-Matrix $J_{\mathrm{d}}$ den Einfluss der statischen Durchbiegung auf Geschwindigkeitsebene berücksichtigt. Die Jacobi-Matrix ist von den aktiven Gelenkkoordinaten $\theta$ sowie den statischen Durchbiegungen $\delta$ abhängig. Die statischen Durchbiegungen können dabei durch Gl. (28) berechnet werden.

Die korrigierte Jacobi-Matrix $J_{\mathrm{d}}$ ersetzt die ursprüngliche Jacobi-Matrix im Optimierungsproblem (12)-(18). Der Vorteil ist, dass die statische Deformation bereits in der Optimierung berücksichtigt wird. Dadurch entfällt die nachträgliche Korrektur und damit die potentielle Verletzung von Beschränkungen. Außerdem behält das Problem die einfache Struktur aus Fig. 7.

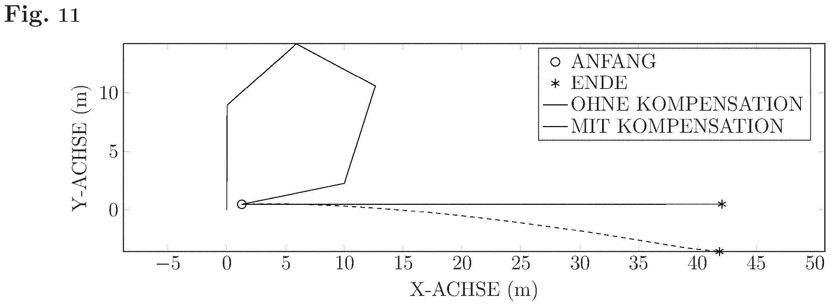

Die Fig. 11 zeigt die Funktion der Geometriesteuerung mit und ohne Deformationskompensation. Die Kompensation verhindert dabei die Absenkung der Mastspitze aufgrund der elastischen Durchbiegung und ermöglicht einen geradlinigen Bewegungsverlauf.

Bei der Betonpumpe wirkt die Betonförderung als zusätzliche Kraft auf den Verteilermast. Das Betongewicht im Förderrohr erhöht die Deformation in den Segmenten und muss somit in der Deformationskompensation berücksichtigt werden. Die Massenkräfte werden über das Volumen des Förderohrs und die Dichte des Betons berechnet und mit Gl. (30) im Modell berücksichtigt. Die Betondichte ergibt sich dabei entweder zur Laufzeit über die Messgrößen der Betonförderung oder es wird eine abgespeicherte mittlere Dichte herangezogen. Je nach Betriebszustand der Pumpe und der Maststellung kann der Füllgrad des Förderrohrs variieren. Der Grund dafür ist, dass ein Teil des Betons bei Pumpenstillstand oder niedriger Pumpfrequenz schwerkraftbedingt abfließt und somit der Füllgrad im vorderen Bereich des Verteilermasts absinkt. Dieser Effekt kann in Abhängigkeit von der Maststellung und dem Betriebszustand der Pumpe ebenfalls berücksichtigt werden. Durch den iterativen Aufbau der Geometriesteuerung werden dabei auch zeitlich stark variierende Massenverhältnisse ohne Schwierigkeiten kompensiert.

Neben der Durchbiegung des Verteilermasts wird die Position des TCP auch von den Elastizitäten des Fahrzeugchassis, der Abstützung und der Fahrzeugfederung beeinflusst. Da der Verteilermast fest mit dem Fahrzeug verbunden ist, wird das Lastmoment über das Fahrzeugchassis auf die Abstützung übertragen. Die eingeleiteten Momente sind dabei von Maststellung abhängig. Je nach Winkel und Länge der Abstützung kommt es zur einer Deformation im Unterbau und somit zur einer Abweichung der TCP Bewegung. Die Fahrzeugfederung ist ein weiterer Einflussfaktor, da das Fahrzeug in der Praxis nicht vollständig angehoben wird. Dadurch bleiben die Reifen mit dem Untergrund in Kontakt und verhindern die Schwingung des Fahrzeugs um die Hochachse. Die Elastizitäten des Unterbaus können ebenfalls in die Modellierung aufgenommen und in der Deformationskompensation berücksichtigt werden. Die planare Beschreibung wird dabei auf ein räumliches Modell erweitert um die variable Steifigkeit der Abstützung bei der Drehung um die Hochachse darstellen zu können. Für eine einfache Modellstruktur wird der Unterbau aus Starrkörpern mit diskreten Feder-Dämpfer Elementen zusammengesetzt. Die Feder-Dämpfer Elemente bilden dabei die Elastizität des Fahrzeugchassis, der Abstützung und der Fahrzeugfederung nach. Die räumliche Verteilung der Elastizität kann durch die Verwendung elastischer, virtueller Gelenke weiter verbessert werden.

## 5 Konfiguration

### 5.1 Konfigurationssteuerung

Durch die Redundanz des Manipulators existieren für eine TCP-Position eine unendliche Anzahl an möglichen Manipulatorstellungen. Diese Freiheitsgrade können genutzt werden, um eine spezifische Haltung des Manipulators festzulegen. Mit sogenannten internen Bewegungen wird die Haltung des Manipulators verändert, ohne die Position des TCP zu bewegen. Mathematisch betrachtet stellen diese Bewegungen Geschwindigkeitsvektoren im Nullraum der Endeffektor Jacobi-Matrix dar.

Ein weit verbreiteter Ansatz zur Nutzung der Redundanz ist die Lösung der inversen Kinematik über das Pseudoinverse in Kombination mit der homogenen Lösung. Die homogene Lösung ermöglicht interne Bewegungen, ohne die Position des TCP zu beeinflussen. Der Ansatz liefert jedoch im Bereich von Singularitäten unzulässige Lösungen und muss deshalb speziell abgesichert werden.

Das Ausführungsbeispiel der vorliegenden Erfindung nutzt dagegen zur Verbesserung der Robustheit gegenüber Singularitäten ein Damped Least Squares Verfahren. Außerdem wird die Konfigurationssteuerung als zusätzliche Aufgabe in die Zielfunktion des Optimierungsproblems eingebunden. Die Konfiguration wird durch die Minimierung des quadratischen Fehlers gesteuert und ist somit unabhängig von der Anzahl der Freiheitsgrade. Die Priorität der Konfigurationssteuerung gegenüber der TCP-Sollbewegung wird über Gewichtungen in der Zielfunktion festgelegt. Dabei wird die Sollbewegung als Primäraufgabe und die Konfigurationssteuerung als Sekundäraufgabe definiert.

In der vorliegenden Arbeit wird die Konfigurationssteuerung durch Minimierung eines Soll-Istwert-Fehlers in der Zielfunktion berücksichtigt. Neben der TCP-Sollgeschwindigkeit als Primäraufgabe wird die Konfigurationsteuerung als Sekundäraufgabe definiert. Die Priorität der Aufgaben wird durch Gewichtungsmatrizen gesteuert.

Der Vorteil der Konfigurationssteuerung ist die Wiederholbarkeit von Bewegungen. Eine geschlossene Kurve im Aufgabenraum erzeugt damit auch eine geschlossene Kurve im Konfigurationsraum. Das heißt, der Manipulator nimmt bei Wiederholung der Bewegung auch erneut dieselben Positionen ein. Dies ist besonders bei Ausweichbewegungen durch Hindernisse erforderlich, da sonst der Manipulator die ursprüngliche Haltung verliert. Durch den optimierungsbasierten Ansatz werden außerdem die redundanten Freiheitsgrade des Manipulators genutzt, um die Sollgeschwindigkeits- und Konfigurationsvorgaben gleichzeitig zu erfüllen. Reichen die Freiheitsgrade nicht aus, so wird die Konfiguration zugunsten der TCP-Sollgeschwindigkeit aufgegeben. Dies ist besonders in der Umgebung von Hindernissen oder in singulären Positionen relevant. Die Konfigurationssteuerung verbessert damit die Benutzerfreundlichkeit und Sicherheit des Manipulators. Dem Bediener werden darüber hinaus eine Anzahl an vordefinierten Konfigurationen angeboten, die konsistent und wiederholbar über den Arbeitsraum gehalten werden. Bei Bedarf kann die Konfiguration ohne Unterbrechung der TCP-Bewegung gewechselt werden. Die Konfigurationsteuerung führt in diesem Fall den Konfigurationswechsel während der Bewegung und unter Einhaltung der Beschränkungen durch. Durch die konsistenten Konfigurationen können außerdem Abweichungen von den Sollwerten schneller erkannt werden. Dadurch wird die Fehlerdetektion des Manipulators verbessert.

Die Konfiguration wird über die Vorgabe der Gelenkgeschwindigkeiten $\dot{\tilde{\boldsymbol{\theta}}}$ $\theta$ in die Zielfunktion (14) eingebracht

$$f_2(\dot{\boldsymbol{\theta}}) = \|^k\dot{\tilde{\boldsymbol{\theta}}} - \boldsymbol{J}_\omega^k(\boldsymbol{q})\dot{\boldsymbol{\theta}}\|_{W_{\tilde{\boldsymbol{\theta}}}}.$$

Die Sollgeschwindigkeit $^k\dot{\tilde{\boldsymbol{\theta}}}$ und die rotatorische Jacobi-Matrix $\boldsymbol{J}_\omega^k$ ist dabei von dem gewählten Koordinatensystem (k) abhängig.

Da die Sollkonfiguration eine Position darstellt, muss diese auf Geschwindigkeitsebene transformiert werden. Dazu wird die Funktion

$$^k\dot{\tilde{\boldsymbol{\theta}}} = \boldsymbol{K}\left(^k\tilde{\boldsymbol{\theta}} - {}^k\boldsymbol{\theta}\right) \qquad (33)$$

verwendet, wobei $^k\tilde{\theta}$ den Sollwinkel und $^k\theta$ den Winkel des Manipulators im Koordinatensystem *(k)* und *K* eine positiv definite Verstärkungsmatrix darstellt. Die Gl. (33) ist ein P-Regler, der über die Stellgröße $^k\dot{\tilde{\boldsymbol{\theta}}}$ den aktuellen Winkel $^k\theta$ auf den Sollwinkel $^k\tilde{\theta}$ zieht. Die Verstärkungsmatrix K gewichtet dabei den Differenzterm. Um die Geschwindigkeiten $^k\dot{\tilde{\boldsymbol{\theta}}}$ zu begrenzen, wird außerdem eine Sättigung eingeführt (nicht dargestellt). Sie hält die Sollgeschwindigkeit ab einer maximalen/minimalen Differenz konstant.

Der gleiche Ansatz (33) ergibt sich alternativ über die Optimierung einer zusätzlichen Zielfunktion der Sollwinkel. Die Sollgeschwindigkeit wird dabei auf den Nullraum der Jacobi-Matrix projiziert und führt zu internen Bewegungen des Manipulators. Anders als bei diesem Verfahren wird in der vorliegenden Arbeit die Sollgeschwindigkeit aus Gl. (33) direkt in der Zielfunktion berücksichtigt. Damit werden die Beschränkungen des Optimierungsproblems mit einbezogen.

Die Sollwinkel und Sollwinkelgeschwindigkeiten $^k\theta, \ ^k\dot{\boldsymbol{\theta}}$ können in unterschiedlichen Koordinatensystemen (k) angegeben werden. Dementsprechend muss auch die Jacobi-Matrix $\boldsymbol{J}_\omega^k$ in der Zielfunktion (14) angepasst werden. Zur Vorgabe relativer Winkel gilt

$$\boldsymbol{J}_\omega^{\mathrm{rel}} = \boldsymbol{I}. \qquad (34)$$

Für absolute Sollwinkel ergibt sich

$$\boldsymbol{J}_\omega^{\mathrm{abs}} = \begin{bmatrix} \boldsymbol{J}_\omega^1 \\ \vdots \\ \boldsymbol{J}_\omega^n \end{bmatrix}, \qquad (35)$$

wobei $\boldsymbol{J}_\omega^i \in \mathbb{R}^{n \times 1}$ die Jacobi-Matrix der Rotation für das *i*-te Gelenk des planaren Manipulators zum Inertialkoordinatensystem darstellt. Für den planaren Manipulator ergibt sich damit eine Einsmatrix in unterer Dreiecksform.

Durch die Berücksichtigung in der Zielfunktion ist die Konfigurationssteuerung unabhängig von der Anzahl der Freiheitsgrade des Manipulators. Sind die redundanten Freiheitsgrade aufgrund von aktiven Beschränkungen kleiner als die Anzahl der Aufgaben, so wird eine optimale Lösung im Sinne des kleinsten quadratischen Fehlers berechnet. Dies bedeutet, dass die Priorität von TCP-Sollwert und Konfigurationssteuerung durch die Gewichtungen festgelegt werden müssen. Eine höhere Gewichtung des TCP-Sollwerts bedeutet eine Bevorzugung in kritischen Situationen. Die Konfiguration wird dann zugunsten der TCP-Bewegung aufgegeben, um z. B. die Reichweite zu maximieren oder einem Hindernis auszuweichen. Für die Wahl der Sollwinkel $^k\tilde{\theta}$ werden konstante Winkel zur Festlegung der Pose vorgeschlagen. Die Zielposition ist dabei eine extreme Stellung, die nur zur grundlegenden Definition der Haltung dient. Die Gewichtung wird dabei so gering gewählt, dass die Haltung nicht vollständig eingeregelt wird. Stattdessen strebt die Optimierung immer einen Kompromiss mit der TCP-Sollgeschwindigkeit an. Durch diesen Prozess ergibt sich eine definierte Konfiguration des Manipulators für alle TCP-Positionen. Die Methode hat den Vorteil, dass Sollkonfigurationen relativ einfach definiert werden können.

Tabelle 1: Sollwinkel für verschiedene Sollkonfigurationen.

| abs$\dot{\theta}$ (deg) | 1 | 2 | 3 | 4 | 5 |
|---|---|---|---|---|---|
| Bogen | 90 | 90 | 90 | -90 | -90 |
| M-Faltung | 90 | 90 | -90 | 90 | -90 |
| Zweites Segment senkrecht | 90 | 0 | -90 | 90 | -90 |
| Letztes Segment senkrecht | 90 | 90 | 90 | -90 | 0 |

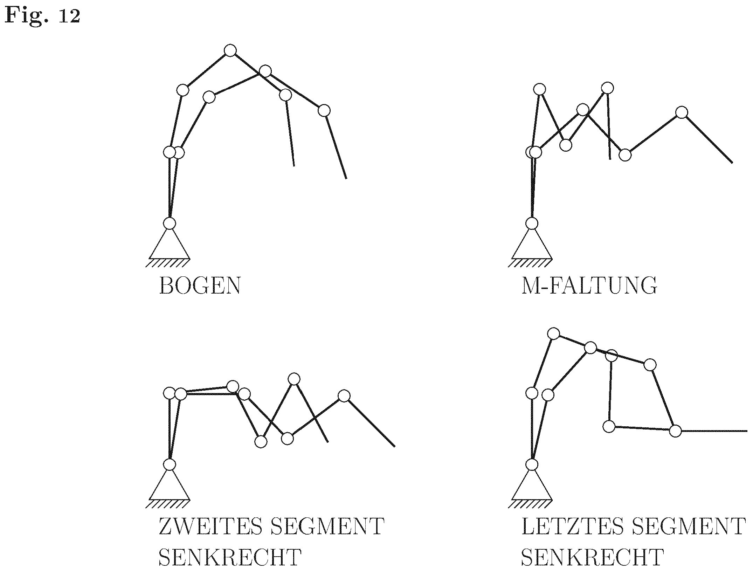

In Tabelle 1 sind Sollwinkel $^k\tilde{\theta}$ für die Konfigurationen in Fig. 12 aufgelistet. Für die Bogenfaltung sind z.B. die Sollwinkel so definiert, dass die ersten drei Segmente senkrecht nach oben und die letzten drei senkrecht nach unten weisen. Durch eine geringe Gewichtung ergibt sich damit in Verbindung mit dem Primärziel die Bogenfaltung in Fig. 12.

Durch die Gewichtung einzelner Winkel ist es außerdem möglich, definierte Gelenke bevorzugt zu bewegen. Das führt dazu, dass die Neigung des entsprechenden Segments gegenüber den Anderen bevorzugt bewegt bzw. konstant gehalten wird. Für die Bogenfaltung kann so z. B. der Sollwinkel des ersten Segments nahe an der Senkrechten gehalten werden, während die anderen Gelenke die Sollbewegung des TCP ausführen.

Neben den vorgegebenen Konfigurationen in Fig. 12, ist es außerdem für den Bediener jederzeit möglich die Position einzelner Segmente zu ändern oder eine eigene Konfiguration zu definieren. Ein Szenario ist z. B. ein Segment in einem definierten Winkel zu halten. Die Konfigurationssteuerung erhält diese Konfiguration so lange wie möglich und gibt sie nur in kritischen Situation, wie z.B. bei einem Hindernis auf. Muss die Konfiguration eines oder mehrere Segmente unter allen Umständen eingehalten werden so ist eine Beschränkung im Konfigurationsraum (siehe Abschnitt 6) besser geeignet. Damit wird die Vorgabe unbedingt eingehalten. Ein Nachgeben der Konfiguration in kritischen Situation ist dann jedoch nicht mehr gegeben.

Die Vorgabe konstanter Sollwinkel hat den Nachteil, dass sich die genaue Haltung erst durch die Optimierung ergibt. Damit ist die Konfiguration nicht von vornherein genau festgelegt. Eine Alternative ist die Sollwinkel positionsabhängig vorzugeben. Dazu wird ein eindeutiger Zusammenhang zwischen TCP-Position und Sollkonfiguration aufgestellt und in jedem Zeitschritt ein neuer Sollwinkel $^k\theta$ berechnet.

Neben der Vorgabe der Konfiguration eines Manipulators kann die Konfigurationssteuerung die für Optimierung weiterer sekundärer Ziele verwendet werden. Beispiele sind die Optimierung der Antriebsmomente, der Antriebsmomente mit Kontaktkräften, der Endeffektor Sensitivität, der Geschicklichkeit, der kinetischen Energie und der Ausfallsicherheit.

### 5.2 Vollautomatisches Ein- und Ausfalten

Die Konfigurationssteuerung aus dem vorherigen Abschnitt ermöglicht die Regulierung der Konfiguration, während eine Sollgeschwindigkeit für den TCP vorgegeben wird. Dies erfordert eine kontinuierliche Vorgabe der TCP-Geschwindigkeit durch den Bediener. Für eine vollautomatische Bewegung entfällt der Bediener. Stattdessen koordiniert ein übergeordnetes Bahnplanungsmodul den Bewegungsablauf. Dabei wird eine abgespeicherte Bahn vorgegeben, die die Bewegung in Punkt-zu-Punkt Fahrten aufteilt.

Über die Gl. (33) können Punkt-zu-Punkt Fahrten im Konfigurationsraum leicht umgesetzt werden. Dieser Ansatz kann analog auf den Aufgabenraum übertragen werden. Das Bahnplanungsmodul koordiniert den Bewegungsvorgang und schaltet beim Erreichen einer definierten Umgebung auf den nächsten Sollwert um. Dies führt zu einer flüssigen Bewegung des Manipulators und vermeidet den Stillstand auf den Zwischenpunkten.

Die typische Anwendung des autonomen Betriebs ist das automatischen Ein- und Ausfalten. Dabei wird der Manipulator aus der gefalteten Transportstellung automatisch in eine Arbeitskonfiguration oder aus einer beliebigen Arbeitskonfiguration in die Transportstellung gefahren.

Durch den Ansatz in Gl. (33) können neben der Vorgabe der Sollkonfigurationen auch die Raumanforderungen des Manipulators kontrolliert werden. Dies ist ein Vorteil gegenüber der reinen Trajektorienplanung auf Konfigurationoder Aufgabenraumebene. Außerdem werden Beschränkungen wie z.B. die Beschleunigung der Aktoren, der Durchfluss der Hydraulik oder Hindernisse im Aufgabenraum bereits durch die Geometriesteuerung berücksichtigt.

Wie bei allen lokalen Optimierungsansätzen kann es im vollautomatischen Betrieb aufgrund von lokalen Minima zu einem Abbruch der Bewegung kommen. In diesem Fall kommt der Manipulator zum Stillstand, ohne die vorgegebenen Beschränkungen zu verletzen. Dies gilt ebenfalls für unzulässige Sollwerte und Beschränkungen. Im Hinblick auf die Anwendung stellt dieser Punkt jedoch keine große Einschränkung dar, da der Bediener jederzeit eingreifen und kritische Konfigurationen beheben kann.

Der Aus- und Einfaltvorgang wird durch die Vorgabe von Sollkonfigurationen in Kombination mit einer leicht gewichteten TCP-Geschwindigkeit durchgeführt. Zur Kollisionsvermeidung der Segmente mit dem Fahrzeug sind zu Beginn des Ausfaltvorgangs eine Abfolge von Einzelbewegungen der Gelenke notwendig. Sobald der entsprechende Raum vorhanden ist, wird eine kombinierte Bewegung in die Zielkonfiguration durchgeführt. Die leichte Gewichtung der TCP-Geschwindigkeit verhindert dabei ausholende Bewegungen des TCP im Arbeitsraum. Der Ausfaltvorgang muss nicht vollständig abgewartet werden. Stattdessen kann mit der Steuerung begonnen werden, sobald der TCP frei liegt. Die Konfigurationssteuerung aus Abschnitt 5.1 übernimmt dann die Einsteuerung der gewünschten Haltung während des Betriebs.

Alle Beschränkungen werden während des Ausfaltvorgangs eingehalten. So sorgt der Algorithmus dafür, dass bei einer Wandbeschränkung (siehe Abschnitt 7.1) kein Segmentpunkt die maximale Grenze überschreitet und der Manipulator trotzdem die Endposition erreicht. Wichtig ist hierbei, dass die gewünschte Bewegung mit den gewählten Beschränkungen kompatibel ist. Das heißt, der Ausfaltvorgang muss physikalisch möglich sein. Der Manipulator bewegt sich ansonsten nur bis zur Beschränkungsgrenze.

Der Einfaltvorgang verläuft analog zum Ausfalten in umgekehrter Reihenfolge. Dieser kann dabei in einer beliebigen Anfangsposition gestartet werden. Neben einer Endkonfiguration wird außerdem eine leicht gewichtete TCP-Geschwindigkeit in Richtung der Endpose vorgegeben. Dies erleichtert den Einfaltvorgang und reduziert den benötigten Arbeitsraum des TCP. Befindet sich der TCP bereits in der gewünschten Position, so kann dieser aufgrund der geringen Gewichtung ohne Probleme Ausweichbewegungen in die Gegenrichtung durchführen.

Die gleichzeitige Vorgabe von Sollkonfigurationen und TCP-Geschwindigkeiten verbessert die Handhabbarkeit des automatischen Aus- und Einfaltens. So ist die einfache Vorgabe von Sollpositionen auf Konfigurationsebene möglich, während die TCP-Position im Aufgabenraum kontrolliert wird.

## 6 Beschränkungen im Konfigurationsraum

### 6.1 Komponentenbeschränkungen

Die Komponentenbeschränkungen (16) des Optimierungsproblems erlauben Beschränkungen der Gelenkgeschwindigkeiten $\dot{\theta}$. Um Positions- oder Beschleunigungsbeschränkungen zu berücksichtigen, müssen diese auf Geschwindigkeitsebene umgerechnet werden. Die Gelenke mit Hydraulikzylinder weisen außerdem ein Koppelgetriebe zur Umsetzung der Translationsbewegung des Zylinders in eine Rotationsbewegung auf.

Für Positionsbeschränkungen wird die maximal zulässige Geschwindigkeit berechnet, welche es erlaubt bei einer maximal zulässigen, konstanten Bremsbeschleunigung an der Positionsbeschränkung zum Stehen zu kommen.

Für eine konstante Bremsbeschleunigung $\underline{a} < 0$

$$a = \underline{a} \qquad (36)$$

ergibt sich durch Aufleiten die Geschwindigkeit während des Bremsvorgangs

$$v = at + v_0 \qquad (37)$$

und durch erneutes Aufleiten die Position

$$d = \frac{1}{2}\underline{a}t^2 + v_0 t + d_0 \qquad (38)$$

bzw. die zurückgelegte Wegstrecke

$$d - d_0 = \frac{1}{2}\underline{a}t^2 + v_0 t \qquad (39)$$

beim Bremsvorgang. Die Zeit um von einer Anfangsgeschwindigkeit $v_0$ mit konstanter Bremsbeschleunigung $\underline{a}$ zum Stillstand zu kommen beträgt mit Gl. (37)

$$0 = \underline{a}t_\mathrm{B} + v_0, \qquad (40)$$

$$t_\mathrm{B} = -\frac{v_0}{\underline{d}}. \qquad (41)$$

Das Einsetzen von Gl. (41) in (39) führt auf die zulässige Anfangsgeschwindigkeit $v_0$, um bei einem gegebenem Bremsweg $d$ - $d_0$ mit einer konstanten Bremsbeschleunigung zum Stillstand zu kommen

$$v_0 = \sqrt{-2\underline{a}(d - d_0)}. \tag{42}$$

Der Zusammenhang zwischen Gelenk- und Zylinderebene ist für einen Zylinder durch die Gln. (105) und (104) gegeben

$$d = f_d(\theta) \tag{43}$$

$$\dot{\theta} = k_\omega(\theta)v. \tag{44}$$

Die obere Positionsbeschränkung mit der maximal zulässigen Position $\overline{d}$ und der maximalen Bremsbeschleunigung $\underline{a} < 0$ ist damit durch

$$\dot{\overline{\theta}}_\theta(\theta) = \begin{cases} k_\omega(\theta)\sqrt{-2\underline{a}(\overline{d} - d)} & d \leq \overline{d}, \\ 0 & d > \overline{d} \end{cases} \tag{45}$$

festgelegt, wobei die Istposition d durch Gl. (43) berechnet wird.

Solange die aktuelle Position d innerhalb der Positionsbeschränkung liegt, bestimmt der Wert $\sqrt{2\underline{a}(\overline{d} - d)}$ die zulässige Geschwindigkeit. Dabei wird diese Geschwindigkeit so gewählt, dass bei einem Bremsvorgang mit der Beschleunigung $\underline{a}$ ein Stillstand nach der Distanz $\overline{d}$ - d erreicht wird. Wenn die maximale Position überschritten ist, wird die maximale Geschwindigkeit auf null gesetzt. Damit ist eine Bewegung in positiver Richtung nicht mehr möglich.

Die unter Positionsbeschränkungen ergibt sich analog mit der minimal zulässigen Position $\underline{d}$ und der minimalen Bremsbeschleunigung $\overline{a} > 0$

$$\underline{\dot{\theta}}_\theta(\theta) = \begin{cases} -k_\omega(\theta)\sqrt{-2\overline{a}(\underline{d} - d)} & d \geq \underline{d}, \\ 0 & d < \underline{d}. \end{cases} \tag{46}$$

Die gesamte Nebenbedingung lautet somit

$$\underline{\dot{\theta}}_\theta(\theta) \leq \dot{\theta} \leq \dot{\overline{\theta}}_\theta(\theta). \tag{47}$$

Die Geschwindigkeitsbeschränkungen sind

$$\underline{\dot{\theta}}_{\dot{\theta}}(\theta) \leq \dot{\theta} \leq \dot{\overline{\theta}}_{\dot{\theta}}(\theta), \tag{48}$$

wobei

$$\underline{\dot{\theta}}_{\dot{\theta}}(\theta) = k_\omega(\theta)\underline{v}, \tag{49}$$

$$\dot{\overline{\theta}}_{\dot{\theta}}(\theta) = k_\omega(\theta)\overline{v}. \tag{50}$$

Die Größen $\underline{v}, \overline{v}$ sind die minimal bzw. maximal zulässige Zylindergeschwindigkeit. Die Beschleunigungsbeschränkungen ergeben sich durch den Differenzenquotienten

$$\underline{a} \le \frac{v - v_{\mathrm{old}}}{\Delta t} \le \overline{a}, \qquad (51)$$

wobei $\underline{\alpha},\, \overline{\alpha}$ die maximale bzw. minimale Beschleunigung, $v_{\mathrm{old}}$ die Geschwindigkeit aus dem vorherigen Zeitschritt und $\Delta t$ die Schrittweite darstellt.

Das Umstellen der Beschränkung (51) auf die Form (16) und Transformation auf Gelenkgeschwindigkeiten führt auf

$$\underline{\dot{\theta}}_{\ddot{\theta}}(\theta) \le \dot{\theta} \le \overline{\dot{\theta}}_{\ddot{\theta}}(\theta), \qquad (52)$$

mit

$$\underline{\dot{\theta}}_{\ddot{\theta}}(\theta) = k_{\omega}(\theta)(\underline{a}\Delta t + v_{\mathrm{old}}), \qquad (53)$$

$$\overline{\dot{\theta}}_{\ddot{\theta}}(\theta) = k_{\omega}(\theta)(\overline{a}\Delta t + v_{\mathrm{old}}). \qquad (54)$$

Die Beschränkungen (47), (48) und (52) wirken alle auf Geschwindigkeitsebene. Sie werden deshalb zu einer Geschwindigkeitsbeschränkung (ohne Argumente)

$$\underline{\dot{\theta}} \le \dot{\theta} \le \overline{\dot{\theta}}, \qquad (55)$$

mit

$$\overline{\dot{\theta}} = \min\left\{ \overline{\dot{\theta}}_{\theta},\ \overline{\dot{\theta}}_{\dot{\theta}},\ \overline{\dot{\theta}}_{\ddot{\theta}} \right\}, \qquad (56)$$

$$\underline{\dot{\theta}} = \max\left\{ \underline{\dot{\theta}}_{\theta},\ \underline{\dot{\theta}}_{\dot{\theta}},\ \underline{\dot{\theta}}_{\ddot{\theta}} \right\} \qquad (57)$$

zusammengefasst.

Um die Konsistenz der Beschränkungen (55) zu gewährleisten, müssen die Grenzen der Positionsbeschränkung (47) kleiner oder gleich denen der Beschleunigungsbeschränkungen (52) gewählt werden. Im Falle einer positionsbedingten Bremsung sind damit die benötigten Beschleunigungen zulässig. In der Simulation hat sich gezeigt, dass es aufgrund von numerischen Ungenauigkeiten zu Inkonsistenzen kommen kann. Bei einer aktiven Positionsbeschränkung (47) muss deshalb sichergestellt werden, dass die Beschleunigungsbeschränkung (52) die benötigte Beschleunigung zulässt.

Die Beschränkung (55) wird auf die Gelenke $\boldsymbol{\theta} \in \mathbb{R}^5$ des Manipulators mit Antriebszylinder angesetzt und führt auf eine Ungleichungsnebenbedingung der Form (16).

Für die Drehung um die Hochachse können dieselben Beschränkungen rein auf Gelenkebene angewendet werden. Dabei entfällt die Umrechnung der Gelenkposition in eine Zylinderposition und die Rückrechnung der zulässigen Zylindergeschwindigkeit in eine Gelenkgeschwindigkeit. Stattdessen werden die Größen direkt auf Gelenkebene verwendet.

Analog zur Hochachse können die Beschränkungen auf Gelenkebene auch für andere Gelenke verwendet werden. Hierbei wird jedoch die Kinematik der Koppelgetriebe vernachlässigt und das Potential des Zylinderaktors nicht vollständig ausgeschöpft.

## 6.2 Durchflussbeschränkung der Hydraulik

Die Performance der TCP-Steuerung ist stark von der Leistungsfähigkeit der Hydraulik abhängig. Im Normalfall wird die Hydraulik der Autobetonpumpe so ausgelegt, dass höchstens drei Aktoren gleichzeitig mit maximaler Geschwindigkeit verfahren können. Damit kann der erforderliche Volumenstrom der Hydraulik und somit der Energieverbrauch und die Pumpengröße gering gehalten werden. Demgegenüber steht die optimierungsbasierte Geometriesteuerung, die für eine kontinuierliche TCP-Bewegung meist alle verfügbaren Aktoren gleichzeitig ansteuert. Dies führt besonders in der Nähe von Singularitäten dazu, dass für die angeforderte Bewegung nicht genügend Volumenstrom zu Verfügung steht. Das Resultat ist eine Fehlansteuerung des Manipulators, wobei physikalisch bedingt der am wenigsten belastete Aktor den größten Anteil des Volumenstroms erhält. Die Geschwindigkeitsbeschränkung der Gelenke (48) kann die Unterversorgung nicht verhindern, da nur der Durchfluss der einzelnen Aktoren und nicht die Summe aus allen Volumenströmen beschränkt wird.

Nachfolgend wird die Durchflussbeschränkung für das lokale Optimierungsproblem aus Abschnitt 3.1 des Systems Autobetonpumpe hergeleitet.

Der Gesamtdurchfluss eines hydraulischen Systems beträgt

$$Q_h = \sum_i Q_i, \quad i = 1, \ldots n, \tag{58}$$

wobei $Q_i$ den Durchfluss der Einzelverbraucher und $n$ die Anzahl der aktiven Gelenke darstellt. Die Autobetonpumpe weist einen Hydromotor für die Drehung um die Hochachse und fünf Differentialzylinder für die Bewegung in der vertikalen Ebene auf.

Der Durchfluss eines Hydraulikmotors ist

$$Q_{hm} = \frac{rV_n}{2\pi\eta_{hm}}|\dot{\theta}_0|, \tag{59}$$

wobei r das Übersetzungsverhältnis des Getriebes, $V_n$ das Nennvolumen und $\eta_n$ den Wirkungsgrad darstellt.

Der Durchfluss eines Hydraulikzylinders ist vom Kolbenquerschnitt und der Zylindergeschwindigkeit abhängig

$$Q_i = A_{zi}|v_i|, \tag{60}$$

wobei $A_{zi}$ der Kolbenquerschnitt, $v_{zi}$ die Zylindergeschwindigkeit ist.

Die Kolbenfläche der Zylinder unterscheidet sich außerdem kolben- und stangenseitig. Dies führt dazu, dass der Kolbenquerschnitt von dem Vorzeichen der Zylindergeschwindigkeit abhängt

$$A_{zi}(v_i) = \begin{cases} A_{zki}, & \text{wenn } v_i \geq 0, \\ A_{zsi}, & \text{wenn } v_i < 0, \end{cases} \tag{61}$$

wobei $A_{zki}$, $A_{zsi}$ die kolben- und stangenseitige Fläche des Zylinders darstellt. Durch eine konservative Abschätzung kann die Unterscheidung der Kolbenflächen vermieden werden. In diesem Fall wird die kleinere stangenseitige Fläche für beide Geschwindigkeitsrichtungen angenommen

$$A_{zi} = A_{si}. \tag{62}$$

Die Gelenkgeschwindigkeit in Abhängigkeit von der Zylindergeschwindigkeit berechnet sich über die Gelenkkinematik (104)

$$\dot{\theta}_i = k_{\omega i}(\theta_i)v_i. \tag{63}$$

Der gesamte Volumenstrom ergibt sich durch das Einsetzen der Gln. (59), (60) und (63) in (58)

$$Q_h = k_{h0}|\dot{\theta}_0| + \sum_{i=1}^n k_{hi}|\dot{\theta}_i| \tag{64}$$

mit

$$k_{\mathrm{h0}} = \frac{rV_n}{2\pi\eta_{\mathrm{hm}}}, \tag{65}$$

$$k_{\mathrm{h}i} = \frac{A_{zi}}{k_{\omega i}(\theta_i)}. \tag{66}$$

Die Durchflussbeschränkung ist somit

$$k_{\mathrm{h0}}|\dot{\theta}_0| + \sum_{i=1}^{n} k_{\mathrm{h}i}|\dot{\theta}_i| \leq \overline{Q}_{\mathrm{h}}(n_{\mathrm{m}}), \tag{67}$$

wobei $\overline{Q}_{\mathrm{h}}$ den maximalen Volumenstrom des Hydrauliksystems und $n_m$ die Drehzahl des Pumpenantriebs darstellt. Der verfügbare Volumenstrom ist im Falle der Autobetonpumpe von der Drehzahl des Nebenantriebs und dem veränderlichen Verdrängungsvolumen der Axialkolben-Verstellpumpe abhängig. Der Bediener gibt über die Fernsteuerung die Drehzahl des Nebenantriebs vor. Das veränderliche Verdrängungsvolumen wird über Schrägscheiben von dem Load-Sensing System eingestellt. Das Load-Sensing System sorgt dafür, dass ein von der Last unabhängiger Volumenstrom vorliegt und somit die Geschwindigkeit lastunabhängig gestellt werden kann. Die Dynamik des Load-Sensing Systems wird als ausreichend schnell angenommen, sodass dessen Einfluss vernachlässigt werden kann. Kleinere Schwankungen in der Antriebsgeschwindigkeit werden außerdem durch die unterlagerte Achsregelung hinter der Geometriesteuerung ausgeglichen. Unter der Voraussetzung, dass keine Unterversorgung auftritt, ist somit der maximale Volumenstrom nur von der Drehzahl des Pumpenantriebs abhängig

$$\overline{Q}_{\mathrm{h}} = f_{\mathrm{hydr}}(n_{\mathrm{m}}). \tag{68}$$

Durch den iterativen Algorithmus der TCP-Steuerung (siehe Abschnitt 3.2) wird die Abhängigkeit von der Drehzahl in jedem Zeitschritt neu berücksichtigt.

**6.3 L1-Norm Beschränkungen**

Die Beschränkung (67) stellt eine gewichtete L1-Norm der Form

$$a_1|x_1| + a_2|x_2| + \cdots + a_n|x_n| \leq b \tag{69}$$

dar und muss im Optimierungsproblem gesondert betrachtet werden.

Die Beschränkung (69) ist nicht stetig differenzierbar und kann somit nicht direkt im Optimierungsproblem berücksichtigt werden.

Da das Optimierungsproblem im vorliegenden Fall nur eine geringe Anzahl Optimierungsvariablen aufweist $(\boldsymbol{\theta} \in \mathbb{R}^6)$, kann die L1-Norm Beschränkung (69) mit relativ einfachen Methoden in eine Menge von linearen Beschränkungen umgeformt werden. Dazu werden nachfolgend zwei mögliche Verfahren vorgestellt.

Das erste Verfahren basiert auf der naiven Auflösung der Beträge in Gl. (69). Dadurch ergibt sich eine lineare Beschränkung für jede mögliche Kombination an Vorzeichen der Optimierungsvariable. So führt z.B. die Transformation der L1-Norm Beschränkungen mit drei Optimierungsvariablen auf die linearen Nebenbedingungen

$$+a_1 x_1 + a_2 x_2 + a_3 x_3 \leq b,$$

$$-a_1 x_1 + a_2 x_2 + a_3 x_3 \leq b,$$

$$+a_1 x_1 - a_2 x_2 + a_3 x_3 \leq b,$$

$$+a_1 x_1 + a_2 x_2 - a_3 x_3 \leq b,$$

$$-a_1 x_1 - a_2 x_2 + a_3 x_3 \le b,$$

$$-a_1 x_1 + a_2 x_2 - a_3 x_3 \le b,$$

$$+a_1 x_1 - a_2 x_2 - a_3 x_3 \le b,$$

$$-a_1 x_1 - a_2 x_2 - a_3 x_3 \le b.$$

Eine optimale Lösung mit diesen Nebenbedingungen erfüllt somit auch die Bedingung (69). Das Verfahren ist unter dem Begriff sequentielle Vorzeichenbedingungen bekannt. Die Umformung führt auf $2^n$ zusätzliche lineare Beschränkungen. Im Falle der Geometriesteuerung bedeutet dies $2^6 = 64$ zusätzliche Nebenbedingungen.

Das sequentielle Auflösen der LI-Norm führt in Abhängigkeit von der Dimension der Optimierungsvariable zu einer exponentiell wachsenden Anzahl an Nebenbedingungen. Bei größeren Optimierungsaufgaben entsteht dadurch eine ineffiziente Problemformulierung. Eine andere Möglichkeit ist die L1-Norm durch Einführen zusätzlicher Optimierungsvariablen aufzulösen.

Zu diesem Zweck wird neben den Optimierungsvariablen $x \in R^n$ die gleiche Anzahl an Hilfsvariablen $s \in \mathbb{R}^n$ eingeführt und ein erweitertes Optimierungsproblem mit den Variablen $\hat{x} = [x^T \ s^T]^T$ und den zusätzlichen Bedingungen

$$a_1 s_1 + a_2 s_2 + \cdots + a_n s_n \le b, \qquad\qquad (70)$$

$$-s \le x \le s, \qquad\qquad (71)$$

mit den Komponenten $s_i$ von s aufgestellt. Die Hilfsvariablen werden durch einen zusätzlichen Regularisierungsterm $||x|| W_s$ in der Zielfunktion minimiert. Das Vorgehen verdoppelt die Anzahl der Optimierungsvariablen, die Anzahl der Nebenbedingungen ist jedoch auf $2n + 1$ Nebenbedingungen beschränkt. Dabei ist zu beachten, dass die Bedingungen in Gl. (71) $2n$ Beschränkungen im Optimierungsproblem bilden. Für die Geometriesteuerung der Autobetonpumpe ergeben sich somit 6 zusätzliche Optimierungsvariablen und 7 zusätzliche Nebenbedingungen.

Der Vorteil des vorgestellten Verfahrens besteht darin, dass keine degenerativen Nebenbedingungen auftreten.

Die Beschränkungen aus der sequentiellen Vorzeichenbedingungen oder dem erweiterten Optimierungsproblem ergeben zusammengefasst die Form (18)

$$C_{\mathrm{h}}(\boldsymbol{\theta})\dot{\boldsymbol{\theta}} \le \overline{\boldsymbol{Q}}_{\mathrm{h}}, \qquad\qquad (72)$$

wobei sich die Dimensionen entsprechend der gewählten Methode ergeben.

Die obigen Ausführungen zeigen, dass die Integration der L1-Norm in das Optimierungsproblem einen erhöhten Berechnungsaufwand bedeutet. Simulative Untersuchungen mit der Geometriesteuerung haben gezeigt, dass zwischen beiden Verfahren nur ein geringer Performance-Unterschied besteht. So ist die sequentielle Vorzeichenbedingung ca. 1.1mal schneller als die Methode der Hilfsvariablen.

### 6.3.1 Bemerkungen

Statt des Durchflusses kann ebenfalls die Leistung der Hydraulik beschränkt werden. Dafür muss neben dem Gesamtdurchfluss auch der Öldruck vorliegen. Die hydraulische Leistung definiert sich durch

$$L_{\mathrm{h}} = p Q_{\mathrm{h}}, \qquad\qquad (73)$$

wobei p der Hydraulikdruck und $Q_{\mathrm{hydr}}$ den Gesamtvolumenstrom aller Aktoren darstellt. Neben der Gesamtdurchflussbeschränkung (67) kann auch der Durchfluss der einzelnen Aktoren beschränkt werden

$$\underline{Q}_{\mathrm{h,i}} \le k_{\mathrm{h}i}\dot{\theta}_i \le \overline{Q}_{\mathrm{h},i}, \quad i = 0, \ldots, 5, \qquad\qquad (74)$$

wobei $\underline{Q}_{h,i}$, $\overline{Q}_{h,i}$ den minimal und maximal zulässigen Volumenstrom für Aktor i definiert. Die Hydraulik der Betonpumpe verwendet ein Load-Sensing-System. Somit ist der Volumenstrom eines Aktors proportional zu dessen Geschwindigkeit. Die individuelle Durchflussbeschränkung pro Aktor ist somit eine andere Form der Geschwindigkeitsbeschränkung (110).

## 7 Beschränkungen im Aufgabenraum

Die Bedingungen (17) erlauben die Integration von Beschränkungen im Aufgabenraum. Damit kann bezüglich eines fahrzeugfesten Koordinatensystems die Geschwindigkeit eines beliebigen Punkts auf dem Manipulator innerhalb definierter Werte gehalten werden. So stellt z. B. eine virtuelle Wand eine Begrenzung im Aufgabenraum dar, die der Manipulator nicht überschreiten darf.

Wie bei den Beschränkungen im Konfigurationsraum müssen Beschränkungen der Position und Beschleunigung in entsprechende Anforderungen auf Geschwindigkeitsebene umgerechnet werden. Die so berechneten zulässigen Geschwindigkeiten sind im Aufgabenraum definiert. Die Optimierungsvariablen werden über die Jacobi-Matrix in den Aufgabenraum transformiert und mit den zulässigen Geschwindigkeiten in eine definierte Richtung verglichen.

Im Ausführungsbeispiel der vorliegenden Erfindung werden allgemeine Ungleichungsbeschränkungen im Aufgabenraum zur Kollisionsvermeidung eingesetzt. Das Verfahren ist durch eine beschränkte Anlaufgeschwindigkeit motiviert, die eine physikalische Interpretation der Beschränkungen zulässt.

Das Ziel der Kollisionsvermeidung ist den Zusammenstoß eines beliebigen Punkts auf dem Manipulator mit einem Hindernis zu vermeiden. Die Geschwindigkeit des kritischen Punkts soll dabei so beschränkt werden, dass der Manipulator oder das Segment zu jeder Zeit mit einer definierten Bremsbeschleunigung vor dem Hindernis zum Stehen kommen. Die Geschwindigkeiten, die nicht in Richtung des Hindernisses zeigen, erfahren keine Beschränkung. Der Ansatz ist durch allgemeine Ungleichungsbeschränkungen im Aufgabenraum definiert. Diese werden im Optimierungsproblem durch Nebenbedingungen berücksichtigt.

Die Ungleichungsbeschränkungen weisen eine Reihe von Vorteilen auf. So ist die Beschränkung nur aktiv, wenn ein Kollisionskurs vorliegt. Der Optimierungsalgorithmus stellt dabei eine effiziente Verwaltung von aktiven und inaktiven Beschränkungen sicher. Im Fall eines Kollisionskurses werden die redundanten Freiheitsgrade des Manipulators genutzt, um den Zusammenstoß mit dem Hindernis zu vermeiden, ohne die Geschwindigkeitsvorgabe des Bedieners zu beeinflussen. Übersteigt die Anzahl der Beschränkungen die redundanten Freiheitsgrade, so wird eine optimale Lösung im Sinne des geringsten quadratischen Fehlers unter Einhaltung der Beschränkungen berechnet. Die Beschränkungen werden dabei unbedingt eingehalten. In kritischen Situationen bedeutet dies das Aufgeben der Bedienervorgaben, um die Beschränkungen einzuhalten. Der Manipulator kommt damit eventuell zum vollständigen Stillstand, um nicht mit dem Hindernis zu kollidieren. Dies ist ein Vorteil gegenüber Verfahren mit Kollisionsvermeidung in der Zielfunktion. Die Ungleichungsbeschränkung ermöglicht außerdem das Fahren entlang der Kante eines Hindernisses. Da nur die Anlaufgeschwindigkeiten gegen das Hindernis beschränkt ist, ist die Bewegung entlang der Kante durch eine orthogonale Geschwindigkeit ohne Einschränkungen möglich.

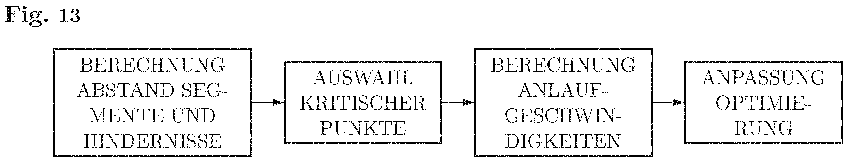

Für die Kollisionsvermeidung werden folgende Annahmen getroffen. Der Manipulator ist aus geraden Linienabschnitten aufgebaut. Die endliche Ausdehnung der realen Segmente wird durch einen zusätzlichen Sicherheitsabstand um das Hindernis berücksichtigt. Durch die Kinematik der Betonpumpe können eckige Hindernisse im Aufgabenraum immer auf planare Polygone in der vertikalen Ebene des Manipulators zurückgeführt werden. Aus diesem Grund wird die Kollisionsvermeidung nur für einen planaren Manipulator in einem zweidimensionalen Aufgabenraum dargestellt. Damit können viele praktische Problemstellungen wie z.B. virtuelle Decken gelöst werden. Die planaren Hindernisse werden als stationäre Polygone angenommen und befinden sich immer in der vertikalen Manipulatorebene. Ein Polygon setzt sich aus mehreren Strecken zusammen, die an den Endpunkten miteinander verbunden sind und eine konvexe Menge einschließen. Der Algorithmus der Kollisionsvermeidung gliedert sich in die folgenden Schritte (siehe Fig. 13):

1. Berechnung der Distanz von allen Segmenten zu allen Hindernissen,

2. Bestimmung der kritischen Punkte zwischen Manipulator und Hindernis,

3. Berechnung der Anlaufgeschwindigkeiten: Geschwindigkeit der kritischen Punkte des Manipulators in Richtung des Hindernisses,

4. Berücksichtigung der Aufgabenraumbeschränkungen im Optimierungsproblem.

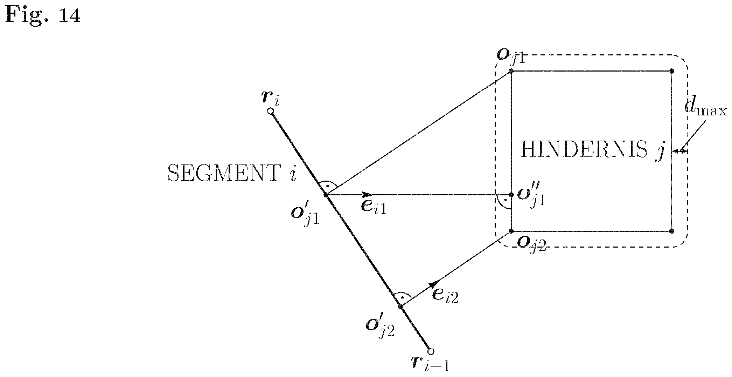

Die kritischen Punkte auf Manipulator und Hindernis werden durch die doppelte Projektion gewonnen (siehe Fig. 14). Die doppelte Projektion berechnet im ersten Schritt die kritischen Manipulatorpunkte $o'_{jk}$, die den kürzesten Abstand zu den Eckpunkten des Hindernisses j aufweisen (für die Berechnung des kürzesten Abstands von Punkt zu Strecke siehe Anhang 9.5). Aus der Menge der Punkte werden die kritischen Punkte $o'_{jk}$ mit dem kürzesten Abstand $d(o_{jk}, o'_{jk})$

ausgewählt. Mit den Punkten werden im zweiten Schritt die kritischen Hindernispunkte $o''_{jk}$ berechnet. Sie sind die Punkte auf den Kanten des Hindernisses, die den kürzesten Abstand zu den kritischen Manipulatorpunkten $o'_{jk}$ aufweisen. Aus der Menge der Punkte werden erneut die kritischen Punkte $o''_{jk}$ mit dem kürzesten Abstand $d_{ck}(o'_{jk}, o''_{jk})$ ausgewählt. Es ergeben sich somit Paare von kritischen Punkten auf Segment und Hinderniskante mit den entsprechenden Abständen $d_{ck}$.

In Fig. 14 ist das Resultat der doppelten Projektion für ein rechteckiges Hindernis j, ein Segment i und $k = 2$ kritische Punkte aufgezeigt. Es ergeben sich im ersten Schritt die kritischen Punkte $o'_{j1}$ und $o'_{j2}$. Sie werden im zweiten Schritt auf die Kanten des Hindernisses zurückprojiziert und ergeben die kritischen Hindernispunkte $o''_{j1}$ und $o''_{j2} = o_{j2}$. Für letzteren Punkt ergibt sich dabei wieder die ursprüngliche Hindernisecke $o_{j2}$. Die Vorteile der doppelten Projektion werden im unteren Abschnitt erläutert.

Die Geschwindigkeit eines kritischen Manipulatorpunkts im Aufgabenraum berechnet sich mit dem Vektor

$$\boldsymbol{p}_{ik} = \boldsymbol{o}''_{jk} - \boldsymbol{r}_i \qquad (75)$$

und der entsprechenden Jacobi-Matrix zu

$$\boldsymbol{v}_{cik} = \boldsymbol{J}_{ik}(\boldsymbol{q})\boldsymbol{\theta}. \qquad (76)$$

Von Geschwindigkeit $v_{cik}$ wird der Anteil in Richtung des kritischen Punkts $o''_{jk}$, die Anlaufgeschwindigkeit $v_{aik}$ berechnet. Dazu wird $v_{cik}$ auf den Einheitsvektor von $o'_{jk}$ nach $o''_{jk}$ projiziert (vlg. Fig. 14)

$$v_{aik} = \boldsymbol{e}_{ik} \cdot \boldsymbol{v}_{ik} = \boldsymbol{J}_{aik}\boldsymbol{\theta}, \qquad (77)$$

$$\boldsymbol{e}_{ik} = \frac{\boldsymbol{o}''_{jk} - \boldsymbol{o}'_{jk}}{\|\boldsymbol{o}''_{jk} - \boldsymbol{o}'_{jk}\|}, \qquad (78)$$

wobei $v_{aik} \in \mathbb{R}$ und $\boldsymbol{J}_{aik} = \boldsymbol{e}_{ik} \cdot \boldsymbol{J}_{ik} \in \mathbb{R}^{1 \times n}$.

Die Anlaufgeschwindigkeit stellt die Geschwindigkeit der kritischen Manipulatorpunkte in Richtung der Hindernisse dar. Sie wird somit durch

$$v_{aik} \le \overline{v}_{ik}(d_{ck}) \qquad (79)$$

beschränkt, wobei die maximal zulässige Geschwindigkeit $\overline{v}_{ik}$ von dem Abstand $d_{ck}$ abhängig ist. Das Einsetzen von Gl. (77) in (79) liefert eine lineare, skalare Ungleichungsbeschränkung im Aufgabenraum

$$\boldsymbol{J}_{aik}\boldsymbol{\theta} \le \overline{v}_{ik}(d_{ck}). \qquad (80)$$

Die doppelte Projektion hat den Vorteil, dass Geschwindigkeitsbeschränkungen auf eine Hindernisecke in eine Beschränkung auf die Hinderniskante transformiert werden. In

Fig. 14 wird die Richtung $o_{j1}$ - $o'_{j2}$ auf die Hindernisecke in die Richtung $o'_{j1}$ - $o''_{j2}$ gewandelt. Dadurch ist eine unbeschränkte Fahrt des Segments parallel zur Hinderniskante möglich. Dies ist besonders dann relevant, wenn das Segment die parallele Fahrt an der Ecke $o_{j1}$ vorbei fortführt. Der Hindernisbereich wird dabei ohne Beschränkung der Geschwindigkeit verlassen. Kann die Richtung auf eine Hindernisecke aufgrund der Geometrie nicht transformiert werden, so ergibt sich durch die doppelte Projektion wieder die ursprüngliche Richtung. Dies ist in Fig. 14 für $o_{j2}$ zu sehen.

Die zulässige maximale Geschwindigkeit $\overline{v}_{ik}(d_{ck})$ wird analog zu Abschnitt 6 berechnet. Statt auf Zylinderebene, sind die Geschwindigkeiten im Aufgabenraum in Abhängigkeit des Abstands $d_{ck}$ definiert. Damit lassen sich Positions-, Geschwindigkeits- und Beschleunigungsbeschränkungen im Aufgabenraum realisieren.

Positionsbeschränkungen im Aufgabenraum sind analog zu Gl. (45) durch die maximale zulässige Geschwindigkeit

$$\overline{v}_{\mathrm{p}}(d) = \begin{cases} \sqrt{-2\overline{a}(d - d_{\max})} & d \le d_{\max}, \\ 0 & d > d_{\max}, \end{cases} \qquad (81)$$

definiert, wobei $\overline{a}$ die maximale Bremsbeschleunigung, d den Abstand zum Hindernis und $d_{\max}$ den Sicherheitsabstand zum Hindernis im Aufgabenraum darstellt.

Der Sicherheitsabstand $d_{\max}$ ergibt sich aus der Segmentform. Außerdem können Unsicherheiten in der Position und der Platzbedarf von transienten Restschwingungen des Manipulators berücksichtigt werden.

Die maximal zulässige Bremsbeschleunigung $\overline{a}$ muss kleiner oder gleich der physikalisch möglichen Bremsbeschleunigung gesetzt werden. Durch die nichtlineare Kinematik ist dabei eine Transformation der Beschleunigungen vom Konfigurationsraum auf den Aufgabenraum nicht möglich, da dabei kein konsistenter Bremsvorgang gewährleistet wird. Neben den Positionsbeschränkungen können Geschwindigkeits- und Beschleunigungsbeschränkungen analog zu Abschnitt 6 für beliebige Manipulatorpunkte implementiert werden. Die Jacobi-Matrix muss dabei auf den jeweiligen Punkt abgestimmt werden. Die Geschwindigkeitsbeschränkung kann z.B. zur Einhaltung der gesetzlich vorgeschriebenen maximalen TCP-Geschwindigkeit eingesetzt werden.

Mehrere Ungleichungsbeschränkungen der Form (80) werden zu einer Ungleichungsbedingung

$$\boldsymbol{J}_{\mathrm{a}}\boldsymbol{\theta} \le \overline{\boldsymbol{v}} \qquad (82)$$

mit $\boldsymbol{J}_{\mathrm{a}} \in \mathbb{R}^{p \times n}$ und $\overline{\boldsymbol{v}} \in \mathbb{R}^p$. Die Jacobi-Matrix J ergibt sich dabei durch schichten der Zeilenvektoren $J_{aik}$ aus Gl. (77).

Nachfolgend wird auf spezielle Beschränkungen im Aufgabenraum eingegangen. Dazu gehören Wandbeschränkungen zur Berücksichtigung von virtuellen Wänden, Standsicherheitsbeschränkungen und allgemeine Hindernisse.

7.1 Wandbeschränkungen

Wandbeschränkungen sind eine Sonderform der im vorherigen Abschnitt beschriebenen Positionsbeschränkungen. Durch ihre spezielle Form ergeben sich wesentliche Vereinfachungen im Algorithmus der Kollisionsvermeidung aus Abschnitt 7.

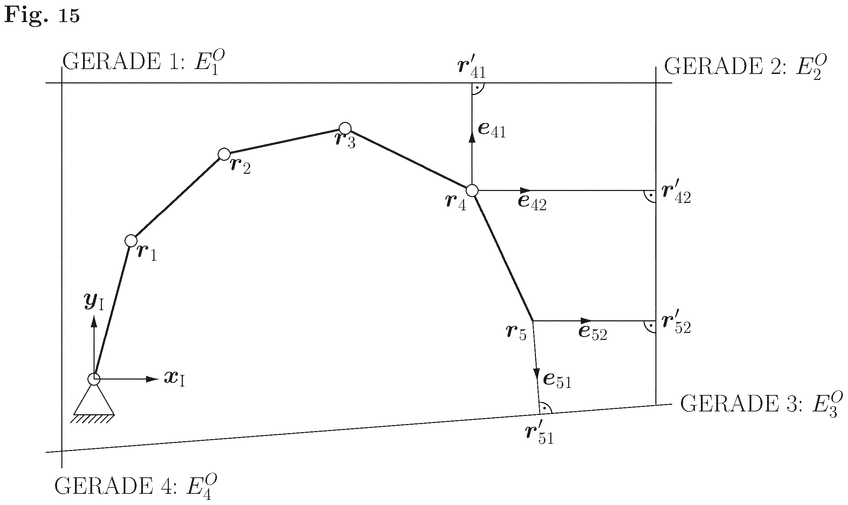

Die Wände werden durch Geraden im Aufgabenraum dargestellt (siehe Fig. 15). Eine Gerade ist eine gerade und unendliche lange Linie. Die innere Menge aller Geraden definiert dabei eine konvexe Menge. Dies gilt auch, wenn z. B. bei einer Gerade die Menge nicht abgeschlossen ist. Der Manipulator befindet sich innerhalb dieser konvexen Menge und ist in beliebige Richtung entweder unbeschränkt oder durch eine Gerade $E_j^O$ limitiert.

Durch den konvexen Innenraum ist es für die Kollisionsvermeidung ausreichend nur die Gelenkpunkte $r_i$, $i = 1,...,$ 5 (vgl. Fig. 15) auf Kollision zu überprüfen. Damit entfällt die im vorherigen Abschnitt beschriebene doppelte Projektion zur Abstandsbestimmung. Stattdessen genügt eine einfache Projektion (siehe Anhang 9.4) der Manipulatorpunkte $r_i$ auf alle Geraden $E_j^O$. Aus der Menge aller Projektionspunkte werden pro Gelenk $m_k = 2$ kritische Hindernispunkte $r'_{ik}$, $k = 1,...,$ $m_k$ mit dem kürzesten Abstand $d_{ck}(r_i, r'_{ik})$ ausgewählt. In Fig. 15 ergeben sich z.B. für den TCP $r_5$ die kritischen Hindernispunkte $r'_{51}$ und $r'_{52}$ auf den Geraden $E_3^O$ und $E_2^O$.

Mit den Einheitsvektoren

$$\boldsymbol{e}_{ik} = \frac{\boldsymbol{r}'_{jk} - \boldsymbol{r}_{jk}}{\|\boldsymbol{r}'_{jk} - \boldsymbol{r}_{jk}\|} \qquad (83)$$

lauten die Ungleichungsbedingungen analog zu Abschnitt 7

$$\boldsymbol{J}_{\mathrm{aw}}\boldsymbol{\theta} \le \overline{\boldsymbol{v}}_{\mathrm{w}}, \qquad (84)$$

wobei $\boldsymbol{J}_{\mathrm{aw}} \in \mathbb{R}^{m_{\mathrm{w}} \times n}$, $\overline{\boldsymbol{v}}_{\mathrm{w}} \in \mathbb{R}^{m_{\mathrm{w}}}$. Die Dimension der Nebenbedingungen $m_{\mathrm{w}}$ ist dabei durch die Anzahl der Gelenkpunkte $n = 5$ und die Anzahl an Bedingungen pro Gelenkpunkt $m_k = 2$ bestimmt

$$m_{\mathrm{w}} = n \cdot m_k = 10. \qquad (85)$$

Die Wahl von $m_k = 2$ Beschränkungen pro Gelenkpunkt stellt sicher, dass ein konsistenter Abbremsvorgang mit einer definierten Beschleunigung $\overline{\alpha}$ durchgeführt wird. Ansonsten kommt es bei Annäherung von Eckpunkten zu sprunghaften Wechseln in den Wandbeschränkungen, die einen Sprung im Geschwindigkeitsverlauf des Manipulators zur Folge haben.

Die Anzahl und die Orientierung der Geraden ist beliebig. So kann eine einfache Decke oder komplex geformte Innenräume berücksichtigt werden. Die Anzahl der Geraden ist dabei unabhängig von der Anzahl $m_k$ der Nebenbedingungen im Optimierungsproblem. Der Aufwand der Abstandsbestimmung steigt jedoch, da zur Bestimmung der kritischen Punkte alle Geraden überprüft werden müssen.

### 7.2 Standsicherheitsbeschränkungen

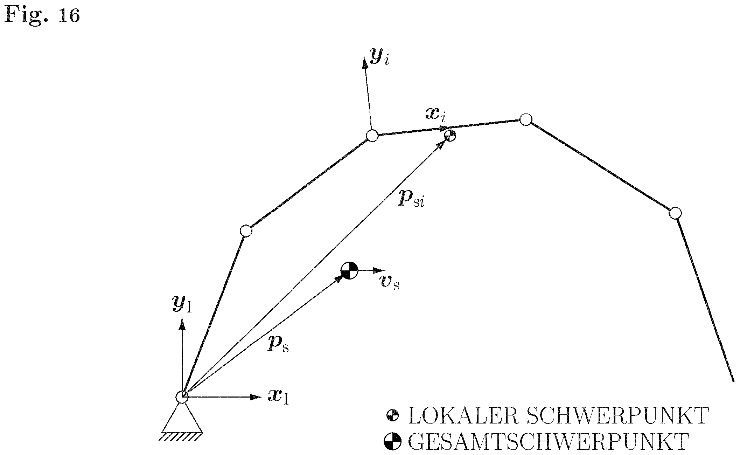

Neben der räumlichen Beschränkung von beliebigen Punkten ist es ebenfalls möglich, virtuelle Punkte des Manipulators zu begrenzen. Einen solchen Fall stellt die Standsicherheitsbeschränkung dar. Dabei wird der virtuelle Gesamtschwerpunkt des Manipulators in die x-Richtung des fahrzeugfesten Koordinatensystems beschränkt, um die Standsicherheit des Fahrzeugs zu erhalten (siehe Fig. 16).

Die Positionsbeschränkung des Gesamtschwerpunkts ist eine spezielle Form der Wandbeschränkung aus Abschnitt 7.1. Da die Beschränkung nur in Richtung der $x_0$-Achse des Inertialkoordinatensystems aktiv ist vereinfacht sich die Abstandsbestimmung.

Die Position des Gesamtmassenschwerpunkts für ein Mehrkörpersystem berechnet sich zu

$$\boldsymbol{p}_{\mathrm{s}} = \frac{1}{M} \sum_i m_i \boldsymbol{p}_{\mathrm{s}i}, \quad i = 1, \ldots, N, \qquad (86)$$

wobei $p_{\mathrm{s}i}$ die Position des Einzelschwerpunkts, $m_i$ die Masse der Einzelkörper und $M = \Sigma_i m_i$ die Gesamtmasse aller Körper ist. Die Positionen sind bezüglich eines gemeinsamen Koordinatensystems definiert.

Die Geschwindigkeit des Gesamtschwerpunkts $v_s$ im Aufgabenraum berechnet sich über die Geschwindigkeit des Einzelmassenschwerpunkts $v_{\mathrm{s}i}$ der Segmente. Die Geschwindigkeit eines beliebigen Einzelmassenschwerpunkts mit der Position $p_{\mathrm{s}i}$ im globalen Koordinatensystem ($i$) ergibt sich zu

$$\boldsymbol{v}_{\mathrm{s}i} = \boldsymbol{v}_i + \tilde{\boldsymbol{\omega}}_i \boldsymbol{p}_{\mathrm{s}i} = \begin{bmatrix} \boldsymbol{I} - \boldsymbol{p}_{si} \end{bmatrix} \begin{bmatrix} \boldsymbol{v}_i \\ \boldsymbol{\omega}_i \end{bmatrix}, \qquad (87)$$

wobei $(\tilde{*})$ den schiefsymmetrischen Rösselsprung-Operator, $v_i$, $\omega_i$ die translatorische und rotatorische Geschwindigkeit des vorhergehenden Gelenks und I die Einheitsmatrix darstellt. Mit der Jacobi-Matrix der Translation und Rotation des jeweiligen Segments i ergibt sich damit

$$\boldsymbol{v}_{\mathrm{s}i} = \underbrace{\begin{bmatrix} \boldsymbol{I} - \tilde{\boldsymbol{c}} \end{bmatrix} \begin{bmatrix} \boldsymbol{J}_v^i(\boldsymbol{q}) \\ \boldsymbol{J}_\omega^i(\boldsymbol{q}) \end{bmatrix}}_{\boldsymbol{J}_{\mathrm{s}}^i(\boldsymbol{q})} \dot{\boldsymbol{q}}. \qquad (88)$$

Die Lage und Geschwindigkeit des Massenschwerpunkts des vollständigen Manipulators ergibt sich als gewichtete Summe der Einzelschwerpunkte der Körper. Die Zeitableitung von Gl. (86) führt auf

$$\boldsymbol{v}_{\mathrm{s}} = \frac{1}{M} \sum_i m_i \boldsymbol{v}_{\mathrm{s}i}. \qquad (89)$$

Das Einsetzen von Gl. (88) in (89) ergibt

$$\boldsymbol{v}_{\mathrm{s}} = \underbrace{\frac{1}{M} \sum_i m_i \boldsymbol{J}_{\mathrm{s}}^i(\boldsymbol{q})}_{\boldsymbol{J}_{\mathrm{s}}(\boldsymbol{q})} \dot{\boldsymbol{q}}. \tag{90}$$

Mit Gl. (90) wird die Geschwindigkeit des Gesamtschwerpunkts aus den Jacobi-Matrizen der Gelenke i berechnet.

Die Beschränkung der Geschwindigkeit des Schwerpunkts in $x_{\mathrm{l}}$-Richtung führt auf

$$\underline{v}(d_{\mathrm{c}}) \leq v_{\mathrm{s}1} \leq \overline{v}(d_{\mathrm{c}}), \tag{91}$$

wobei $v_{\mathrm{s}1}$ die erste Komponente von $v_{\mathrm{s}}$ in $x$-Richtung und $\underline{v}, \overline{v}$ die minimal, maximal zulässigen Geschwindigkeiten darstellen. Die zulässigen Geschwindigkeiten werden mit Gl. (81) bzw. (45) in Abhängigkeit des Abstands $d_{\mathrm{c}}$ von der Grenze des zulässigen Bereichs der Standsicherheit berechnet. Im zulässigen Bereich der Standsicherheit ist die Kippsicherheit des Fahrzeugs gewährleistet. Die Grenze der Standsicherheit ist dabei von der Abstützlänge abhängig.

Einsetzen von Gl. (90) in (91) und entsprechendes Umformen liefert die Ungleichungsbeschränkung für das Optimierungsproblem in der Form (82)

$$\boldsymbol{J}_{\mathrm{as}}\boldsymbol{\theta} \leq \overline{\boldsymbol{v}}_{\mathrm{s}}, \tag{92}$$

wobei $\boldsymbol{J}_{\mathrm{as}} \in \mathbb{R}^{2 \times n}$ und $\overline{\boldsymbol{v}}_{\mathrm{s}} \in \mathbb{R}^2$. Analog zur ersten Komponente in $v_{\mathrm{s}1}$ wird die erste Zeile der Jacobi-Matrix $J_{\mathrm{s}}$ verwendet.

### 7.3 Eigenkollisionsbeschränkungen

Die Eigenkollision ist der Zusammenstoß der Segmente untereinander. Das Risiko für Eigenkollisionen nimmt mit der Anzahl der redundanten Freiheitsgrade zu. Die Gelenkkinematik des Manipulators bestimmt dabei in welchen Posen Eigenkollisionsgefahr besteht. Mit den Beschränkungen im Konfigurationsraum in Abschnitt 6 werden Kollisionen zwischen benachbarten Segmenten durch Positionsbeschränkungen vermieden. Dies betrifft aber nicht die Kollision von weiter entfernten Segmenten.

Um den Zusammenstoß eines Punktes des Manipulators mit einem Segment zu verhindern, müssen die Relativposition bzw. -geschwindigkeit beschränkt werden.

Dazu wird nachfolgend die Geschwindigkeit eines Gelenkpunkts bezüglich eines lokalen Segmentkoordinatensystems hergeleitet.

Der Positionsvektor eines Gelenkpunkts $r_i$ zu einem beliebigen Punkt auf Segment $k$ im lokalen Koordinatensystem (k) ist durch

$$^k\boldsymbol{p}_{ik} = {}^k\boldsymbol{k}_{ik}(\boldsymbol{\theta}) \tag{93}$$

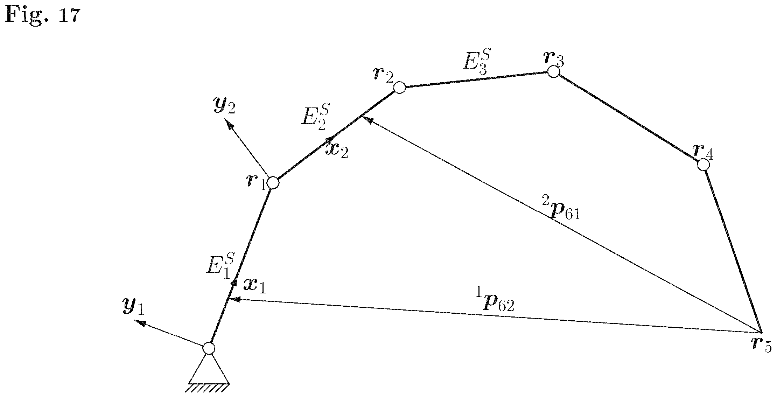

gegeben. Die Fig. 17 zeigt den Positionsvektor $^1p_{16}$ des Gelenkpunkts $r_6$ zu einem Punkt auf Segment 1 im lokalen Koordinatensystem des Segments 1. Die Ableitung von Gl. (93) nach der Zeit führt auf

$$^k\boldsymbol{v}_{ik} = \underbrace{\frac{\partial {}^k\boldsymbol{k}_{ik}}{\partial \boldsymbol{\theta}}}_{^k\boldsymbol{J}_{ik}} \boldsymbol{\theta}, \tag{94}$$

wobei $^kJ_{ik}$ bezüglich des lokalen Segmentkoordinatensystems *(k)* ausgedrückt ist.

Um eine Eigenkollision des Manipulators zu vermeiden, genügt es die Anlaufgeschwindigkeit der Gelenkpunkte $r_i$ gegenüber den Vorgängersegmenten zu beschränken. Da der direkte Vorgängerkörper durch die Komponentenbeschränkungen bereits abgesichert ist, beginnt die Kollisionsbeschränkung bei dem vorletzten Vorgängerkörper. In Tabelle 2 sind die kritischen Vorgängersegmente für die Gelenkpunkte der Betonpumpe aufgelistet. Die Kollisionen von Gelenkpunkten mit den Nachfolgekörpern sind in der Praxis vernachlässigbar, da die Bewegung des Gelenkpunkts im Normalfall auch die Nachfolgekörper verschiebt. Sie werden deshalb nicht betrachtet.

Tabelle 2: Kritische Vorgängersegmente für Eigenkollision.

| Gelenkpunkte | kritische Vorgängersegmente | Anzahl |
|---|---|---|
| $r_5$ | $E_3^S,\ E_2^S,\ E_1^S$ | 3 |
| $r_4$ | $E_2^S,\ E_1^S$ | 2 |
| $r_3$ | $E_1^{\overline{S}}$ | 1 |

Zur Abstandsbestimmung werden Projektionen des Gelenkpunkts $r_i$ auf die ausgewählten Segmentstrecken $E_j^S$ durchgeführt (für die Projektion von Punkt auf Strecke siehe Anhang 9.5). Aus der Menge aller Projektionspunkte werden pro Gelenkpunkt $m_k = 2$ kritische Punkte $r'_{ik}, k = 1, \dots, m_k$ mit kürzesten Abstand $d_{ck}(r_i, r'_{ik})$ ausgewählt. Falls nur ein Vorgängersegment vorliegt, gilt $m_k = 1$. Mit dem Einheitsvektor

$$^k\boldsymbol{e}_k = \begin{bmatrix} 0 & 1 \end{bmatrix}^T \tag{95}$$

im lokalen Koordinatensystem ergibt sich die skalare Ungleichungsbeschränkung

$$^k\boldsymbol{e}_k \cdot {}^k\boldsymbol{J}_{ik}\boldsymbol{\theta} \leq \overline{v}(d_{ck}). \tag{96}$$

Durch Gl. (96) werden die Anlaufgeschwindigkeiten orthogonal zum Segment beschränkt. Die zulässige Geschwindigkeit $\overline{v}(d_{ck})$ ergibt sich analog zu Gl. (81).

Die Ungleichungsbeschränkungen (96) werden zu

$$\boldsymbol{J}_{az} \leq \overline{\boldsymbol{v}}_z \tag{97}$$

zusammengefasst, wobei $\boldsymbol{J}_{az} \in \mathbb{R}^{m_z \times n}$, $\overline{\boldsymbol{v}}_z \in \mathbb{R}^{m_z}$. Die Anzahl der Beschränkungen für die Betonpumpe ergibt sich mit Tabelle 2 zu

$$m_z = 3 \cdot m_k - 1 = 5, \tag{98}$$

wobei für $r_3$ nur eine Beschränkung vorliegt.

Die Relativkoordinaten haben den Vorteil, dass die Bewegung der Vorgängersegmente nicht beschränkt wird. Das heißt, die Vorgänger können sich frei bewegen, da nur die relative Geschwindigkeit der Segmente untereinander limitiert wird.

### 7.4 Hindernisbeschränkungen

Hindernisbeschränkungen im Aufgabenraum stellen die allgemeinste Form der Ungleichungsbeschränkungen dar und werden analog zu Abschnitt 7 in das Optimierungsproblem integriert.

Die Kollisionsüberprüfung wird pro Hindernis für jedes Segment durchgeführt, wobei $m_k = 2$ kritische Punkte berücksichtigt werden. Diese Anzahl der Punkte ist nötig, um einen konsistenten Bremsvorgang ohne Geschwindigkeitssprünge zu gewährleisten.

Die Beschränkungen werden in die Form (82) gebracht und ergeben

$$\boldsymbol{J}_{ao}\boldsymbol{\theta} \leq \overline{\boldsymbol{v}}_o, \tag{99}$$

wobei $\boldsymbol{J}_{ao} \in \mathbb{R}^{m_o \times n}$, $\overline{\boldsymbol{v}}_o \in \mathbb{R}^{m_o}$. Für die Autobetonpumpe berechnet sich mit der Anzahl der Hindernisse $n_o$, $n = 5$ und $m_k = 2$

$$m_{\mathrm{o}} = n_{\mathrm{o}} \cdot n \cdot m_{\mathrm{k}} = n_{\mathrm{o}} \cdot 10. \qquad\qquad (100)$$

Die Anzahl zulässiger Ecken der Polygonhindernisse ist unbeschränkt. Allerdings steigt mit größerer Anzahl auch die Rechenleistung der Kollisionsüberprüfung. Die Anzahl der Hindernisse ist ebenfalls unbeschränkt. Wie aus Gl. (100) ersichtlich erhöht sich jedoch mit größerem $n_{\mathrm{o}}$ auch die Anzahl der Nebenbedingungen im Optimierungsproblem.

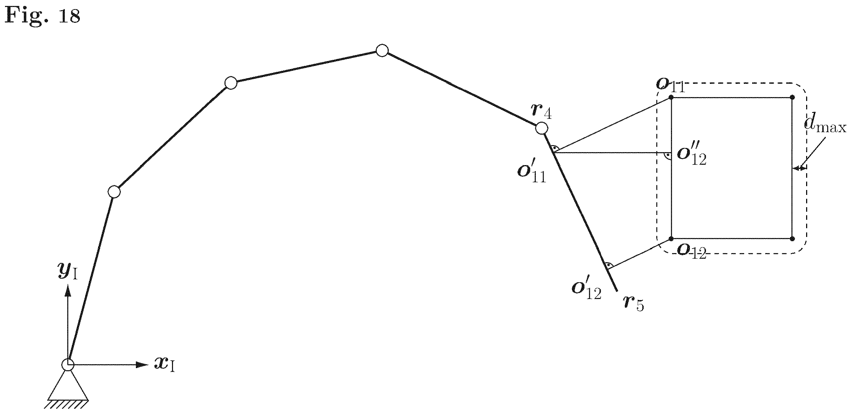

In Fig. 18 sind die zwei kritischen Punkte des letzten Segments mit einem rechteckigen Hindernis aufgezeigt.

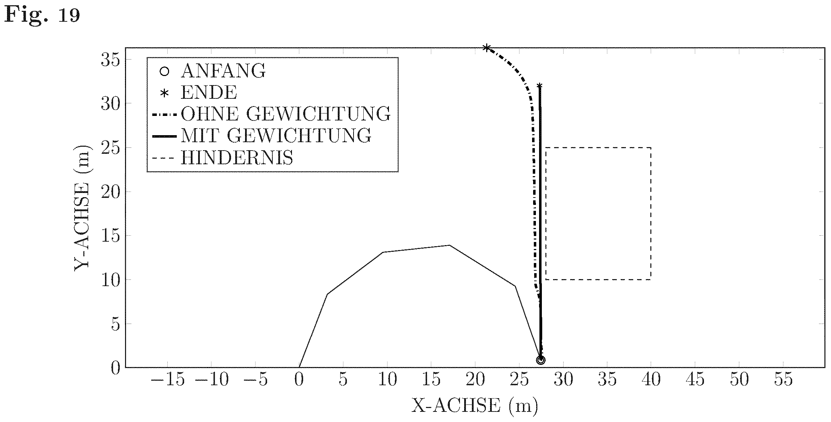

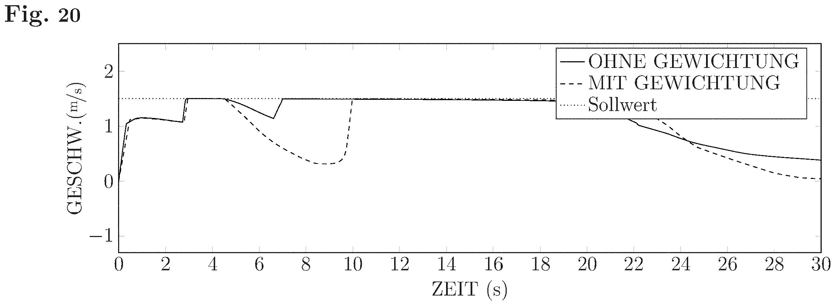

Die Beschränkungen umfassen unter anderem das letzte Segment und den TCP des Manipulators. Damit sind Kollisionen durch unsachgemäße Steuerung ausgeschlossen. In der Umgebung der Hindernisse stehen die TCP-Sollgeschwindigkeit und die limitierte Anlaufgeschwindigkeit in Konflikt. Durch die Formulierung als Nebenbedingung dominiert die Anlaufgeschwindigkeit die Sollvorgabe. Die Gewichtung der Sollgeschwindigkeit bestimmt dabei das Verhalten des TCP. Nach Abschnitt 4.2 wird die Gewichtung so gewählt, dass die Richtung wichtiger ist als der Betrag. Für eine hohe Gewichtung versucht der Algorithmus deshalb unbedingt die Richtung zu halten. Fährt der TCP nahe an einer Hindernisecke vorbei, so bedeutet dies eine starke Reduktion der Geschwindigkeit bei gleichzeitiger Erhaltung der Richtung. Bei geringer Gewichtung wird eher der Betrag der Geschwindigkeit erhalten. Der TCP führt somit eine Ausweichbewegung durch (siehe Fig. 19, 20).

Die Hindernisbeschränkungen ermöglichen das Umgreifen sowie das waagrechte Fahren unter einem Hindernis. Die Segmente können dabei an den Ecken des Hindernisses eine gleitende Bewegung ausführen. Dies erhöht die Effizienz der Bewegung in der Umgebung von Hindernissen. Das waagrechte Fahren unter einem Hindernis demonstriert außerdem die Notwendigkeit der Konfigurationssteuerung. Der Manipulator führt bei der Anfahrt auf ein Hindernis eine Ausweichbewegung durch. Dadurch ändert sich die Konfiguration des Manipulators. Beim Verlassen des Hindernisbereichs wird diese Konfiguration beibehalten. Das Ausführen von zyklischen Bewegungen hat damit zur Folge, dass die Konfiguration einem undefinierten Drift unterworfen ist. Die Konfigurationssteuerung stellt die ursprüngliche Konfiguration außerhalb des Hindernisbereichs wieder her und verhindert somit dieses Verhalten.

## 7.5 Hinderniserfassung

Bevor die Hindernisse als Beschränkungen in der Geometriesteuerung eingehen, müssen sie mit einer geeigneten Methode erfasst und in ein digitales Format transformiert werden. Nachfolgend werden mehrere Methoden zur Hinderniserfassung aufgezeigt.

Eine Möglichkeit zur Hinderniserfassung ist die Verwendung einer Abstandssensorik am oder in der Umgebung des Verteilermasts. Prinzipiell ist jede Art von Abstandssensorik (optisch, mechanisch, elektromagnetisch, akustisch) für diese Aufgabe geeignet, sofern die Anforderungen der Geometriesteuerung erfüllt sind. Je nach Hindernistyp ist es dabei notwendig den Abstand zwischen festgelegten oder variierenden Punkten auf dem Segment und dem Hindernis zu bestimmen. Beispielhaft seien dabei die Sensoren Lidar, Radar, Laser, Karma mit Objekterkennung, Ultraschall und Anschlagtaster genannt. Je nach Typ ist dabei die Positionierung, die Anzahl und die Ausrichtung geeignet zu wählen.

Neben der direkten Erfassung der realen Hindernisse ist auch eine virtuelle Nachbildung möglich. Dabei wird das Hindernis virtuell vor oder während des Betriebs der Steuerung aufgebaut und anstelle der Sensorik für die Abstandsberechnung verwendet. Eine Option ist Eingabe der Hindernisse über eine (grafische) Benutzeroberfläche. Einfache Hindernisse wie z. B. Wände und Quader lassen sich damit durch wenige Parametern abbilden. Ein einfaches Szenario ist z. B. Eingabe einer konstanten Deckenhöhe, die dem Bediener aus den Nenndaten des Gebäudes vorliegt. Die Hindernisse können auch während des Betriebs durch Vormachen ("Teach-in") festgelegt werden. Beim "Teach-In"ährt der Bediener die maximalen und minimalen Positionen am Hindernis an und speichert die Position des Masts oder bestimmte Punkte auf den Segmenten als Beschränkungen in der Geometriesteuerung. Damit können unbekannte Abstände einfach und während des Betriebs bestimmt werden.

Eine weitere Option ist das Auslesen der Hindernisse aus einer digitalen Nachbildung des Gebäudes bzw. der Baustelle. Die Methode gewinnt besonders im Hinblick auf die zunehmende Vernetzung bei der Planung, dem Aufbau und der Bewirtschaftung von Bauwerken, auch genannt Building Information Modeling (deutsch: Bauwerksdatenmodellierung) an Bedeutung. Der Bediener bestimmt dabei die Position der Betonpumpe (z.B. über GPS) und lädt einen virtuellen Umgebungsplan der Baustelle und Gebäudes aus einer zentralen Datenbank herunter. Darin werden relevante Hindernisse festgelegt und der Geometriesteuerung zur Abstandsberechnung übergeben.

## 8 Achsregler

Die Geometriesteuerung berechnet Positionen und Geschwindigkeiten $\hat{\theta}(t)$, $\dot{\hat{\theta}}(t)$, die als Sollwerte in die Achsregler eingehen. Die Achsregler sind dezentrale, unterlagerte Regelkreise auf Konfigurationsebene. Sie stellen sicher, dass die Sollwertvorgaben in eine Bewegung umgesetzt werden. Die Dynamik der Hydraulik, sowie Unsicherheiten in der Hydraulikmodellierung können somit kompensiert werden.

Die Achsregler sind wichtiger Bestandteile der Geometriesteuerung. Bereits kleine Abweichungen zwischen Soll- und Istwerten der Geometriesteuerung führen zu Abweichungen in der Bewegung des Manipulators. Dies ist besonders sichtbar, da meist eine lineare Bewegung des TCP über einer geraden Oberfläche angestrebt wird. Die Abweichungen zur Oberfläche sind somit leicht wahrnehmbar. Für eine präzise Bewegung des TCP muss der Achsregler deshalb die Sollwerte mit geringem Fehler umsetzen.

Es werden zwei Achsregler zur Sollwertfolge vorgeschlagen: die Geschwindigkeitsrückführung sowie die Positions- und Geschwindigkeitsrückführung.

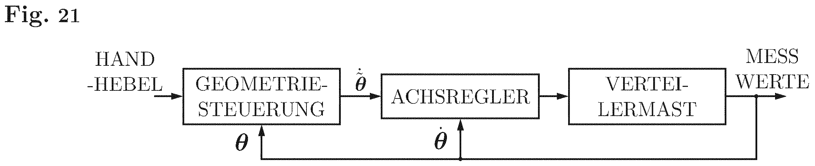

Der Achsregler mit Geschwindigkeitsrückführung ist in Fig. 21 dargestellt. Die Geometriesteuerung erhält als Position $\theta$ das Messsignal des realen Systems. Die Geschwindigkeit $\tilde{\theta}$ ist der alleinige Sollwert für den Achsregler, der zusammen mit der Istgeschwindigkeit das Ansteuersignal für die Aktoren der Betonpumpe berechnet. Die Sollposition der Geometriesteuerung wird nicht verwendet. Da die gemessene Istposition in der Geometriesteuerung verwendet wird, ist sie ein Teil des Regelkreises. Das hat den Vorteil, dass die Berechnungen der Geometriesteuerung bei großen Abweichungen zwischen Soll- und Istwerten immer auf der realen Position basieren. Da die Geometriesteuerung auf Geschwindigkeitsebene agiert, findet jedoch keine Korrektur der Abweichung statt. Die Istposition wird für die Berechnung des nächsten Zeitschritts verwendet, ohne die Fehler des Vorherigen zu korrigieren.

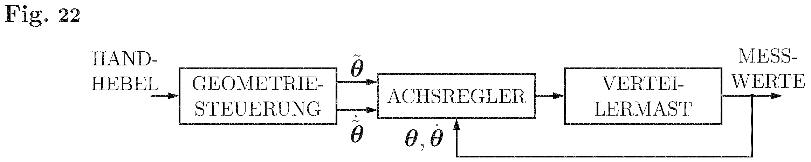

Der Achsregler mit Positionsrückführung in Fig. 22 behebt diesen Nachteil. Die Geometriesteuerung ist in diesem Fall eine reine Trajektoriengenerierung zur Berechnung der Werte $\tilde{\theta}(t)$, $\dot{\tilde{\theta}}(t)$. Diese dienen als Sollwerte für die Achsregler. Neben der Geschwindigkeitsrückführung enthält der Achsregelung zusätzlich eine Positionsregelschleife. Damit werden Abweichungen auf Positionsebene korrigiert und der Manipulator auf die Solltrajektorie zurückbewegt. Da die Geometriesteuerung unabhängig von der realen Position des Manipulators eine Trajektorie vorgibt, muss der Achsregler gegen große Regelfehler abgesichert werden.

Die Position des Verteilermasts kann unter anderem durch Längenmessungen $d_i$ an den Hydraulikzylindern i bestimmt werden. Aufgrund der Koppelgetriebe in den Gelenken ergibt sich ein nichtlinearer Zusammenhang zwischen der Länge $d_i$ und dem dazugehörigen Gelenkwinkel $\theta_i$ (siehe Gl. (103))

$$\theta_i = f_{\theta,i}(d_i). \qquad (101)$$

Für die Berechnung der Gelenkgeschwindigkeit $d_i$ wird die Position $d_i$ mit einem passenden Filter abgeleitet. Der Zusammenhang zu der Gelenkgeschwindigkeit $\dot{\theta}_i$ ergibt sich damit durch die Zeitableitung von Gl. (101)

$$\dot{\theta}_i = k_{\omega,i}(\theta_i)\dot{d}_i, \qquad (102)$$

wobei $k_\omega = \frac{\partial f_{\theta,i}}{\partial d}$ (siehe Gl. (104)).

9 Anhang

9.1 Berechnung Zielfunktion

Die Zielfunktion (12) in der Form (9) lautet

$$\begin{aligned}
f_1 + f_2 + f_3 &= (\tilde{\boldsymbol{v}} - \boldsymbol{J}\dot{\boldsymbol{\theta}})^T \boldsymbol{W}_{\tilde{v}}(\tilde{\boldsymbol{v}} - \boldsymbol{J}\dot{\boldsymbol{\theta}}) + (\dot{\boldsymbol{\theta}} - \dot{\tilde{\boldsymbol{\theta}}})^T \boldsymbol{W}_{\tilde{\theta}}(\dot{\boldsymbol{\theta}} - \dot{\tilde{\boldsymbol{\theta}}}) + \dot{\boldsymbol{\theta}}^T \boldsymbol{W}_{\boldsymbol{\theta}}\dot{\boldsymbol{\theta}} \\
&= \dot{\boldsymbol{\theta}}^T(\boldsymbol{J}^T \boldsymbol{W}_{\tilde{v}}\boldsymbol{J} + \boldsymbol{W}_{\tilde{\theta}} + \boldsymbol{W}_{\boldsymbol{\theta}})\dot{\boldsymbol{\theta}} - 2\tilde{v}^T \boldsymbol{W}_{\tilde{v}}\boldsymbol{J}\dot{\boldsymbol{\theta}} \\
&\quad + \tilde{v}^T \boldsymbol{W}_{\tilde{v}}\tilde{v} - \dot{\boldsymbol{\theta}}^T \boldsymbol{W}_{\tilde{\theta}}\dot{\tilde{\boldsymbol{\theta}}} - \dot{\tilde{\boldsymbol{\theta}}}^T \boldsymbol{W}_{\tilde{\theta}}\dot{\boldsymbol{\theta}} + \dot{\tilde{\boldsymbol{\theta}}}^T \boldsymbol{W}_{\tilde{\theta}}\dot{\tilde{\boldsymbol{\theta}}} \\
&= \dot{\boldsymbol{\theta}}^T(\boldsymbol{J}^T \boldsymbol{W}_{\tilde{v}}\boldsymbol{J} + \boldsymbol{W}_{\tilde{\theta}} + \boldsymbol{W}_{\boldsymbol{\theta}})\dot{\boldsymbol{\theta}} - 2(\tilde{v}^T \boldsymbol{W}_{\tilde{v}}\boldsymbol{J} + \dot{\tilde{\boldsymbol{\theta}}}^T \boldsymbol{W}_{\tilde{\theta}})\dot{\boldsymbol{\theta}} \\
&\quad + \tilde{v}^T \boldsymbol{W}_{\tilde{v}}\tilde{v} + \dot{\tilde{\boldsymbol{\theta}}}^T \boldsymbol{W}_{\tilde{\theta}}\dot{\tilde{\boldsymbol{\theta}}}.
\end{aligned}$$

Der konstante Terme $\tilde{v}^T W_{\tilde{v}}\tilde{v} + \tilde{\theta}^T W_{\tilde{\theta}}\tilde{\theta}$ beeinflussen die optimale Lösung nicht und können vernachlässigt werden. Zusammengefasst ergibt sich

$$\boldsymbol{W} = \boldsymbol{J}^T \boldsymbol{W}_{\tilde{v}}\boldsymbol{J} + \boldsymbol{W}_{\tilde{\theta}} + \boldsymbol{W}_{\boldsymbol{\theta}}, \quad \boldsymbol{g} = -(\tilde{v}^T \boldsymbol{W}_{\tilde{v}}\boldsymbol{J} + \dot{\tilde{\boldsymbol{\theta}}}^T \boldsymbol{W}_{\tilde{v}})^T.$$

## 9.2 Gelenkkinematik

Die Betonpumpe verfügt über fünf rotatorische Gelenke zur Bewegung des Verteilermasts in der vertikalen Ebene. Die Gelenkwinkel $\theta_i$, i = 1,... ,5 beschreiben dabei die relative Stellung. Zur Aktuierung des Masts befindet sich an jedem Gelenk ein Hydraulikzylinder. Die translatorische Bewegung der Zylinder wird über ein Koppelgetriebe in die Rotation der Gelenke gewandelt.

Zwischen der Auslenkung der Zylinder $d_i$ und der Stellung der Gelenke $\theta_i$ existiert ein eindeutiger Zusammenhang auf Positions- und Geschwindigkeitsebene

$$\theta_i = f_{\theta,i}(d_i), \qquad\qquad (103)$$

$$\dot{\theta}_i = k_{\omega,i}(\theta_i)v_i, \qquad i = 1,\ldots,5, \qquad (104)$$

wobei $v_i = \dot{d}_i$ die translatorische Zylindergeschwindigkeit und $k_\omega = \dfrac{\partial f_{\theta,i}}{\partial d}$ darstellt. Für die Gln. (103)-(104) existieren die Umkehrabbildungen

$$d_i = f_{d,i}(\theta_i), \qquad\qquad (105)$$

$$v_i = k_{v,i}(\theta_i)\dot{\theta}_i, \qquad\qquad (106)$$

wobei $k_v = \dfrac{\partial f_{d,i}}{\partial \theta}$ darstellt.

## 9.3 Konfigurationsbeschränkungen auf Gelenkebene

Analog zu Abschnitt 6.1 können die Komponentenbeschränkungen auch auf Gelenkebene formuliert werden. Dabei entfällt die Umrechnung zwischen Gelenk- und Zylinderebene.

Die obere Positionsbeschränkung mit der maximal zulässigen Position $\overline{\theta}$ und der maximalen Bremsbeschleunigung $\underline{\ddot{\theta}} < 0$ ist für ein Gelenk durch

$$\overline{\dot{\theta}}_\theta(\theta) = \begin{cases} \sqrt{-2\underline{\ddot{\theta}}(\overline{\theta} - \theta)} & \theta \le \overline{\theta}, \\ 0 & \theta > \overline{\theta} \end{cases} \qquad (107)$$

festgelegt.

Analog ergibt sich die untere Positionsbeschränkung mit der minimal zulässigen Position $\underline{\theta}$ und der minimalen Bremsbeschleunigung $\overline{\ddot{\theta}} > 0$

$$\underline{\dot{\theta}}_\theta(\theta) = \begin{cases} -\sqrt{-2\overline{\ddot{\theta}}(\underline{\theta} - \theta)} & \theta \ge \underline{\theta}, \\ 0 & \theta < \underline{\theta}. \end{cases} \qquad (108)$$

Die gesamte Nebenbedingung lautet somit

$$\underline{\dot{\theta}}_\theta(\theta) \le \dot{\theta} \le \overline{\dot{\theta}}_\theta(\theta). \qquad\qquad (109)$$

Die Geschwindigkeitsbeschränkungen sind

$$\underline{\dot{\theta}}_{\dot{\theta}} \le \dot{\theta} \le \overline{\dot{\theta}}_{\dot{\theta}}, \qquad\qquad (110)$$

wobei $\underline{\dot{\theta}}_{\dot{\theta}}$, $\overline{\dot{\theta}}_{\dot{\theta}}$ die minimal bzw.maximal zulässige Geschwindigkeit darstellt.

Die Beschleunigungsbeschränkungen ergeben sich durch bilden des Differenzenquotienten

$$\underline{\ddot{\theta}} \leq \frac{\dot{\theta} - \dot{\theta}_{\mathrm{old}}}{\Delta t} \leq \overline{\ddot{\theta}}, \qquad (111)$$

wobei $\underline{\ddot{\theta}}_{\ddot{\theta}}$, $\overline{\ddot{\theta}}_{\ddot{\theta}}$ die maximale bzw. minimale Beschleunigung, $\dot{\theta}_{\mathrm{old}}$ die Geschwindigkeit aus dem vorherigen Zeitschritt und $\Delta t$ die Schrittweite darstellt.

Das Umstellen der Beschränkung (111) auf die Form (16) führt auf

$$\underline{\dot{\theta}}_{\ddot{\theta}}(\dot{\theta}_{\mathrm{old}}) \leq \dot{\theta} \leq \overline{\dot{\theta}}_{\ddot{\theta}}(\dot{\theta}_{\mathrm{old}}), \qquad (112)$$

mit

$$\underline{\dot{\theta}}_{\ddot{\theta}}(\dot{\theta}_{\mathrm{old}}) = \underline{\ddot{\theta}}\Delta t + \dot{\theta}_{\mathrm{old}} \qquad (113)$$

$$\overline{\dot{\theta}}_{\ddot{\theta}}(\dot{\theta}_{\mathrm{old}}) = \overline{\ddot{\theta}}\Delta t + \dot{\theta}_{\mathrm{old}}. \qquad (114)$$

Die Beschränkungen(109), (110) und (112) wirken alle auf Geschwindigkeitsebene. Sie werden deshalb zu einer Geschwindigkeitsbeschränkung

$$\underline{\dot{\theta}} \leq \dot{\theta} \leq \overline{\dot{\theta}}, \qquad (115)$$

mit

$$\overline{\dot{\theta}} = \min\left\{\overline{\dot{\theta}}_{\theta}(\theta),\ \overline{\dot{\theta}}_{\dot{\theta}},\ \overline{\dot{\theta}}_{\ddot{\theta}}(\dot{\theta}_{\mathrm{old}})\right\} \qquad (116)$$

$$\underline{\dot{\theta}} = \max\left\{\underline{\dot{\theta}}_{\theta}(\theta),\ \underline{\dot{\theta}}_{\dot{\theta}},\ \underline{\dot{\theta}}_{\ddot{\theta}}(\dot{\theta}_{\mathrm{old}})\right\} \qquad (117)$$

zusammengefasst.

9.4 Projektion Punkt auf Gerade

Der kürzeste Abstand eines Punkts o zu einer Gerade

$$\boldsymbol{h}(\lambda) = \boldsymbol{r}_1 + \lambda(\boldsymbol{r}_2 - \boldsymbol{r}_1) \qquad (118)$$

berechnet sich durch Projektion auf die Gerade

$$\lambda_{\boldsymbol{o}} = \frac{(\boldsymbol{o} - \boldsymbol{r}_1) \cdot (\boldsymbol{r}_2 - \boldsymbol{r}_1)}{\|\boldsymbol{r}_2 - \boldsymbol{r}_1\|^2}, \qquad (119)$$

wobei $(\cdot)$ das Skalarprodukt darstellt.

Die kürzeste Distanz ergibt sich damit zu

$$d = \|\boldsymbol{o}' - \boldsymbol{o}\|. \qquad (120)$$

**9.5** Projektion Punkt auf Strecke

Der kürzeste Abstand eines Punkts o zu einer Linie

$$\boldsymbol{h}(\lambda) = \boldsymbol{r}_1 + \lambda(\boldsymbol{r}_2 - \boldsymbol{r}_1) \qquad (121)$$

berechnet sich durch Projektion auf die Linie

$$\lambda_{\boldsymbol{o}} = \frac{(\boldsymbol{o} - \boldsymbol{r}_1) \cdot (\boldsymbol{r}_2 - \boldsymbol{r}_1)}{\|\boldsymbol{r}_2 - \boldsymbol{r}_1\|^2}, \qquad (122)$$

wobei ($\cdot$) das Skalarprodukt darstellt. Der Punkt mit dem kürzesten Abstand zur Strecke ergibt sich somit

$$\boldsymbol{o}' = \begin{cases} \boldsymbol{r}_1, & \text{für } \lambda_{\boldsymbol{o}} < 0, \\ \boldsymbol{h}(\lambda_{\boldsymbol{o}}), & \text{für } 0 \leq \lambda_{\boldsymbol{o}} \leq 1, \\ \boldsymbol{r}_2, & \text{für } \lambda_{\boldsymbol{o}} > 0. \end{cases} \qquad (123)$$

Die kürzeste Distanz ergibt sich damit zu

$$d = \|\boldsymbol{o}' - \boldsymbol{o}\|. \qquad (124)$$

**9.6 Formelzeichen**

**Subskript**

| Abkürzung | Beschreibung |
| --- | --- |
| a | allgemeine Ungleichungsbeschränkungen des QP |
| c | Beschränkungen im Aufgabenraum |
| d | Größen der Deformationskompensation |
| e | Endeffektor |
| h | Hydraulikbeschränkungen |
| o | Hindernisbeschränkungen |
| s | Schwerpunkt |
| w | Wandbeschränkungen |
| z | Eigenkollision |

**Patentansprüche**

1.  Betonpumpe, insbesondere Autobetonpumpe, mit einem Gelenkarm, an welchem eine Förderleitung für den Beton entlang geführt ist, und mit einer Gelenkarm-Steuerung für den Gelenkarm der Betonpumpe, wobei der Gelenkarm einen um eine vertikale Achse drehbaren Drehbock (3) und mindestens zwei mittels Gelenken (B - E) um horizontale Achsen verschwenkbare Segmente (4 - 7) aufweist, wobei der Drehbock (3) über einen Aktuator um die vertikale Achse (A) verfahrbar ist und die Segmente (4 - 7) über Aktuatoren (14 - 17) um die horizontalen Achsen verschwenkbar sind, wobei bevorzugt Sensoren (18 - 21) zur Bestimmung des Drehwinkels des Drehbocks (3) und zur Bestimmung der Gelenkwinkel der Gelenke (B - E) vorgesehen sind, wobei die Gelenkarm-Steuerung zur Ansteuerung der Aktuatoren (14 - 17) dient und eine Geometriesteuerung umfasst, welche aus Eingabewerten zu einer Soll-TCP-Bewegung eine Trajektorie mit Soll-Werten für die Bewegung des Drehbocks (3) und/oder der Gelenke (B - E) erzeugt,

wobei die Geometriesteuerung die Trajektorie durch Lösung eines Optimierungsproblems bestimmt, wobei das Optimierungsproblem als Zielfunktion eine Abweichung zwischen der Soll-TCP-Bewegung und einer sich durch die Trajektorie in einem physikalischen Modell des Gelenkarms ergebenden TCP-Bewegung minimiert, **dadurch gekennzeichnet,**

**dass** Beschränkungen der Hydraulik und/oder des Arbeitsraumes als Nebenbedingung in die Optimierung eingehen.

2. Betonpumpe nach Anspruch 1, wobei der maximal zur Verfügung stehende Volumenstrom und/oder die maximal zur Verfügung stehende Leistung der Hydraulikversorgung als Nebenbedingung in die Optimierung eingeht.

3. Betonpumpe nach Anspruch 1 oder 2, wobei die Geometriesteuerung eine Funktion zur Vermeidung von Kollisionen des Gelenkarms mit Störkonturen umfasst, wobei die durch die Störkonturen gebildeten Beschränkungen des Arbeitsraumes als Nebenbedingung in die Optimierung eingehen.

4. Betonpumpe nach Anspruch 3, wobei die Funktion zur Vermeidung von Kollisionen des Gelenkarms mit Störkonturen eine Anlaufgeschwindigkeit des Gelenkarms auf eine Störkontur zu auf einen Wert begrenzt, welcher ein Abbremsen vor Erreichen der Störkontur ermöglicht.

5. Betonpumpe nach Anspruch 3 oder 4, wobei die Störkonturen als virtuelle Wände und/oder Decken in die Gelenkarm-Steuerung eingebbar sind, und/oder wobei eine virtuelle Nachbildung der Hindernisse über eine bevorzugt grafische Benutzeroberfläche erfolgt, bspw. durch Eingabe einer Deckenhöhe und eines Abstands zum Gebäude, und/oder wobei Störkonturen durch ein Teach-In Verfahren eingebbar sind, insbesondere indem ein Benutzer eine maximale Position durch Anfahren der Position definiert, und/oder wobei eine Schnittstelle zu einer Bauwerksdatenmodellierung vorgesehen ist, über welche die Position von Störkonturen aus einem virtuellen Modell des Gebäudes und/oder der Baustelle in die Steuerung einlesbar sind, wobei bevorzugt eine Lokalisierung der Betonpumpe über eine satellitengestützte Positionserfassung erfolgt, und/oder wobei eine Erfassung von Störkonturen über eine Abstandssensorik am Verteilermast erfolgt, insbesondere eine optische, mechanische, elektromagnetische und/oder akustische Abstandssensorik.

6. Betonpumpe nach einem der Ansprüche 3 bis 5, wobei die Funktion zur Vermeidung von Kollisionen ein Fahren parallel zu einer Störkontur mit voller Geschwindigkeit erlaubt.

7. Betonpumpe nach einem der vorangegangenen Ansprüche, wobei die Geometriesteuerung eine Standsicherheits-Funktion umfasst, welche die Lage des Schwerpunkts der Betonpumpe ermittelt, wobei die Anforderung, dass der Schwerpunkt der Betonpumpe sich in einem sicheren Bereich befindet, als Nebenbedingung in die Optimierung eingeht.

8. Betonpumpe nach einem der vorangegangenen Ansprüche, wobei Eigenkollisionsbeschränkungen zur Vermeidung von Kollisionen der Segmente (4 - 7) untereinander und/oder mit anderen Elementen der Betonpumpe als Nebenbedingung in die Optimierung eingehen.

9. Betonpumpe nach einem der vorangegangenen Ansprüche, mit einem Bahnplanungsmodul zur automatischen Durchführung einer Bewegung des Gelenkarms und/oder des TCP, wobei ein durch das Bahnplanungsmodul generierter Soll-Wert als Input in die Geometriesteuerung eingeht.

10. Betonpumpe nach Anspruch 9, wobei das Bahnplanungsmodul Beschränkungen des Arbeitsraumes gegenüber dem Optimierungsproblem vereinfacht beschreibt oder unberücksichtigt lässt und/oder ein durch das Bahnplanungsmodul generierter Soll-Wert in gleicher Weise als Input in die Geometriesteuerung eingeht wie ein Handhebelsignal.

11. Betonpumpe nach einem der vorangegangenen Ansprüche, wobei das im Optimierungsproblem eingesetzte physikalische Modell des Gelenkarms eine Deformation des Gelenkarms aufgrund seines Eigengewichtes und/oder des Gewichtes des geförderten Betons berücksichtigt.

12. Betonpumpe nach einem der vorangegangenen Ansprüche, wobei das Optimierungsproblem die Abweichung zwischen der Soll-TCP-Bewegung und der sich durch die Trajektorie in einem physikalischen Modell des Gelenkarms ergebenden TCP-Bewegung als erste Zielfunktion und eine Abweichung einer Konfiguration des Gelenkarms von einer Soll-Konfiguration als zweite Zielfunktion minimiert.

13. Betonpumpe nach einem der vorangegangenen Ansprüche, wobei die Geometriesteuerung einen numerischen Solver umfasst, welcher das Optimierungsproblem in jedem Zeitschritt neu löst und/oder wobei das Optimierungsproblem als quadratisches Optimierungsproblem formuliert ist, wobei bevorzugt in dem Optimierungsproblem Geschwindigkeiten senkrecht zu einer Richtung der Soll-TCP-Geschwindigkeit stärker gewichtet werden als Geschwindigkeiten in Richtung der Soll-TCP-Geschwindigkeit.

14. Verfahren zur Ansteuerung einer Betonpumpe nach einem der vorangegangenen Ansprüche, wobei die Gelenkarm-Steuerung zum Einsatz kommt.

**Claims**

1. Concrete pump, in particular truck-mounted concrete pump, comprising an articulated arm, along which a supply line for concrete is guided, and comprising an articulated arm control for the articulated arm of the concrete pump, wherein the articulated arm has a rotary base (3), which is rotatable about a vertical axis, and at least two segments (4 - 7), which are pivotable by means of articulated joints (B - E) about horizontal axes, wherein the rotary base (3) is displaceable about the vertical axis (A) via an actuator and the segments (4 - 7) are displaceable about the horizontal axes via actuators (14 - 17), wherein preferably sensors (18 - 21) for determining the rotation angle of the rotary base (3) and for determining the joint angles of the articulated joints (B - E) are provided, wherein the articulated arm control serves to actuate the actuators (14 - 17) and includes a geometry control which generates from input values relating to a desired TCP movement a trajectory with desired values for the movement of the rotary base (3) and/or the articulated joints (B - E),

   wherein the geometry control determines the trajectory by solving an optimization problem, wherein the optimization problem, as the objective function, minimizes a difference between the desired TCP movement and a TCP movement that results from the trajectory in a physical model of the articulated arm,
   **characterized in that**
   limitations of the hydraulics system and/or of the working space are included as constraints in the optimization.

2. Concrete pump according to claim 1, wherein the maximum available volume flow and/or the maximum available power of the hydraulic supply is/are included as a constraint in the optimization.

3. Concrete pump according to claim 1 or 2, wherein the geometry control comprises a function for avoiding collisions of the articulated arm with interfering contours, wherein the limitations of the working space that are formed by the interfering contours are considered as constraints in the optimization.

4. Concrete pump according to claim 3, wherein the function for avoiding collisions of the articulated arm with interfering contours limits an approach speed of the articulated arm to an interfering contour to a value which allows braking before the interfering contour is reached.

5. Concrete pump according to claim 3 or 4, wherein the interfering contours can be inputted into the articulated arm control as virtual walls and/or ceilings, and/or wherein a virtual simulation of the obstacles takes place via a user interface, preferably a graphical user interface, for example by inputting a ceiling height and a distance from the building, and/or wherein interfering contours can be inputted by a teach-in method, in particular by a user defining a maximum position by approaching the position, and/or wherein an interface with a structure data modelling is provided, via which the position of interfering contours can be read into the control from a virtual model of the building and/or of the construction site, wherein the concrete pump is preferably located via satellite-assisted position detection, and/or wherein interfering contours are detected via a distance sensor system on the boom, in particular an optical, mechanical, electromagnetic and/or acoustic distance sensor system.

6. Concrete pump according to any one of claims 3 to 5, wherein the function for avoiding collisions permits traveling parallel to an interfering contour at full speed.

7. Concrete pump according to any one of the preceding claims, wherein the geometry control comprises a stability function which determines the position of the center of gravity of the concrete pump, wherein the requirement that the center of gravity of the concrete pump is in a safe region is considered as a constraint in the optimization.

8. Concrete pump according to any one of the preceding claims, wherein self-collision limitations for avoiding collisions of the segments (4 - 7) with one another and/or with other elements of the concrete pump are included as a constraint in the optimization.

9. Concrete pump according to any one of the preceding claims, having a path planning module for automatically performing a movement of the articulated arm and/or of the TCP, wherein a desired value generated by the path planning module is entered as an input into the geometry control.

10. Concrete pump according to claim 9, wherein the path planning module describes in a simplified manner and/or ignores limitations of the working space with respect to the optimization problem, and/or a desired value generated by the path planning module is entered as an input into the geometry control in the same way as a joystick signal.

11. Concrete pump according to any one of the preceding claims, wherein the physical model of the articulated arm used in the optimization problem takes account of a deformation of the articulated arm as a result of its own weight and/or of the weight of the concrete that is being conveyed.

12. Concrete pump according to any one of the preceding claims, wherein the optimization problem minimizes the difference between the desired TCP movement and the TCP movement that results from the trajectory in a physical model of the articulated arm as a first objective function and a difference in a configuration of the articulated arm from a desired configuration as a second objective function.

13. Concrete pump according to any one of the preceding claims, wherein the geometry control comprises a numerical solver which solves the optimization problem again in each time step, and/or wherein the optimization problem is formulated as a quadratic optimization problem, wherein speeds perpendicular to a direction of the desired TCP speed are preferably weighted more heavily in the optimization problem than speeds in the direction of the desired TCP speed.

14. Method for controlling a concrete pump according to any one of the preceding claims, wherein the articulated arm control is used.

## Revendications

1. Pompe à béton, en particulier pompe à béton automatique, comprenant un bras articulé le long duquel est guidé une conduite de transport pour le béton et comprenant une commande de bras articulé pour le bras articulé de la pompe à béton, le bras articulé présentant un support rotatif (3) pouvant tourner autour d'un axe vertical et au moins deux segments (4-7) pouvant pivoter autour d'axes horizontaux au moyen d'articulations (B-E), le support rotatif (3) pouvant être déplacé autour de l'axe vertical (A) par l'intermédiaire d'un actionneur et les segments (4-7) pouvant pivoter autour des axes horizontaux par l'intermédiaire d'actionneurs (14-17), des capteurs (18-21) étant de préférence prévus pour déterminer l'angle de rotation du support rotatif (3) et pour déterminer l'angle d'articulation des articulations (B-E),

la commande de bras articulé servant à commander les actionneurs (14-17) et comprenant une commande géométrique, qui, à partir de valeurs d'entrée pour un mouvement TCP de consigne, génère une trajectoire avec des valeurs de consigne pour le mouvement du support rotatif (3) et/ou des articulations (B-E), la commande géométrique déterminant la trajectoire en résolvant un problème d'optimisation, le problème d'optimisation minimisant, en tant que fonction cible, un écart entre le mouvement TCP de consigne et un mouvement TCP résultant de la trajectoire dans un modèle physique du bras articulé,
**caractérisée en ce que**
les restrictions de l'hydraulique et/ou de l'espace de travail sont incluses dans l'optimisation en tant que condition secondaire.

2. Pompe à béton selon la revendication 1, le débit volumique maximal disponible et/ou la puissance maximale disponible de l'alimentation hydraulique étant inclus dans l'optimisation en tant que condition secondaire.

3. Pompe à béton selon la revendication 1 ou 2, la commande géométrique comprenant une fonction d'évitement des collisions du bras articulé avec des contours gênants, les restrictions de l'espace de travail formées par les contours gênants étant incluses dans l'optimisation en tant que condition secondaire.

4. Pompe á béton selon la revendication 3, la fonction d'évitement des collisions du bras articulé avec des contours gênants limitant la vitesse d'approche du bras articulé vers un contour gênant à une valeur qui permet un freinage avant d'atteindre le contour gênant.

5. Pompe à béton selon la revendication 3 ou 4, les contours gênants pouvant être entrés dans la commande de bras articulé en tant que murs et/ou plafonds virtuels, et/ou une reproduction virtuelle des obstacles étant effectuée par l'intermédiaire d'une interface utilisateur de préférence graphique, par exemple en entrant une hauteur de plafond et une distance par rapport au bâtiment, et/ou les contours gênants peuvent être entrés par un procédé d'apprentissage, en particulier par le fait qu'un utilisateur définit une position maximale en approchant de la position, et/ou une interface étant prévue pour une modélisation des données de l'ouvrage, par l'intermédiaire de laquelle la position de contours gênants peut être introduite dans la commande à partir d'un modèle virtuel du bâtiment et/ou du chantier, une localisation de la pompe à béton s'effectuant de préférence par l'intermédiaire d'une détection de position par satellite, et/ou une détection des contours gênants s'effectuant par l'intermédiaire d'un système de détection de distance sur le mât de distribution, en particulier d'un système de détection de distance optique, mécanique, électromagnétique et/ou acoustique.

6. Pompe à béton selon l'une quelconque des revendications 3 à 5, la fonction d'évitement des collisions permettant un déplacement parallèlement à un contour gênant à pleine vitesse.

7. Pompe à béton selon l'une quelconque des revendications précédentes, la commande géométrique comprenant une fonction de stabilité qui détermine la position du centre de gravité de la pompe à béton, l'exigence que le centre de gravité de la pompe à béton se trouve dans une zone sûre étant incluse dans l'optimisation en tant que condition secondaire.

8. Pompe à béton selon l'une quelconque des revendications précédentes, les restrictions de collision propres pour éviter des collisions des segments (4-7) entre eux et/ou avec d'autres éléments de la pompe à béton étant incluses dans l'optimisation en tant que condition secondaire.

9. Pompe à béton selon l'une quelconque des revendications précédentes, comprenant un module de planification de trajectoire pour la réalisation automatique d'un mouvement du bras articulé et/ou du TCP, une valeur de consigne générée par le module de planification de trajectoire étant incluse comme entrée dans la commande géométrique.

10. Pompe à béton selon la revendication 9, le module de planification de trajectoire décrivant de manière simplifiée ou ne tenant pas compte de restrictions de l'espace de travail par rapport au problème d'optimisation et/ou une valeur de consigne générée par le module de planification de trajectoire étant incluse comme entrée dans la commande géométrique de la même manière qu'un signal de levier manuel.

11. Pompe à béton selon l'une quelconque des revendications précédentes, le modèle physique du bras articulé utilisé dans le problème d'optimisation tenant compte d'une déformation du bras articulé due à son propre poids et/ou au poids du béton transporté.

12. Pompe à béton selon l'une quelconque des revendications précédentes, le problème d'optimisation minimisant l'écart entre le mouvement TCP de consigne et le mouvement TCP résultant de la trajectoire dans un modèle physique du bras articulé en tant que première fonction cible et un écart d'une configuration du bras articulé par rapport à une configuration de consigne en tant que deuxième fonction cible.

13. Pompe à béton selon l'une quelconque des revendications précédentes, la commande géométrique comprenant un solveur numérique qui résout de nouveau le problème d'optimisation à chaque pas de temps et/ou le problème d'optimisation étant formulé comme un problème d'optimisation quadratique, les vitesses perpendiculaires à une direction de la vitesse TCP de consigne étant de préférence plus fortement pondérées dans le problème d'optimisation que les vitesses dans la direction de la vitesse TCP de consigne.

14. Procédé de commande d'une pompe à béton selon l'une quelconque des revendications précédentes, une commande de bras articulé étant utilisée.

Fig. 1

HAND-
HEBEL →

GEOMTRIE-
STEUERUNG

POSITION
VERTEILERMAST →

→ $\tilde{\theta}, \dot{\tilde{\theta}}$

Fig. 2

Fig. 3

$$\tilde{\theta}, \dot{\tilde{\theta}}$$

GEOMTRIE-STEUERUNG

BAHNPLANUNGS-MODUL

POSITION VERTEILERMAST

Fig. 4

BETON-FÖRDERUNG

STÖRGRÖSSE

MESS-WERTE

VERTEILER-MAST

STELL-GRÖSSEN

SCHWINGUNGSDÄMPFUNG

STÖRGRÖSSEN-AUFSCHALTUNG

VORSTEUERUNG

REGELUNG

BEOBACHTER

GEOMETRIE-STEUERUNG

HAND-HEBEL

Fig. 5

$\theta_4$

$\theta_5$

$\delta_4$

$\theta_3$

$\delta_3$

STARR

$\delta_2$

$\theta_2$

$\delta_5$

ELASTISCH

$y_\mathrm{I}$

$\delta_1$

$\theta_1$   $x_\mathrm{I}$

o AKTIVES GELENK $\theta_I$

∘ ELASTISCHES GELENK $\delta_I$

Fig. 6

Fig. 7

Fig. 8

Fig. 9

Fig. 10

Fig. 11

Fig. 12

BOGEN

M-FALTUNG

ZWEITES SEGMENT
SENKRECHT

LETZTES SEGMENT
SENKRECHT

Fig. 13

Fig. 14

Fig. 15

EP 3 705 663 B2

Fig. 16

$y_i$  $x_i$  $p_{si}$  $v_s$

$p_s$  $x_I$  $y_I$

● LOKALER SCHWERPUNKT
⊕ GESAMTSCHWERPUNKT

Fig. 17

Fig. 18

Fig. 19

Fig. 20

Fig. 21

Fig. 22

Fig. 23

Fig. 24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0686224 B2
- EP 1337727 B1
- DE 19503895 A1
- EP 0715673 B2
- WO 2015109975 A1
- WO 2015109976 A1
- WO 2017174714 A1
- WO 2013007121 A1

- WO 2013007039 A1
- WO 2015101088 A1
- EP 2813643 B1
- DE 102016125145 A1
- DE 102006007623 A1
- DE 102018109088 A1
- DE 102018109057 A1
- DE 102018109098 A1

**In der Beschreibung aufgeführte Nicht-Patentliteratur**

- **K. L. KNIERIM** ; **O. SAWODNY**. Tool-Center-Point control of the KAI manipulator using constrained QP optimization. *Mechatronics*, 2015, vol. 30, 85-93
- Der KAI-Manipulator Modellierung, Identifikation und Regelung eines hydraulisch aktuierten Großraummanipulators zur Räumung von Sprengfallen. **K. L. KNIERIM**. Diss. Institut für Systemdynamik der Universität, 2015
- **ANGELIKA HÖFER**. Steuerung der Konfiguration eines redundanten Manipulators. Vieweg, 1992
- **RICHARD COLBAUGH** ; **HOMAYOUN SERAJI** ; **KL GLASS**. Obstacle avoidance for redun- dant robots using configuration control. *Journal of Field Robotics*, 1989, vol. 6 (6), 721-744

- **MATHIAS NÄTHER et al.** Beton 3D-Druck - Machbarkeitsuntersuchungen zur kontinuierlichen und schalungsfreien Bauverfahren durch 3D-Formung von Frischbeton. Technische Universität Dresden, 31 December 2017
- A new real-time iteration method based on geomerty for inverse kinematics of truck mounted concrete pump. **CHEN et al.** 2013 International Conference on Mechatronics, Robotics and Automation, Guanngzhou, China, Applied mechancis and materials. trans tech publications ltd, 01 January 2013, vol. 273-275, 373-375, 2109-2113
- Ein Beitrag zur Entwicklung von Assistenzsystemen für serielle und parallele Roboter am Beispiel von Autobetonpumpen und seilbasierten Regalbedien-geräten. **WILDAN LALO**. Dissertation. Unisversität Duisburg-Essen, 01 January 2014